# EUROPÄISCHE PATENTSCHRIFT

(11) **EP 4 073 327 B1**
(45) Veröffentlichungstag und Bekanntmachung des Hinweises auf die Patenterteilung: **22.01.2025**
(21) Anmeldenummer: 20824908.6
(22) Anmeldetag: 09.12.2020
(51) Int. Cl.: E04D 13/00, G08B 21/20, G01M 3/16

(54) **ERKENNEN UND ORTEN VON FEUCHTIGKEIT UNTER DACHEINDECKUNGEN**
DETECTION AND LOCATION OF MOISTURE UNDER ROOFTOPS
DÉTECTION ET EMPLACEMENT DE L'HUMIDITÉ SOUS LES TOITS

(30) Priorität: 13.12.2019 DE 102019134398
(43) Veröffentlichungstag der Anmeldung: 19.10.2022
(73) Patentinhaber: bygg AI GmbH, 41352 Korschenbroich (DE)
(72) Erfinder: MOLL, Felix, 41352 Korschenbroich (DE); HÜBGENS, Wolfgang, 41352 Korschenbroich (DE)
(74) Vertreter: Cohausz & Florack
(86) Internationale Anmeldenummer: PCT/EP2020/085384
(87) Internationale Veröffentlichungsnummer: WO 2021/116233

(56) Entgegenhaltungen:
- EP-B1- 2 458 106
- WO-A1-2019/046961
- DE-A1- 4 239 495
- JP-A- S54 133 196
- US-A1- 2009 173 143

## Beschreibung

### Gebiet der Erfindung

Die Erfindung betrifft Vorrichtungen sowie Verfahren zum Erkennen und Orten von Leckagen in einem Dach bzw. einer Dacheindeckung. Sie kann ebenso zur Detektion und Lokalisation von Leckagen bzw. Feuchteansammlungen in anderen Teilen eines Gebäudes oder einer Gebäudestruktur genutzt werden.

Gebäude können durch eindringendes Wasser bzw. Feuchtigkeit schwer beschädigt werden. Dies trifft insbesondere auf Hochwasserschäden zu, umfasst jedoch auch kleinere Wassereinbrüche bzw. Feuchtigkeitsansammlungen z.B. durch beschädigte Dacheindeckungen, defekte oder unsachgemäß installierte Wasserleitungen (z.B. nicht-isolierte Kaltwasserleitungen). Derartige Wassereinbrüche bzw. Feuchteansammlungen sind in der Regel unproblematisch, wenn sie rechtzeitig erkannt und gestoppt werden können. Sie können jedoch auch ein immenses Schadenspotential entwickeln, wenn sie unbemerkt bleiben und über einen längeren Zeitraum auf die Substanz eines Gebäudes einwirken können. Die Substanz bzw. die der Feuchtigkeit ausgesetzten Gebäudeteile werden in vielen Fällen durch den Einfluss der Feuchtigkeit marode. Feuchtigkeit bzw. eindringendes Wasser löst damit in vielen Fällen Folgeschäden aus, die teure Reparatur-, Instandhaltungs- bzw. Sanierungsmaßnahmen nach sich ziehen, oder sogar zum Kollaps der entsprechenden Strukturen und Konstruktionen führen können.

Kleinere Wassereinbrüche bleiben meist für einen längeren Zeitraum unbemerkt, da sie oft nur schwer zu erkennen und damit auch zu lokalisieren sind. Das liegt zum einen daran, dass sich Wasser bzw. Feuchtigkeit oft unbemerkt entlang wasserführender Schichten, Grenz- oder Oberflächen in der Substanz eines Gebäudes ausbreiten kann. Es kann z.B. entlang von Leitungen, feuchteführender Schichten wie Isolierungen bzw. Dampfsperren oder anderer Grenz- bzw. Oberflächen weite Strecken zurücklegen, bevor es durch z.B. Tröpfchenbildung, feuchte Flecken, Putzablösungen, Schimmelbildung und/oder Fäulnis in Erscheinung tritt.

Fast alle Teile eines Gebäudes können betroffen sein. Dazu gehören Betonwannen, Mauerwerke, Fassadenbekleidungen und Dächer. Letztere umfassen sowohl Flach- wie auch Schräg- bzw. Steildächer.

Dabei sind Leckagen bzw. Feuchteansammlungen in Steildächer besonders problematisch, da Steildächer oft nur von weitem einsehbar und für Hauseigentümer und Mieter in vielen Fällen unzugänglich sind. Zudem kann bei Steildächern, die z.B. im Rahmen einer energetischen Gebäudesanierung gedämmt wurden, Feuchtigkeit durch eine beschädigte Dacheindeckung zwischen die Eindeckung und die Wärmedämmung eindringen und dort auf die Substanz des Daches bzw. der Dämmung einwirken. Durch die Dacheindeckung sowie die Dämmschicht ist die Feuchtigkeit bzw. deren Wirkung auf die Substanz des Daches von zwei Seiten umschlossen bzw. verdeckt. Das Eindringen und Wirken der Feuchtigkeit bleibt damit in vielen Fällen für einen langen Zeitraum unentdeckt und unbemerkt.

Beschädigungen einer Dacheindeckung entstehen durch Verschleiß, Pflanzenbewuchs, Dachbegrünungen, Schädlinge, menschliche Einwirkungen z.B. bei Begehungen der Dacheindeckung oder Sturmschäden, wobei Steildächer gerade für letztere besonders anfällig sind. Beschädigungen treten dabei gehäuft an neuralgischen Punkten wie z.B. den Dachfirsten, Dachfenstern oder -gauben, Kaminen, Antennenanlagen oder anderen Dachaufbauten wie solarthermische oder Photovoltaikanlagen auf. Beschädigungen treten damit an Stellen auf, an denen die Dacheindeckung ohnehin durchbrochen bzw. geschwächt ist. Für nahezu jedes Dach sind diese Stellen durch die Form und Ausrichtung des Daches, die Art der Bebauung des Daches und hinzugefügter Ausbaustufen sowie ggf. bereits vorhandener Schadstellen unterschiedlich. Damit stellt das Erkennen und Orten von Schadstellen eines Daches ein Problem dar, das für jedes Dach in der Regel individuell gelöst werden muss. Ähnliches gilt für andere Gebäudeteile bzw. -strukturen.

### Stand der Technik

Dementsprechend finden sich im Stand der Technik eine Reihe von Kontrollsystemen für Gebäude bzw. Gebäudeteile wie z.B. Dächer und Feuchtraumbereiche, mit denen eindringende Feuchtigkeit frühzeitig erkannt werden kann. Diese Feuchteüberwachungssysteme bestehen z.B. aus oberhalb der Unterdeckbahn oder unter den Dämmelementen angebrachten Sensorbändern, einem Netz oder eine Kontaktlage aus Messelektroden oder einzelnen Messvorrichtungen, welche auf Feuchtigkeit reagieren, sowie den dazu notwendigen Komponenten zur Stromversorgung sowie Ortung, Weiterleitung, Zwischenspeicherung, Überwachung und Auswertung der Messwerte. Bei diesen Feuchteüberwachungssystemen, werden in vielen Fällen elektronische Leiterbahnen eingesetzt, die über zwei Leitungen verfügen. Dabei ist es in der Regel nötig, eine große Menge von Sensorbändern und Verbindungsleitungen bereitzustellen sowie die elektronische Anbindung von einer Elektrofachkraft durchführen zu lassen. Des Weiteren können diese Verfahren in der Regel nicht autark ohne Stromversorgung betrieben werden.

Der Stand der Technik bietet eine Reihe weiterer Möglichkeiten, um das Eindringen von Feuchtigkeit in die Substanz eines Daches bzw. eines Gebäudes frühzeitig zu erkennen. In der Patentschrift US 10,078,030 B2 wird z.B. vorgeschlagen, ein Netzwerk aus paarweise angeordneten elektrischen Leitern bzw. Leiterbahnen zu verwenden, die nicht isoliert sind. Sie sind so angeordnet, dass sie ohne den Einfluss von Feuchtigkeit nicht in elektrischem Kontakt zueinanderstehen. Wird der elektrische Kontakt zwischen zwei Leitern durch eindringende Feuchtigkeit bzw. eindringendes Wasser hergestellt, d.h. werden zwei Leiter durch eindringende Feuchtigkeit bzw. eindringendes Wasser kurzgeschlossen, wird dies von einer Mess- bzw. Ausleseeinheit erfasst, die mit den Leitern bzw. Leiterbahnen verbunden ist. Die Einheit bestimmt zu diesem Zweck die Kapazität eines Leiters bzw. die Änderung dieser Kapazität, die durch den Kontakt mit der eindringenden Feuchtigkeit bzw. dem Kurzschließen mit dem anderen Leiter entsteht. Die eindringende Feuchtigkeit wird demnach mithilfe einer Messung einer elektrischen Eigenschaft der Leiter bzw. ihren Leitungseigenschaften erkannt und detektiert, insbesondere anhand einer Änderung der Eigenschaften, die durch die eindringende Feuchtigkeit hervorgerufen wird.

Die gitterartige Anordnung der Leiter kann darüber hinaus genutzt werden, um die eindringende Feuchtigkeit zu lokalisieren. Die Position eines kurzgeschlossenen Leiterpaares entspricht dabei der Stelle, an der zu vermuten ist, dass in deren Nähe Feuchtigkeit bzw. Wasser eindringt.

Ähnliche Strukturen werden auch in den Patentschriften US 7,652,481 B2 und EP 3 168 589 B1 sowie den Offenlegungsschriften US 5,081,422 A, EP 2 339 314 A1 und US 12/0313652 A1 beschrieben. Die Montage bzw. Installation derartiger flächendeckender Systeme ist in der Regel jedoch sehr aufwendig, mit einem hohen Materialaufwand verbunden und sehr teuer, insbesondere wenn große Flächen bzw. Gebäudeteile überwacht bzw. mit derartigen Systemen nachgerüstet werden. Gerade bei geneigten Dächern erfordern derartige Verfahren zur Durchführung einer Leckageortung aufwendige Verlegetechniken und - zur Nachrüstung von Bestandsgebäuden - eine umfangreiche Entfernung der Dacheindeckung in den vorgesehenen Bereichen oder auch der gesamten Dachoberfläche.

Ähnliches gilt für alle flächendeckenden Sensorstrukturen. Dazu gehören auch parallel verlaufende Leiterbahnstrukturen wie z.B. in der deutschen Patentschrift DE 42 39 495 A1, parallel verlaufende Glasfaserstrukturen wie z.B. in der Offenlegungsschrift US 2015/0259923 A1 oder auf parallelen Bahnen angeordnete Feuchtigkeitssensoren wie z.B. in der deutschen Gebrauchsmusterschrift DE 20 2018 005 538 U1.

Kann sich die eindringende Feuchtigkeit leicht ausbreiten, ist eine flächendeckende Überwachung nicht nur aufwendig und teuer. Sie ist zudem in vielen Fällen überflüssig. Dringt z.B. Feuchtigkeit unter die Dacheindeckung eines Steildaches ein und kann entlang der Unterspannbahn nach unten abfließen, würden bei einer Überwachung z.B. durch die in der US 10,078,030 B2 vorgeschlagene Vorrichtung eine Vielzahl von Leiterbahnen kurzgeschlossen, wohingegen das Kurzschließen zweier Leiterbahnen völlig ausreichend gewesen wäre, um das Eindringen von Feuchtigkeit zu erkennen. Darüber hinaus wird die Information über die Höhe des Lecks bzw. der Leckage nicht benötigt, da eine beschädigte Dacheindeckung ohnehin von der Traufe her aufgedeckt werden muss, damit sie repariert werden kann. Konsequenterweise wäre zur Feuchteüberwachung solcher Steildächer bzw. Gebäudeteile nur ein Leiterpaar nötig, das idealerweise horizontal entlang der Traufe bzw. in dessen Nähe verläuft.

Dementsprechend wird in der Patentanmeldung US 5,159,276 A der Einsatz eines einzelnen Feuchtemelderkabels beschrieben, um das Eindringen von Feuchtigkeit in eine Gebäudestruktur wie z.B. einen Fußboden zu detektieren. Dazu wird die Impedanz bzw. der Wechselstromwiderstand des Kabels bestimmt und Feuchtigkeit durch eine Änderung der Impedanz bzw. des Wechselstromwiderstands des Kabels erkannt. Die Doppelleiterstrukturen der US 5,081,422 A lassen sich ebenfalls in dieser Weise nutzen. Mit derartigen Konstruktionen kann allerdings nur festgestellt werden, dass Feuchtigkeit in die mit dem Kabel bzw. der Doppelleiterstruktur ausgerüsteten Gebäudeteilen eindringt. Es kann nicht mehr festgestellt werden, an welcher Stelle die Feuchtigkeit eindringt bzw. wo sich das entsprechende Leck bzw. die entsprechende Schadstelle befindet. Im Schadensfall muss deshalb die Leckage bzw. die Feuchtigkeitsansammlung mit anderen, zusätzlichen Methoden gesucht bzw. lokalisiert werden. Dies kann v.a. bei größeren Gebäudestrukturen unter Umständen viel Zeit in Anspruch nehmen, aufwendige Maßnahmen erfordern und unnötige Folgeschäden verursachen.

Um dieses Problem zu lösen, wird z.B. in der Offenlegungsschrift US 2007/0046481 A1 eine Anordnung von vier parallel angeordneten Leiterbahnen vorgeschlagen, die zu einer Widerstandsbrücke verschaltet werden. Die Leiterbahnen werden mit Spannungspulsen beaufschlagt, die durch die Leiterbahnen propagieren und am Ende der Leiterbahnen reflektiert werden. Die reflektierten Pulse werden registriert und die Zeit zwischen dem Aussenden und dem Registrieren der Pulse genutzt, um die Länge der Leiterbahnen zu bestimmen. Die Messung wird nach Montage bzw. Installation der Leiterbahnen erstmalig durchgeführt, um die Länge der Leiterbahnen ohne den Einfluss von Feuchtigkeit zu bestimmen. Dringt nun Feuchtigkeit ein und benetzt die Leiterbahnen an einer Stelle, werden die Spannungspulse oder zumindest ein Teil der Pulse an dieser Stelle vorzeitig reflektiert. Dies führt zu einer kürzeren Laufzeit der Spannungspulse oder zumindest eines Teils der Spannungspulse, die von einer Mess- bzw. Ausleseeinheit registriert wird. Die kürzere Laufzeit lässt nicht nur Schlüsse über das Eindringen von Feuchtigkeit zu, sondern gibt auch Aufschluss darüber, wo sich das Leck bzw. die Schadstelle befindet. Das Verfahren erfordert jedoch eine sachgemäße Montage bzw. Installation z.B. durch eine Elektrofachkraft, aufwendige Messapparaturen und -verfahren sowie eine genaue Justage bzw. Kalibrierung der Vorrichtung. Zudem ist das Verfahren sehr empfindlich und fehleranfällig, so dass Leckagen bzw. Feuchtigkeitsansammlungen unter Umständen nicht oder nur sehr ungenau lokalisiert werden können oder, z.B. aufgrund einer mangelnden Reflektivität der Stelle, an der sich Feuchtigkeit an oder auf den Leitern ansammelt, überhaupt nicht erkannt werden.

Eine weniger empfindliche und daher zuverlässigere Methode zur Lokalisation von Feuchtigkeit, die in Wände, Stockwerke oder Bodenstrukturen eindringt, ist in der Offenlegungsschrift US 5,081,422 A beschrieben. Die Methode basiert auf der Montage bzw. Installation einer Vielzahl von Leitern und Verbindungsleitungen, wobei ein Basisleiter entlang der gesamten zu überwachenden Gebäudestruktur verlegt wird. Zusätzlich werden weitere Leiter verlegt, die kürzer als der Basisleiter sind (vgl. z.B. Figur 6 der US 5,081,422 A). Die Leiter werden derart angeordnet, dass sie entlang eines bestimmten Abschnitts der Gebäudestruktur parallel zum Basisleiter verlaufen. Jeder dieser Leiter wird mit einer Mess- bzw. Ausleseeinheit verbunden. Die Mess- bzw. Ausleseeinheit beaufschlagt die Leiter nacheinander mit einer Spannung, um zu prüfen, ob sich zwischen dem mit Spannung beaufschlagten Leiter und dem Basisleiter Feuchtigkeit befindet bzw. angesammelt hat. Wird auf diese Weise Feuchtigkeit gemessen, kann sie anhand der Information über den Abschnitt, den der mit Spannung beaufschlagte kürzere Leiter abdeckt, lokalisiert werden. Die Montage bzw. Installation derartiger Strukturen erfordert für jeden Leiter einen zusätzlichen Anschluss an die Mess- bzw. Ausleseeinheit. Das Verlegen dieser zusätzlichen Anschlüsse oder Verbindungsleitungen ist in der Regel jedoch aufwendig und teuer. Zudem kann jeweils nur ein Abschnitt und nicht die gesamte Struktur überwacht werden. Die Länge der Leiter bestimmt darüber hinaus, welche und wie viele Abschnitte überwacht werden können. Eine Anpassung der Abschnitte an die spezifischen Eigenschaften der Gebäudestruktur bzw. an eine von der Struktur vorgegebene Segmentierung ist nicht möglich oder zumindest nur mit zusätzlichem Aufwand zu realisieren.

Ähnliche Strukturen, bei denen Leiter mit unterschiedlichen Längen zum Einsatz kommen, finden sich z.B. in der deutschen Patentanmeldung DE 42 39 495 A1 oder der europäischen Patentschrift EP 2 458 106 B1. Zum Erkennen und Orten von Leckagen bzw. Feuchtigkeitsansammlungen werden in diesen Schriften Leiter mit unterschiedlichen Längen vorgeschlagen, die jeweils an eine Mess- bzw. Ausleseeinheit angeschlossen werden müssen. Das Problem der separaten Anschlüsse wird dabei in der EP 2 458 106 B1 dadurch gelöst, dass die Leiter auf einem Trägerband angeordnet werden und von einer Seite kontaktiert werden können. Im Gegensatz zu US 10,078,030 B2 wird Feuchtigkeit mithilfe einer Widerstandsmessung durchgeführt, d.h. der Widerstand zwischen zwei Leitern bzw. Leiterbahnen wird bestimmt und Feuchtigkeit erkannt, sobald sich der Widerstand in signifikanter Weise ändert. Die Länge und Anordnung der Leiter bestimmen dabei weiterhin, welche und wie viele Abschnitte überwacht werden können. Eine Anpassung der Abschnitte an die spezifischen Eigenschaften der Gebäudestruktur bzw. an eine von der Struktur vorgegebene Segmentierung ist nicht möglich oder zumindest aufwendig. Sie kann zudem nur dadurch geändert werden, indem die Leiter neu verlegt werden. Dasselbe gilt für die in Figur 6 der US 5,081,422 A vorgeschlagene Lösung.

Ähnlich verhält es sich mit der Leiterstruktur, die in der WO 2019/046961 A1 beschrieben wird, um den Austritt organischer Flüssigkeiten oder Gase - z.B. aus einer Pipeline - zu detektieren. Dazu wird ein zweiadriger Leiter vorgeschlagen, der in periodischen Abständen unterbrochen ist. Die Stellen, an der der Leiter unterbrochen ist, sind mit einem leitfähigen Kunststoff verfüllt, der den elektrischen Kontakt zwischen den Teilstücken des unterbrochenen Leiters wiederherstellt. Der Kunststoff ist außerdem so beschaffen, dass er sich bei Kontakt mit organischen Flüssigkeiten oder Gasen auflöst. Dadurch wird der elektrische Kontakt zwischen zwei Teilstücken des Leiters wieder unterbrochen. Der Austritt organischer Flüssigkeiten bzw. Gase äußert sich somit in einem Anstieg des elektrischen Widerstands des Leiters. Eine Anpassung an spezifische Eigenschaften der zu überwachenden Gebäudestruktur ist damit jedoch ebenfalls nicht möglich. Zudem kann nur eine Leckage zuverlässig erkannt werden. Weitere Leckagen, die räumlich und/oder zeitlich aufeinanderfolgen, können nicht oder weit weniger zuverlässig erkannt werden. Ein weiterer Nachteil besteht darin, dass die Leiterstruktur sukzessive zerstört wird und/oder sich der Kunststoff mit der Zeit zersetzen kann, ohne dass eine Leckage tatsächlich aufgetreten wäre.

Ein weiterer Lösungsansatz findet sich in der Offenlegungsschrift US 2009/0173143 A1. Dort wird eine Anordnung parallel angeordneter Leiterbahnen beschrieben, die auf einem Trägerband angebracht und mit einer weiteren Schutzschicht bedeckt sind. Die Schutzschicht ist in periodischen Abständen unterbrochen. Feuchtigkeit, die die unterbrochenen Stellen benetzt, kann eine elektrische Verbindung zwischen den Leiterbahnen herstellen. Feuchtigkeit kann dann anhand dieser Verbindungen detektiert werden. Eine Anpassung an spezifische Gebäudestrukturen ist jedoch auch mit dieser Anordnung nicht möglich. Zudem kann Feuchtigkeit nur erkannt werden, wenn sie die Bereiche der Anordnung benetzt, an denen die Schutzschicht unterbrochen ist. Ist das nicht der Fall, wird eine Leckage ggf. nicht oder zu spät erkannt. Die Patentschrift WO 2019/046961 A1 ist für die beanspruchte Erfindung von Bedeutung; sie offenbart alle in der Präambel von Anspruch 1 genannten technischen Merkmale. ,

### Aufgabe

Aufgabe der Erfindung ist es, das Eindringen und Ansammeln von Feuchtigkeit bzw. Wasser in Dächern bzw. Gebäudestrukturen zuverlässig zu erkennen und zu verorten, den Montage-, Installations- und Materialaufwand für entsprechende Überwachungseinrichtungen zu reduzieren sowie eine individuelle Anpassung dieser Überwachungseinrichtungen an die Struktur eines Daches bzw. Gebäudeteils zu ermöglichen.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird eine Vorrichtung zum Detektieren und Lokalisieren von Feuchtigkeit auf einer feuchteführenden Fläche und/oder in einer feuchteführenden Schicht gemäß Anspruch 1 vorgeschlagen. Ein entsprechendes Detektionsverfahren ist in Anspruch 11 definiert.

Die feuchteführende Fläche kann z.B. die Unterspannbahn, die Dampfbremse bzw. Dampfsperre eines Schräg- oder Steildaches, die Oberfläche einer Gipskartonwand, der Estrich oder die Trittschalldämmung in einem Feuchtraum oder der Boden einer Betonwanne sein. Die feuchteführende Schicht kann der Putz an einer Wand oder der Zwischenraum in einer Trockenbauwand sein, in der z.B. Wasserleitungen geführt werden, oder eine wasserführende Schicht an der Belüftungsebene eines Flachdachs oder eine Fußbodenheizung darstellen.

Die Vorrichtung kann auf geneigten bzw. senkrechten Flächen und/oder Schichten an einem unteren Ende oder in dessen Nähe in horizontaler Lage verbaut bzw. montiert werden, so dass Feuchtigkeit bzw. Wasser auf der feuchteführenden Fläche und/oder Schicht in im Wesentlichen vertikalen Bahnen zur Vorrichtung laufen kann. Die Vorrichtung kann aber je nach Bedarf bzw. Anwendungsfall auch in anderer Weise montiert werden.

Die Position des mindestens einen Trennelements ist dabei durch den Aufbau der vorgeschlagenen Vorrichtung zunächst nicht vorgegeben. Erst bei der Montage bzw. Installation der Vorrichtung auf der feuchteführenden Fläche und/oder in der feuchteführenden Schicht wird das mindestens eine Trennelement am Trägerband positioniert und dort für das Durchtrennen einer vorgegebenen Leiterbahn oder mehrerer vorgegebener Leiterbahnen genutzt. Durch das Durchtrennen mindestens einer der Leiterbahnen entsteht eine Anordnung bzw. ein System aus unterschiedlich langen Leiterbahnen oder Teilstücken von Leiterbahnen. Die Länge der Leiterbahnen oder Teilstücke bzw. die Position des mindestens einen Trennelements oder der Trennelemente ermöglichen es, von der Vorrichtung erkannte Feuchtigkeit zu verorten bzw. zu lokalisieren. Das Auflösungsvermögen oder die Genauigkeit der Ortsangabe ist dabei durch die Anzahl der Leiterbahnen sowie der verwendeten Trennelemente und der Länge der Leiterbahnen bzw. der Teilstücke bestimmt.

Die durch die Vorrichtung zu überwachende Fläche und/oder Schicht kann demnach mithilfe des mindestens einen Trennelements in nahezu beliebig große Messfelder, Beobachtungsbereiche bzw. Segmente unterteilt werden. Einschränkungen in der Positionierung des mindestens einen Trennelements ergeben sich lediglich aus der Baugröße des mindestens einen Trennelements oder spezifischer Gegebenheiten der zu überwachenden Fläche bzw. des zu überwachenden Gebäudeteils. In der Regel stellt die Baugröße der Trennelemente jedoch kein Problem bei der Positionierung der Trennelemente dar. Die Trennelemente liegen typischerweise einige Zentimeter bis hin zu einigen Metern auseinander, d.h. der Abstand zweiter benachbarter Trennelemente liegt z.B. im Bereich von 1 cm bis 50 m, 5 cm bis 20 m, 10 cm bis 10 m oder 15 cm bis 5m.

Die Vorrichtung kann das Auftreten von Feuchtigkeit in einem der Messfelder, Beobachtungsbereiche bzw. Segmente erkennen. Die Größe und Position der Messfelder, Beobachtungsbereiche bzw. der Segmente geben dabei Aufschluss über die Position des Lecks bzw. der Feuchtigkeitsansammlung, von dem bzw. der die detektierte Feuchtigkeit ausging.

Die Messfelder, Beobachtungsbereiche bzw. Segmente sind durch die Teilstücke der mindestens einen durchtrennten Leiterbahn bzw. ihre Länge bzw. die Position der entsprechenden Trennstelle oder der Positionen der entsprechenden Trennstellen bestimmt. Dabei kann sich ein Teilstück einer der Leiterbahnen über mehrere Messfelder, Beobachtungsbereiche bzw. Segmente erstrecken. Breitet sich Feuchtigkeit in einem der Messfelder, Beobachtungsbereiche bzw. Segmente aus, kann entweder nur eine der Leiterbahnen oder ein Teilstück einer der Leiterbahnen oder mehr als eine Leiterbahn bzw. mehr als ein Teilstück einer der Leiterbahnen mit der sich in einem Messfeld, Beobachtungsbereich bzw. Segment ausbreitenden Feuchtigkeit bzw. Wasser in Kontakt kommen bzw. sich eine elektrische Eigenschaft der Leiterbahnen oder Teilstücke der Leiterbahnen aufgrund der sich ausbreitenden Feuchtigkeit bzw. des sich ausbreitenden Wassers ändern. Das gilt insbesondere für die Leiterbahnen bzw. Teilstücke von Leiterbahnen, die sich in der Nähe der sich ausbreitenden Feuchtigkeit bzw. des sich ausbreitenden Wassers befinden. Dabei können die Trennelemente in der Regel so gesetzt werden, dass die Leiterbahnen bzw. Teilstücke von Leiterbahnen, die bei einer Leckage in einem Messfeld, Beobachtungsbereich bzw. Segment mit Feuchtigkeit in Kontakt kommen bzw. deren elektrische Eigenschaft oder Eigenschaften sich ändern, eindeutig einem Messfeld, Beobachtungsbereich bzw. Segment zugeordnet werden können. Dazu können die Trennelemente z.B. an oder in der Nähe von Dachsparren eines zu überwachenden Daches positioniert werden. Es kann aber auch sein, dass sich Messfelder, Beobachtungsbereiche bzw. Segmente überlappen, v.a. da die Ausbreitungsrichtung der Feuchtigkeit bzw. von Wasser natürlichen Schwankungen und Bifurkation unterliegt, d.h. z.B. dass sich ein Rinnsal in zwei oder mehr Rinnsale aufteilen bzw. Mäander bilden kann, die sich unterschiedlich ausbreiten. Wird demnach in zwei benachbarten Messbereichen Feuchtigkeit detektiert, ist zu vermuten, dass sich das Leck in dem Bereich oder in der Nähe des Bereichs befindet, in dem sich die Messfelder berühren oder überlappen. Wird dagegen in nur einem Messfeld, Beobachtungsbereich bzw. Segment Feuchtigkeit erkannt, kann sich das Leck aus den soeben genannten Gründen auch in einem benachbarten Messfeld, Beobachtungsbereich bzw. Segment befinden. Derartige Fehlortungen können jedoch durch eine geeignete Platzierung der Trennelemente (z.B. an den Dachsparren) in der Regel vermieden werden.

Die Messfelder, Beobachtungsbereiche bzw. Segmente stellen Teile oder Teilbereiche der feuchteführenden Fläche bzw. Schicht dar. Die Größe und Ausdehnung eines Messfelds, Beobachtungsbereichs bzw. Segments entspricht dem Einzugsbereich der zugeordneten Leiterbahnen bzw. Teilstücke von Leiterbahnen. Der Einzugsbereich ist unter anderem durch die Ausbreitungseigenschaften der Feuchtigkeit auf der feuchteführenden Fläche oder in der feuchteführenden Schicht bestimmt. Tritt ein Leck innerhalb des Einzugsbereichs auf, kann die durch das Leck eindringende Feuchtigkeit bzw. das durch das Leck eindringende Wasser die dem Messfeld, Beobachtungsbereich bzw. Segment zugeordneten Leiterbahnen bzw. Teilstücke von Leiterbahnen benetzen oder deren elektrische Eigenschaft oder Eigenschaften ändern. Liegt das Leck außerhalb des Einzugsgebiets, kann die eindringende Feuchtigkeit bzw. das eindringende Wasser nur einen Teil der dem Messfeld, Beobachtungsbereich bzw. Segment zugeordneten Leiterbahnen bzw. Teilstücke der Leiterbahnen oder keine der dem Messfeld, Beobachtungsbereich bzw. Segment zugeordneten Leiterbahnen bzw. Teilstücke der Leiterbahnen benetzen oder deren elektrische Eigenschaft oder Eigenschaften ändern. Wie bereits beschrieben können durch natürliche Schwankungen bzw. Bifurkation die Einzugsbereiche einer Zuordnung von Leiterbahnen bzw. Teilstücke von Leiterbahnen variieren und überlappen.

Die Messfelder bzw. Segmente können an die zu überwachende Fläche bzw. den zu überwachenden Gebäudeteil angepasst werden. Wird eine derartige Vorrichtung z.B. auf der Unterspannbahn eines Daches installiert, kann das Dach mithilfe des mindestens einen Trennelements in Messfelder unterteilt werden, die an die Position von Aufbauten wie z.B. Antennenanlagen, Kaminen, Dachfenstern, etc. individuell angepasst sind. Neben einer permanenten Dichtigkeitsprüfung und Leckageortung eignet sich die vorgeschlagene Vorrichtung damit zur Überwachung einzelner leckageanfälliger Bereiche der Dacheindeckung, wie z.B. einer Kamineinfassung, einer Gaube oder eines Dachfensters. Sie kann auch an durch die Konstruktion des Daches vorgegebene Einteilungen angepasst werden, die sich beispielsweise aus der Anordnung und Beschaffenheit der Dachsparren ergibt. Die Vorrichtung kann aber auch in anderen Gebäudeteilen zur Anwendung gebracht werden, z.B. unter dem Putz von Wänden oder in Trockenbauwände integriert werden. In diesen Fällen kann sie z.B. an den Wänden aufsteigende Feuchtigkeit erkennen. Sie kann auch unterhalb von Fußböden installiert bzw. auf einem Estrich oder in Betonwannen, um z.B. Feuchtigkeit zu erkennen, die in einem Raum oder eine Wanne eindringt oder sich in einem Raum oder einer Wanne ausbreitet.

Die Anpassung der Messfelder, Messbereiche oder Beobachtungsbereiche erfordert bei geeigneter Wahl der Position der Trennelemente und der mit den Trennelementen durchtrennten Leiterbahnen keine zusätzlichen Verbindungsleitungen. Die Vorrichtung ermöglicht zudem ein Feuchtemonitoring, das mithilfe einer einzelnen Messeinheit durchgeführt werden kann, das an einer vorgegebenen Position an dem Trägerband an die Leiterbahnen oder Teilstücke der Leiterbahnen angeschlossen wird. Es können aber auch mehrere Messeinheiten zum Einsatz gebracht werden, die entweder eigenständig betrieben werden können oder ihre Daten untereinander und/oder mit einer zentralen Einheit austauschen. Das Monitoring kann zudem so ausgeführt werden, dass alle Messfelder bzw. Messbereiche gleichzeitig überwacht werden.

Die feuchteführende Fläche und/oder Schicht muss nicht durchgängig sein. Sie kann von Strukturelementen (z.B. von Dachsparren) durchbrochen werden, die auf der feuchteführenden Fläche und/oder Schicht (z.B. einer Unterspannbahn eines Daches) angebracht werden. Die vorgeschlagene Vorrichtung kann in diesen Fällen über- oder unterhalb derartiger Strukturelemente geführt und angebracht werden, ohne die Leistungsfähigkeit der Vorrichtung wesentlich zu beeinflussen. Die vorgeschlagene Vorrichtung kann auch separate Flächen bzw. Schichten zu einer Fläche bzw. Schicht verbinden, die mithilfe der Vorrichtung oder eines Zusammenschlusses von Vorrichtungen überwacht werden kann, d.h. die feuchteführende Fläche und/oder Schicht kann sich aus einer Mehrzahl von feuchteführenden Flächen bzw. Schichten zusammensetzen.

Die Flächen bzw. Schichten müssen darüber hinaus nicht notwendigerweise plan oder eben sein. Sie können auch gebogen, gewölbt, eingedellt oder geknickt sein. Sie können wellen- und/oder hügelartige Strukturen aufweisen sowie vertikale Erhebungen (z.B. im Bereich von Dachsparren). Die Form der Flächen bzw. Schichten ist lediglich dadurch eingeschränkt, dass sich Feuchtigkeit bzw. Wasser in einer mehr oder weniger vorhersehbaren Art und Weise ausbreiten kann, so dass ein Auftreten von Feuchtigkeit am Rand der Fläche oder Schicht (z.B. an der Traufe) Rückschlüsse auf den Ursprung der sich ausbreitenden Feuchtigkeit bzw. des sich ausbreitenden Wassers zulässt.

Die Leiterbahnen können Bahnen aus einem elektrisch leitfähigen Material wie z.B. Kupfer oder Aluminium oder Streifen aus Metallfolien wie z.B. einer Kupfer- oder Aluminiumfolie sein. Sie können auch als Leiter oder Drähte ausgeführt sein. Sie können isoliert sein, d.h. mit einem elektrisch nicht leitenden Material zur elektrischen Isolation umgeben bzw. ummantelt sein. Feuchtigkeit bzw. die Präsenz von Wasser kann dabei mithilfe einer kapazitiven Eigenschaft der isolierten Leiterbahnen und/oder Teilstücke von isolierten Leiterbahnen nachgewiesen werden. Die Leiterbahnen können auch nicht isoliert sein. Ein Kontakt mit Feuchtigkeit bzw. Wasser führt dabei ebenfalls zu einer messbaren Änderung der elektrischen Eigenschaft oder Eigenschaften der Leiterbahnen oder der Teilstücke der Leiterbahnen, insbesondere kann ein Kurzschluss bzw. eine elektrische Verbindung zwischen zwei Leiterbahnen und/oder Teilstücken von Leiterbahnen entstehen. Isolierte Leiterbahnen können auch nicht-isolierte Abschnitte aufweisen und umgekehrt.

Die zur Detektion von Feuchtigkeit bzw. Wasser genutzte elektrische Eigenschaft kann auch die Laufzeit eines Strom- oder Spannungspulses durch eine der nicht-isolierten und/oder isolierten Leiterbahnen oder ein Teilstück einer der nicht-isolierten und/oder isolierten Leiterbahnen sein oder die Verzerrung bzw. Aufteilung des Pulses, wenn er z.B. aufgrund des Kontakts einer Leiterbahn oder eines Teilstücks einer Leiterbahn mit Feuchtigkeit bzw. Wasser oder dessen Präsenz zusätzlich verzerrt bzw. reflektiert wird. Dies kann z.B. im Rahmen einer TDR- (Time-Domain-Reflectometry) oder FDR-Analyse (Frequency-Domain-Reflectometry) erfolgen. Mithilfe einer Laufzeit-, TDR- bzw. FDR-Analyse kann Feuchtigkeit bzw. Wasser auch innerhalb eines von den Trennelementen definierten Messfelds, Messbereichs oder Beobachtungsbereichs verortet werden, d.h. das Auflösungsvermögen der Vorrichtung kann durch diese Methoden weiter verbessert werden.

Die Standardbreite der Leiterbahnen liegt zwischen 1 - 3 mm. Die Leiterbahnen können auch eine Breite im Bereich von 0,2 - 5 mm oder 0,1 mm - 1 cm oder 0,1 mm - 10 cm aufweisen.

Die Anzahl der Leiterbahnen einer erfindungsgemäßen Vorrichtung kann unterschiedlich sein und je nach Anwendungsfall mehr oder weniger Leiterbahnen umfassen. Ein Trägerband kann z.B. 2, 4, 8, 10, 16, 32, 40 oder mehr Leiterbahnen umfassen. Es kann auch als mehradriges Flachleiterband aufgefasst werden.

Das Trägerband kann an die Länge der zu überwachenden Fläche bzw. feuchteführenden Schicht angepasst sein. Es kann z.B. als Meterware ausgeführt sein, die je nach Anwendungsfall entsprechend zugeschnitten werden kann. Es kann z.B. eine Standardlänge von 5 m, 10 m, 15 m, 20 m, 25 m oder 50 m sowie eine Standardbreite im Bereich zwischen 5 mm, 10 mm oder 20 mm bis zu 50 mm, 60 mm, 100 mm, 200 mm oder 500 mm haben. Die Standarddicke beträgt 0,3 - 0,6 mm. Das Band kann aber auch eine Dicke im Bereich von 0,1 mm bis 1 mm bzw. 0,1 mm bis 2 mm, 0,1 mm bis 3 mm oder 0,1 mm bis 1 cm aufweisen.

Das Trägerband ist in der Regel aus einem biegsamen Material gefertigt, um fluiddicht an eine feuchteführende Fläche angebracht und/oder in eine feuchteführende Schicht eingebracht werden zu können. Darüber hinaus besteht es in vielen Fällen aus einem reißfesten Material. Es kann ein (gewebeverstärktes oder gitterarmiertes UV-stabilisiertes) Polyethylen- bzw. PE-Band sein. Es kann andere Kunststoffe (wie z.B. Polypropylen oder Polyamid) und/oder Verbundmaterialien umfassen. Es kann darüber hinaus ein faser- bzw. gitterverstärktes Band sein bzw. eine faser- bzw. gitterverstärkte Folie umfassen.

Um Kurzschlüsse, die nicht durch Feuchtigkeit hervorgerufen werden, zu vermeiden, ist es notwendig, dass Leiterbahnen, die nicht isoliert sind, voneinander getrennt angeordnet sind, d.h. dass sie einen gewissen Abstand zueinander nicht unterschreiten. Sie stehen damit ohne den Einfluss von Feuchtigkeit im Wesentlichen nicht in einem elektrischen Kontakt zueinander. Der Abstand der nicht-isolierten Leiterbahnen liegt dabei idealerweise in der Größenordnung von wenigen Millimetern bis hin zu einigen Zentimetern. Der Abstand kann auch in Bereichen liegen, deren untere Grenze bei 0,1 mm, 0,2 mm, 0,5 mm oder 1 mm und deren obere Grenze bei 1 m, 50cm, 20 cm, 10 cm, 5 cm, 2 cm oder 1 cm liegen. Isolierte Leiterbahnen können in ähnlicher Weise angeordnet werden, obwohl sie aufgrund ihrer Isolierung auch näher an andere isolierte und/oder nicht-isolierte Leiterbahnen oder Teilstücke von Leiterbahnen herangeführt werden können.

Die Leiterbahnen sind nebeneinander angeordnet. Dies umfasst unter anderem eine parallele Anordnung der Leiterbahnen, zumindest innerhalb fertigungs- bzw. montagetechnischer Abweichungen. Eine parallele oder nahezu parallele Anordnung der Leiterbahnen ist jedoch nicht zwingend erforderlich. Sie erlaubt es in vielen Fällen lediglich Material zu sparen.

Die vorgeschlagene Vorrichtung kann nicht nur bei Neubauten verbaut, sondern auch bei Bestandsgebäuden mit geringem Aufwand nachgerüstet werden, da das Trägerband mit der Mehrzahl von Leiterbahnen z.B. im Bereich der Traufe vorzugsweise horizontal angebracht werden kann, d.h. eine umfangreiche Entfernung der Dacheindeckung oder auch der gesamten Dachoberfläche ist nicht erforderlich, um z.B. ein Schräg- oder Steildach mit der Vorrichtung nachzurüsten. Dennoch ermöglicht die Vorrichtung eine nahezu flächendeckende Dichtigkeitsprüfung und Leckageortung, da in das Dach eindringende Feuchtigkeit bzw. Wasser entlang der Unterspannbahn zur Traufe hin abläuft und dort von der Vorrichtung erkannt bzw. detektiert werden kann, obwohl sich das Leck z.B. nicht in der Nähe der Traufe befindet, sondern in der Nähe des Firstes. Darüber hinaus ist eine umfangreiche Anbringung im Kreuz- oder Ringverbund nicht notwendig, sodass der Materialeinsatz deutlich geringer ist als bei vielen flächendeckenden Überwachungssystemen gemäß dem Stand der Technik.

Die vorgestellte Vorrichtung kann z.B. in einer Umgebung unterhalb der wasser- und schneeableitenden Dacheindeckung bei Schräg- oder Steildächern und dergleichen zum Einsatz gebracht werden. Werden mithilfe der Vorrichtung undichte Stellen in der Dachoberfläche festgestellt, was als Leckage bezeichnet wird, kann eine Alarmfunktion ausgelöst werden. Die Vorrichtung dient demnach als Überwachungs- oder Kontrollsystem, um z.B. Immobilien mit geneigten Dächern vor unbemerkter Feuchtigkeit unterhalb der Dacheindeckung zu schützen und eine frühzeitige Erkennung dieser Einflüsse zu ermöglichen. Dies verhindert teure Folgeschäden und sichert den Werterhalt der Immobilie.

Es können auch mehrere der vorgeschlagenen Vorrichtungen mit Abstand nebeneinander auf der feuchteführenden Fläche oder in der feuchteführenden Schicht verlegt werden. Auf diese Weise kann die Leckageortung um eine Dimension erweitert werden bzw. die feuchteführende Fläche oder Schicht in weitere Messbereiche, Beobachtungsbereiche bzw. Segmente unterteilt werden und die Überwachung engmaschiger gestaltet werden.

Die Vorrichtung kann auch in eine feuchteführende Fläche oder Schicht integriert sein. In diesen Fällen stellt die feuchteführende Fläche oder Schicht das Trägerband dar. Die Vorrichtung kann somit bei der Montage der feuchteführenden Schicht bzw. der feuchteführenden Schicht mitverlegt werden. Ein zweiter Arbeitsgang oder ein Nachrüsten der feuchteführenden Fläche bzw. der feuchteführenden Schicht mit der Vorrichtung kann somit entfallen.

Die Leiterbahnen können auf einer Seite des Trägerbands fixiert sein, z.B. indem sie auf dem Trägerband aufgedampft, aufgeschweißt oder aufgeklebt werden. Sie können aber auch in das Trägerband eingewoben oder eingenäht sein und auch auf beiden Seiten vorhanden sein.

In bevorzugten Ausführungsformen befinden sich die Leiterbahnen jedoch auf einer Seite des Trägerbandes. Diese Seite kann derart ausgerichtet werden, dass sie von der Feuchtigkeit, die sich gegebenenfalls entlang der feuchteführenden Fläche und/oder Schicht ausbreitet, benetzt werden kann.

Die Leiterbahnen werden von mindestens einer Seite durch das Trägerband geschützt (in vielen Fällen von der Seite, die der Unterspannbahn bzw. feuchteführenden Fläche zugewandt ist). Um die isolierten und/oder nicht isolierten Leiterbahnen auch von der anderen Seite vor Bruch oder äußeren Einflüssen z.B. bei der Montage zu schützen, können sie zusätzlich durch eine feuchtigkeits- und/oder wasserdurchlässige Schicht umgeben werden. Die Leiterbahnen sind demnach auf mindestens zwei gegenüberliegenden Seiten von dem Trägerband und/oder der feuchtigkeits- und/oder wasserdurchlässigen Schicht umschlossen und somit geschützt. In weiteren Ausführungsformen, in denen das Trägerband feuchtigkeits- bzw. wasserdurchlässig ist, muss die zusätzliche (Schutz-)Schicht nicht notwendigerweise feuchtigkeits- und/oder wasserdurchlässig sein.

Die Vorrichtung umfasst in bevorzugten Ausführungsbeispielen mindestens zwei Trennelemente, wobei die Trennelemente derart gestaltet sind, dass ein erstes Trennelement an einer ersten vorgegebenen Position und ein zweites Trennelement an einer zweiten vorgegebenen Position an dem Trägerband positionierbar sind. Das erste Trennelement ist zudem derart gestaltet, dass es an der ersten vorgegebenen Position an dem Trägerband mindestens eine erste vorgegebene Leiterbahn von der Mehrzahl der Leiterbahnen an dem Trägerband durchtrennen kann, wobei das Durchtrennen der mindestens einen ersten vorgegebenen Leiterbahn ein Unterbrechen des elektrischen Kontakts zwischen den Teilstücken der mindestens einen ersten vorgegebenen Leiterbahn darstellt, die sich auf gegenüberliegenden Seiten der ersten vorgegebenen Position befinden. Ähnliches gilt für das zweite Trennelement, das derart gestaltet ist, dass es an der zweiten vorgegebenen Position an dem Trägerband mindestens eine zweite vorgegebene Leiterbahn von der Mehrzahl der Leiterbahnen an dem Trägerband durchtrennen kann, wobei das Durchtrennen der mindestens einen zweiten vorgegebenen Leiterbahn ein Unterbrechen des elektrischen Kontakts zwischen den Teilstücken der mindestens einen zweiten vorgegebenen Leiterbahn darstellt, die sich auf gegenüberliegenden Seiten der zweiten vorgegebenen Position befinden.

Im montierten Zustand können diese Ausführungsformen auch wie folgt beschrieben werden:
Vorrichtung zum Detektieren und Lokalisieren von Feuchtigkeit auf einer feuchteführenden Fläche und/oder in einer feuchteführenden Schicht mit:
   - einer Mehrzahl von nebeneinander angeordneten, nicht-isolierten und/oder isolierten elektrisch leitenden Leiterbahnen;
   - einem Trägerband;
   - wobei die Leiterbahnen an dem Trägerband fixiert sind;
   - wobei das Trägerband auf der feuchteführenden Fläche und/oder in der feuchteführenden Schicht angebracht ist;
dadurch gekennzeichnet,
   - dass die Vorrichtung mindestens zwei Trennelemente umfasst;
   - wobei ein erstes Trennelement an einer ersten vorgegebenen Position und ein zweites Trennelement an einer zweiten vorgegebenen Position an dem Trägerband positioniert sind;
   - wobei das erste Trennelement an der ersten vorgegebenen Position an dem Trägerband mindestens eine erste vorgegebene Leiterbahn von der Mehrzahl der Leiterbahnen an dem Trägerband durchtrennt;
   - wobei das Durchtrennen der mindestens einen ersten vorgegebenen Leiterbahn ein Unterbrechen des elektrischen Kontakts zwischen den Teilstücken der mindestens einen ersten vorgegebenen Leiterbahn darstellt, die sich auf gegenüberliegenden Seiten der ersten vorgegebenen Position befinden;
   - wobei das zweite Trennelement an der zweiten vorgegebenen Position an dem Trägerband mindestens eine zweite vorgegebene Leiterbahn von der Mehrzahl der Leiterbahnen an dem Trägerband durchtrennt; und
   - wobei das Durchtrennen der mindestens einen zweiten vorgegebenen Leiterbahn ein Unterbrechen des elektrischen Kontakts zwischen den Teilstücken der mindestens einen zweiten vorgegebenen Leiterbahn darstellt, die sich auf gegenüberliegenden Seiten der zweiten vorgegebenen Position befinden.

Die erste und zweite Position sind bevorzugterweise voneinander verschieden. Die zu überwachende Fläche und/oder Schicht kann somit in insgesamt mindestens drei Messfelder unterteilt werden. Die Anzahl der zur Verfügung stehenden Messfelder erhöht sich mit der Anzahl der Trennelemente. In gleicher Weise erhöht sich das Auflösungsvermögen der Vorrichtung, d.h. eine Leckage bzw. eindringende und/oder sich ausbreitende Feuchtigkeit kann mit einer größeren Anzahl von Trennelementen genauer verortet bzw. lokalisiert werden als mit einer geringeren Anzahl von Trennelementen.

Die erste und die zweite Position können allerdings auch übereinstimmen. In diesem Fall sind die Trennelement derart ausgebildet, dass sie an ein und derselben Position am Trägerband angebracht werden können.

Die erste und die zweite Leiterbahn können ebenfalls voneinander verschieden sein, so dass zwei Leiterbahnen von der Mehrzahl der Leiterbahnen an dem Trägerband durch die mindestens zwei Trennelemente durchtrennt werden. Dies erleichtert zunächst das Messen bzw. Auslesen der elektrischen Eigenschaften der Mehrzahl von Leiterbahnen von einer Seite der Vorrichtung. Die erste und die zweite Leiterbahn kann jedoch auch dieselbe Leiterbahn betreffen, so dass ein und dieselbe Leiterbahn durch das erste und das zweite Trennelement an der ersten und der zweiten Position durchtrennt wird. Demnach wird die Leiterbahn an zwei Stellen durchtrennt. Dadurch entstehen drei Teilstücke, insbesondere ein Zwischenstück, dem mindestens ein eigenes Messfeld bzw. Segment zugeordnet werden kann. Die Anzahl der Messfelder ist damit nicht durch die Anzahl der Leiterbahnen an dem Trägerband bestimmt. Sie kann durch den Einsatz von Trennelementen nach Bedarf erhöht werden.

Eine erfindungsgemäße Vorrichtung kann mindestens ein Trennelement umfassen, das mindestens ein Markierungsmittel aufweist. Das mindestens eine Markierungsmittel ist dabei derart gestaltet, dass es, nachdem mithilfe des Trennelements an der vorgegebenen Position des Trägerbandes mindestens eine vorgegebene Leiterbahn durchtrennt wurde, anzeigen kann, welche und/oder wie viele Leiterbahnen mithilfe des mindestens einen Trennelements durchtrennt wurden. Das Durchtrennen der mindestens einen vorgegebenen Leiterbahn stellt dabei wiederum ein Unterbrechen des elektrischen Kontakts zwischen den Teilstücken der mindestens einen vorgegebenen Leiterbahn dar, die sich auf gegenüberliegenden Seiten der vorgegebenen Position befinden.

Wird ein derartiges Trennelement an einer erfindungsgemäßen Vorrichtung montiert, kann es auch wie folgt beschrieben werden:
Trennelement mit mindestens einem Markierungsmittel,
- wobei das mindestens eine Markierungsmittel anzeigt, welche und/oder wie viele Leiterbahnen mithilfe des Trennelements durchtrennt wurden; und
- wobei das Durchtrennen der mindestens einen vorgegebenen Leiterbahn ein Unterbrechen des elektrischen Kontakts zwischen den Teilstücken der mindestens einen vorgegebenen Leiterbahn darstellt, die sich auf gegenüberliegenden Seiten der vorgegebenen Position befinden.

Derartige Markierungsmittel ermöglichen ein zuverlässiges Auffinden der mindestens einen Trennstelle, d.h. der Stelle, an der mindestens eine der Leiterbahnen von dem mindestens einen Trennelement durchtrennt wurde. Sie ermöglichen es zudem, die an einer Stelle durchtrennten Leiterbahnen zuverlässig zu identifizieren. Dies erleichtert nicht nur die Montage bzw. Installation und Inbetriebnahme der Vorrichtung, bei der in der Regel eine Vielzahl unterschiedlicher Trennelemente installiert wird. Es ermöglicht ebenfalls eine zuverlässigere Dokumentation der installierten Vorrichtungen, die auch nach der Montage bzw. Installation der Vorrichtung durchgeführt werden kann und durch diese Maßnahme nicht notwendigerweise von der Person durchgeführt werden muss, die die Anlage installiert hat.

Die Markierungsmittel können Buchstaben, Nummern und/oder farbliche Markierungen bzw. Kennzeichnungen umfassen, wie z.B. einen Farbcode. Neben analogen bzw. analog auslesbaren Markierungsmitteln können auch digitale bzw. digital auslesbare Markierungsmittel verwendet werden wie z.B. Streifen-, Balken- oder QR-Codes, RFID-, NFC- oder BLE-Tags.

Das mindestens eine Trennelement weist Mittel zum Durchtrennen einer Leiterbahn auf. Es kann dazu über eine Klinge oder Schneide verfügen, wobei die Klinge oder Schneide derart gestaltet ist, dass sie an der vorgegebenen Position an dem Trägerband mindestens eine vorgegebene Leiterbahn von der Mehrzahl der Leiterbahnen an dem Trägerband durchtrennen kann und das Durchtrennen der mindestens einen vorgegebenen Leiterbahn ein Unterbrechen des elektrischen Kontakts zwischen den Teilstücken der mindestens einen ersten vorgegebenen Leiterbahn darstellt, die sich auf gegenüberliegenden Seiten der vorgegebenen Position befinden.

Wird ein derartiges Trennelement an einer erfindungsgemäßen Vorrichtung montiert, kann es auch wie folgt beschrieben werden:
Trennelement mit einer Klinge oder Schneide,
- wobei die Klinge oder Schneide an der vorgegebenen Position an dem Trägerband mindestens eine vorgegebene Leiterbahn von der Mehrzahl der Leiterbahnen an dem Trägerband durchtrennt; und
- wobei das Durchtrennen der mindestens einen vorgegebenen Leiterbahn ein Unterbrechen des elektrischen Kontakts zwischen den Teilstücken der mindestens einen vorgegebenen Leiterbahn darstellt, die sich auf gegenüberliegenden Seiten der vorgegebenen Position befinden.

Eine derartige Klinge oder Schneide kann beispielsweise eine Kunststoff- oder Keramicklinge sein oder ein Stanzwerkzeug darstellen, das einen Teil einer Leiterbahn ausstanzen kann. Sie kann auch zweiteilig aufgebaut sein, wobei ein erster Teil eine metallische Schneide umfasst und ein zweiter Teil aus einen elektrisch nicht leitenden Material besteht, der sich beim Durchtrennen der Leiterbahn oder Leiterbahnen zwischen die durch das Durchtrennen der Leiterbahn entstehenden Teilstücke schiebt, so dass das Durchtrennen der Leiterbahn oder Leiterbahnen ein Unterbrechen des elektrischen Kontakts zwischen den Teilstücken der Leiterbahn oder Leiterbahnen darstellt, die sich auf gegenüberliegenden Seiten der Trennstelle befinden. Durch den Einsatz derartiger Klingen oder Schneiden kann sichergestellt werden, dass die Leiterbahnen zuverlässig durchtrennt werden und kein elektrischer Kontakt zwischen den beim Durchtrennen entstehenden Teilstücken der Leiterbahn besteht.

Die Klingen oder Schneiden können als einsteckbare Einschübe ausgeführt sein, die in entsprechende Aussparungen eines Trennelements zum Durchtrennen der Leiterbahnen eingeschoben und/oder darin verrastet werden können. Da diese Einschübe so gestaltet werden können, dass sie von außen sichtbar bleiben, können damit z.B. zusätzliche Markierungsmittel zum Markieren der durchtrennten Leiterbahnen entfallen.

Das mindestens eine Trennelement kann unterschiedlich ausgeführt sein. In einer bevorzugten Ausführungsform umfasst es ein erstes Teil und zweites Teil, wobei das erste Teil derart gestaltet ist, dass es an der vorgegebenen Position an einer ersten Seite des Trägerbandes positionierbar ist, und das zweite Teil derart gestaltet ist, dass es an der vorgegebenen Position an einer zweiten Seite des Trägerbandes positionierbar ist. Das erste und zweite Teil sind des Weiteren derart gestaltet, dass sie form- und/oder kraftschlüssig miteinander verbunden werden und das Trägerband mit der Mehrzahl von Leiterbahnen umfassen und einklemmen können.

Wird ein derartiges Trennelement an einer erfindungsgemäßen Vorrichtung montiert, kann es auch wie folgt beschrieben werden:
Trennelement mit einem ersten und einem zweiten Teil,
- wobei das erste Teil an der vorgegebenen Position an einer ersten Seite des Trägerbandes positioniert ist;
- wobei das zweite Teil an der vorgegebenen Position an einer zweiten Seite des Trägerbandes positioniert ist;
- wobei das erste und das zweite Teil form- und/oder kraftschlüssig miteinander verbunden sind und
- somit das Trägerband mit der Mehrzahl von Leiterbahnen umfassen und einklemmen.

Eine zweiteilige Ausführung ermöglicht es zum einen, das mindestens eine Trennelement durch die form- und/oder kraftschlüssige Verbindung am Trägerband zu fixieren und somit gegen ein Verrutschen zu sichern. Zum anderen ist das Trägerband an der Stelle, an der mindestens eine Leiterbahn der Mehrzahl von Leiterbahnen an dem Trägerband durchtrennt wurde, geschwächt. Durch das Anbringen eines zweiteiligen Trennelements, das das Trägerband einklemmen kann, kann das Trägerband stabilisiert und vor Zerreißen geschützt werden.

In bevorzugten Ausführungsbeispielen wird eines der beiden Teile auf der feuchteführenden Schicht aufgebracht, das Trägerband mit der Mehrzahl von Leiterbahnen darübergelegt und das andere Teil in das auf der feuchteführenden Fläche angebrachte Teil eingeführt, wobei das Trägerband zwischen den beiden Teilen des Trennelements eingeklemmt wird. Die beiden Teile können über Schnapp- oder Rasthaken oder andere Verriegelungselemente und entsprechende Aussparungen auf dem Gegenstück verfügen, so dass das eine Teil beim Einführen in das andere Teil einrasten oder einschnappen kann. Das Einklemmen des Trägerbandes kann dabei auch vor dem Anbringen des einen Teils auf der feuchteführenden Fläche erfolgen. Ähnliches gilt - *mutatis mutandis* - für die Montage bzw. Installation in einer feuchteführenden Schicht.

Der zweiteilige Aufbau umfasst nicht nur Elemente, die getrennt sind und ineinandergesteckt werden können. Zweiteilig aufgebaute Trennelemente können auch als Clips ausgeführt sein, d.h. das erste und das zweite Teil können über ein Klappscharnier miteinander verbunden sein. Das Teil, das in das andere Teil eines zweiteilig ausgeführten Trennelements eingeführt wird, um das Trägerband im Trennelement zu klemmen, wird hierin auch als Klemmelement bezeichnet.

In bevorzugten Ausführungsformen kann die Klinge oder Schneide am ersten Teil des mindestens einen Trennelements angebracht sein. Das zweite Teil des mindestens einen Trennelements kann dementsprechend eine Aussparung aufweisen, die zur Aufnahme der Klinge oder Schneide geeignet ist.

Die Aussparung zur Aufnahme der Klinge oder Schneide kann so gestaltet werden, dass die Klinge oder Schneide so tief in das zweite Teil eindringen kann, dass die mindestens eine vorgegebene Leiterbahn von der Mehrzahl von Leiterbahnen an dem Trägerband zuverlässig durchtrennt wird und/oder ein Stück der Leiterbahn ausgestanzt wird. Darüber hinaus kann sichergestellt werden, dass die beiden Teilstücke der mindestens einen vorgegebenen Leiterbahn, die durchtrennt wird oder durchtrennt werden soll, nicht nur von der vordersten Spitze der Klinge oder Schneide voneinander getrennt werden, sondern von einem Teil der Klinge oder Schneide, das typischerweise dicker ist als die vordere Spitze. Auf diese Weise kann sichergestellt werden, dass die beiden Teilstücke der mindestens einen durchtrennten Leiterbahn nicht in einem elektrischen Kontakt zueinanderstehen.

Nachdem die Trennelemente an der Vorrichtung angebracht wurden und die nebeneinander angeordneten bzw. parallelen Leiterbahnen an geeigneten Stellen durchtrennt wurden, kann die Vorrichtung genutzt werden, um Feuchtigkeit zu erkennen und mithilfe der durchtrennten Leiterbahnen zu verorten bzw. zu lokalisieren. Zum Erkennen von Feuchtigkeit kann mindestens eine elektrische Eigenschaft der Leiterbahnen erfasst werden wie z.B. die Kapazität einer der Leiterbahnen oder der (ohmsche) Widerstand zwischen zwei nicht-isolierten Leiterbahnen oder Teilstücken von Leiterbahnen. Ebenso kann die Laufzeit eines Strom- oder Spannungspulses durch eine nicht-isolierte und/oder isolierte Leiterbahn oder ein Teilstück einer nicht-isolierten und/oder isolierten Leiterbahn genutzt werden oder dessen Verzerrung bzw. Aufteilung, wenn der Puls aufgrund des Kontakts einer Leiterbahn oder eines Teilstücks einer Leiterbahn mit Feuchtigkeit bzw. Wasser zusätzlich verzerrt bzw. reflektiert wird. Ändert sich diese mindestens eine Eigenschaft, kann der Kontakt der Vorrichtung mit Feuchtigkeit und damit die Feuchtigkeit selbst anhand dieser Änderung erkannt werden. Dazu kann eine Vielzahl von Messgeräten und Messvorrichtungen genutzt werden wie z.B. ein Ohmmeter, ein (Digital-)Multimeter, Impulsgeneratoren, etc.

In bevorzugten Ausführungsformen umfasst die Vorrichtung deshalb mindestens eine Messeinheit, die derart gestaltet ist, dass sie an einer vorgegebenen Position an dem Trägerband an mindestens eine der Leiterbahnen oder ein Teilstück mindestens einer der Leiterbahnen angeschlossen werden kann und, nachdem sie an der vorgegebenen Position an dem Trägerband an die mindestens eine der Leiterbahnen oder das Teilstück der mindestens einen der Leiterbahnen angeschlossen wurde, mithilfe der mindestens einen der Leiterbahnen oder des Teilstücks der mindestens einen der Leiterbahnen mindestens eine Messung mindestens einer elektrischen Eigenschaft durchführen kann.

Wird eine derartige Messeinheit an einer erfindungsgemäßen Vorrichtung montiert, kann sie auch wie folgt beschrieben werden:
Messeinheit,
- die an einer vorgegebenen Position an dem Trägerband an mindestens eine der Leiterbahnen oder ein Teilstück mindestens einer der Leiterbahnen angeschlossen ist und,
- nachdem sie an der vorgegebenen Position an dem Trägerband an die mindestens eine der Leiterbahnen oder das Teilstück mindestens einer der Leiterbahnen angeschlossen wurde, mithilfe der mindestens einen der Leiterbahnen oder des Teilstücks der mindestens einen der Leiterbahnen eine Messung einer elektrischen Eigenschaft durchführen kann.

Mithilfe einer derartigen Messeinheit können sensorische Informationen über die Leiterbahn bzw. das Teilstück einer Leiterbahn erfasst werden, an das die Messeinheit angeschlossen worden ist. Die mit der Messeinheit gewonnenen Messergebnisse bzw. sensorischen Informationen sind damit auf das der Leiterbahn bzw. dem Teilstück der Leiterbahn zugeordnete Messfeld bzw. Segment oder die der Leiterbahn bzw. dem Teilstück der Leiterbahn zugeordneten Messfelder bzw. Segmente bezogen.

Die Messeinheit kann mithilfe von Crimp- bzw. Schneid-(Klemm-)Kontakten z.B. mithilfe von Crimp- oder Kabelschuhen oder Klemmen an die mindestens eine der Leiterbahnen bzw. das Teilstück der mindestens einen der Leiterbahnen angeschlossen werden. Der elektrische Kontakt kann auch über eine Steckverbindung oder Federkontakten (auch PoGo-Pins genannt) hergestellt werden hergestellt werden. Die Messeinheit und die Vorrichtung sind in diesen Fällen mit geeigneten Steckern bzw. Steckerleisten ausgestattet.

Die Messeinheit kann über Mittel zur Datenübertragung verfügen und/oder derart gestaltet sein, dass sie an Mittel zur Datenübertragung angeschlossen werden kann. Die Mittel zur Datenübertragung können dabei Mittel zur drahtlosen Kommunikation umfassen, aber auch kabelgebunden sein. Sie können für das Empfangen oder Übertragen von Daten, Messwerten oder Steuersignalen genutzt werden. Die Messeinheit kann somit nach Bedarf platziert werden. Sie kann außerdem Daten, Messwerte oder Steuersignale an weitere (Mess- oder Auslese- oder Datenverarbeitungs- oder Zwischenspeicher- oder Hauptspeicher-)Einheiten oder, falls die Mittel zur Datenübertragung eine Verbindung an ein Netzwerk bzw. das Internet oder ein Handynetz erlauben, an einen (Cloud-)Server oder ein mobiles Endgerät (wie z.B. ein Smartphone oder Tablet) senden oder von dort empfangen. Die Überwachung des mit der Vorrichtung ausgestatteten Gebäudeteils, z.B. ein Dach, kann somit von remote, d.h. aus der Ferne, erfolgen. Zu diesem Zweck kann ein Messwert z.B. von der Messeinheit an eine Zwischenspeichereinheit mit Datenverarbeitung zur Auswertung übermittelt werden und von dort weiter an eine externe Hauptspeichereinheit oder einen (Cloud-)Server übertragen werden.

Die Messeinheit kann nicht nur an einer Position, sondern auch an weiteren bzw. zusätzlichen Positionen an mindestens eine der Leiterbahnen oder ein Teilstück einer der Leiterbahnen angeschlossen werden. Auf diese Weise kann die Vorrichtung mit einer Messeinheit betrieben werden. Der Einsatz weiterer oder zusätzlicher Messeinheiten kann somit vermieden werden.

Die Vorrichtung kann eine erste und eine zweite Messeinheit umfassen, wobei die erste Messeinheit derart gestaltet ist, dass sie an einer ersten Position an dem Trägerband an mindestens eine der Leiterbahnen oder ein Teilstück mindestens einer der Leiterbahnen angeschlossen werden kann und, nachdem sie an der ersten Position an dem Trägerband an die mindestens eine der Leiterbahnen oder das Teilstück der mindestens einen der Leiterbahnen angeschlossen wurde, mithilfe der mindestens einen der Leiterbahnen oder des Teilstücks der mindestens einen der Leiterbahnen eine Messung einer elektrischen Eigenschaft durchführen kann. Die zweite Messeinheit ist derart gestaltet, dass sie an einer zweiten Position an dem Trägerband an mindestens eine der Leiterbahnen oder ein Teilstück mindestens einer der Leiterbahnen angeschlossen werden kann und, nachdem sie an der zweiten Position an dem Trägerband an die mindestens eine der Leiterbahnen oder das Teilstück der mindestens einen der Leiterbahnen angeschlossen wurde, mithilfe der mindestens einen der Leiterbahnen oder des Teilstücks der mindestens einen der Leiterbahnen eine Messung einer elektrischen Eigenschaft durchführen kann.

Werden derartige Messeinheiten an einer erfindungsgemäßen Vorrichtung montiert, können sie auch wie folgt beschrieben werden:
Eine erste Messeinheit,
- die an einer ersten Position an dem Trägerband an mindestens eine der Leiterbahnen oder ein Teilstück mindestens einer der Leiterbahnen angeschlossen ist;
- wobei die erste Messeinheit, nachdem sie an der ersten Position an dem Trägerband an die mindestens eine der Leiterbahnen oder das Teilstück der mindestens einen der Leiterbahnen angeschlossen wurde, mithilfe der mindestens einen der Leiterbahnen oder des Teilstücks der mindestens einen der Leiterbahnen eine Messung einer elektrischen Eigenschaft durchführen kann; und
- eine zweite Messeinheit,
- die an einer zweiten Position an dem Trägerband an mindestens eine der Leiterbahnen oder ein Teilstück mindestens einer der Leiterbahnen angeschlossen ist;
- wobei die zweite Messeinheit derart gestaltet ist, dass sie, nachdem sie an der zweiten Position an dem Trägerband an die mindestens eine der Leiterbahnen oder das Teilstück der mindestens einen der Leiterbahnen angeschlossen wurde, mithilfe der mindestens einen der Leiterbahnen oder des Teilstücks der mindestens einen der Leiterbahnen eine Messung einer elektrischen Eigenschaft durchführen kann.

Die Verwendung zweier Messeinheiten ermöglicht ein Messen der elektrischen Eigenschaften der Leiterbahnen bzw. der Teilstücke von Leiterbahnen bzw. der mit den Leiterbahnen oder Teilstücken der Leiterbahnen verbundenen Teile der Vorrichtung (vgl. z.B. den Widerstand des Zwischenraums zwischen zwei Leiterbahnen, die Kapazität einer oder zweier Leiterbahnen bzw. Teilstücken von Leiterbahnen oder Laufzeiten von Spannungspulsen in einer Leiterbahn bzw. einem Teilstück einer Leiterbahn) an zwei unterschiedlichen Stellen bzw. Positionen an dem Trägerband. Auf diese Weise können zwei Teilstücke einer Leiterbahn, die von dem mindestens einen Trennelement durchtrennt wurde, zur Detektion und Lokalisation von Feuchtigkeit genutzt werden, ohne zusätzliche Leitungen zur Kontaktierung der Teilstücke verlegen zu müssen.

Bei geeigneter Positionierung der Trennstellen sowie der Messeinheiten können mit dem Einsatz zweier Messeinheiten weitere Vorteile erzielt werden. Wird eine Leiterbahn höchstens an einer Stelle durchtrennt und mithilfe einer der Messeinheiten Feuchtigkeit an einem der beiden Teilstücke der durchtrennten Leiterbahn erkannt, kann durch eine weitere Messung mithilfe der anderen Messeinheit an dem anderen Teilstück das Messergebnis verifiziert werden.

Durch diese Verifikation bzw. Prüfung können z.B. zwei Fälle unterschieden werden. Der erste Fall betrifft das Eindringen oder die Ausbreitung von Feuchtigkeit bzw. Wasser an einer Stelle, bei der alle Leiterbahnen, mit der eine Messeinheit verbunden ist, benetzt werden bzw. mit der eindringenden Feuchtigkeit in Kontakt kommen. Der zweite Fall betrifft ein Eindringen bzw. ein Ausbreiten von Feuchtigkeit bzw. Wasser entlang der gesamten Vorrichtung. Dieser Fall tritt z.B. durch das Erreichen des kapillaren Sättigungspunktes einer Dacheindeckung ein. Dabei werden ebenfalls alle Leiterbahnen benetzt. Eine Messeinheit, die an nur einer Stelle bzw. Position an dem Trägerband an die Leiterbahnen bzw. die Teilstücke der Leiterbahnen angeschlossen ist, kann diese beiden Fälle nicht unterscheiden. Wird eine zweite Messeinheit an einer geeigneten zweiten Position an dem Trägerband angeschlossen, ist eine Unterscheidung dieser beiden Fälle möglich. Die zweite Einheit würde im zweiten Fall zwar wiederum feststellen, dass alle Leiterbahnen mit Feuchtigkeit benetzt sind. Im ersten Fall würde sie jedoch feststellen, dass zumindest eine der Leiterbahnen nicht mit Feuchtigkeit in Kontakt steht. Auf diese Weise können Fehlalarme vermieden werden, die z.B. durch das Erreichen des kapillaren Sättigungspunktes einer Dacheindeckung ausgelöst werden würden. Die Vorrichtung kann in diesen Fällen auch zur Überwachung des kapillaren Sättigungspunktes eingesetzt werden.

Ein anderer Vorteil kann erzielt werden, wenn alle Leiterbahnen bis auf eine an mindestens zwei Stellen durchtrennt werden. In diesem Fall kann mit dem Einsatz einer zweiten Messeinheit das Auflösungsvermögen der Vorrichtung verdoppelt werden.

In bevorzugten Ausführungsformen verfügen die erste und die zweite Messeinheit über Mittel zur Datenübertragung und/oder sind derart gestaltet, dass sie an Mittel zur Datenübertragung angeschlossen werden können. Die Mittel zur Datenübertragung können dabei Mittel zur drahtlosen Kommunikation umfassen, aber auch kabelgebunden sein. Die Platzierung der Messeinheiten kann somit nach Bedarf erfolgen. Zudem können mehrere Messeinheiten gleichzeitig betrieben werden und mit einer zentralen Einheit, die die Messwerte der mit ihr verbundenen Messeinheiten speichert und auswertet, verbunden werden.

Die Messeinheit kann über einen Speicher und Mittel zur Datenverarbeitung verfügen, so dass sie die Werte einer Messung der elektrischen Eigenschaften mithilfe einer Leiterbahn oder eines Teilstücks einer Leiterbahn speichern und auswerten kann. Die Messeinheit kann aber auch mit einer anderen Einheit verbunden werden, die über einen derartigen Speicher und Mittel zur Datenverarbeitung verfügt und damit Messwerte speichern und auswerten kann.

Verfügt die Messeinheit über einen eigenen Speicher und Mittel zur Datenverarbeitung, können Veränderungen der mithilfe einer Leiterbahn oder eines Teilstücks einer Leiterbahn gemessenen elektrischen Eigenschaften von der Messeinheit vor Ort und nahezu instantan bzw. in Echtzeit, insbesondere ohne Verzögerungen durch ein Übermitteln der Daten bzw. Messwerte an weitere Mess- bzw. Auswerteeinheiten oder (Cloud-)Server, erkannt werden. Ein Übermitteln der Daten an weitere Auswerteeinheiten oder (Cloud-)Server z.B. mithilfe von drahtlosen Internetverbindungen ist in diesen Fällen nicht notwendig. Zudem ist die Feuchteüberwachung nicht vom Bestehen einer derartigen Verbindung abhängig. Eine derartige Messeinheit kann demnach eindringende Feuchtigkeit selbsttätig erkennen und anhand dessen auf eine Leckage in dem zu überwachenden Bereich schließen. Verfügt eine derartige Messeinheit z.B. über Mittel oder ist zumindest mit Mitteln verbunden, mit der sie Alarmsignale z.B. in Form von akustischen Signalen erzeugen kann, kann die Messeinheit vor eindringender Feuchtigkeit bzw. Wasser warnen, auch wenn keine Verbindung zu einer weiteren Einheit bzw. einem (Cloud-)Server besteht.

Die Vorrichtung kann derart gestaltet sein, dass sie mindestens eine erste nicht-isolierte Leiterbahn oder ein erstes nicht-isoliertes Teilstück einer Leiterbahn und mindestens eine zweite nicht-isolierte Leiterbahn oder ein zweites nicht-isoliertes Teilstück einer Leiterbahn aufweist. Die Messeinheit kann in diesem Fall derart gestaltet sein, dass sie an einer vorgegebenen Position an dem Trägerband an die mindestens eine erste nicht-isolierte Leiterbahn oder das mindestens eine erste nicht-isolierte Teilstück einer Leiterbahn und an die mindestens eine zweite nicht-isolierte Leiterbahn oder das mindestens eine zweite nicht-isolierte Teilstück einer Leiterbahn angeschlossen werden kann und, nachdem sie an der vorgegebenen Position an die mindestens eine erste nicht-isolierte Leiterbahn oder das mindestens eine erste nicht-isolierte Teilstück einer Leiterbahn und an die mindestens eine zweite nicht-isolierte Leiterbahn oder das mindestens eine zweite nicht-isolierte Teilstück einer Leiterbahn angeschlossen wurde, den elektrischen Widerstand zwischen der mindestens einen ersten nicht-isolierten Leiterbahn oder des mindestens einen ersten nicht-isolierten Teilstücks einer Leiterbahn und der mindestens einen zweiten nicht-isolierten Leiterbahn oder des mindestens einen zweiten nicht-isolierten Teilstücks einer Leiterbahn messen kann.

Wird eine derartige Messeinheit an einer erfindungsgemäßen Vorrichtung montiert, kann sie auch wie folgt beschrieben werden:
Messeinheit,
- die an einer vorgegebenen Position an dem Trägerband an mindestens eine erste nicht-isolierte Leiterbahn oder ein erstes nicht-isoliertes Teilstück einer Leiterbahn und an mindestens eine zweite nicht-isolierte Leiterbahn oder ein zweites nicht-isoliertes Teilstück einer Leiterbahn angeschlossen ist;
- wobei sie, nachdem sie an der vorgegebenen Position an die mindestens eine erste nicht-isolierte Leiterbahn oder das mindestens eine erste nicht-isolierte Teilstück einer Leiterbahn und an die mindestens eine zweite nicht-isolierte Leiterbahn oder das mindestens eine zweite nicht-isolierte Teilstück einer Leiterbahn angeschlossen wurde, den elektrischen Widerstand zwischen der mindestens einen ersten nicht-isolierten Leiterbahn oder des mindestens einen ersten nicht-isolierten Teilstücks einer Leiterbahn und der mindestens einen zweiten nicht-isolierten Leiterbahn oder des mindestens einen zweiten nicht-isolierten Teilstücks einer Leiterbahn messen kann.

Die Messung von elektrischen (ohmschen) Widerständen zwischen zwei Leiterbahnen stellt eine sehr zuverlässige und robuste Methode zum Erkennen von Feuchtigkeit dar. Sie kann mit einfachen Mitteln und Verfahren erfolgen. Ohne den Einfluss von Feuchtigkeit ist der Widerstand zwischen zwei Leiterbahnen einer erfindungsgemäßen Vorrichtung sehr hoch, da die nicht-isolierten Leiterbahnen oder nicht-isolierten Teilstücke von Leiterbahnen so angeordnet sind, dass sie nicht bzw. im Wesentlichen nicht in elektrischem Kontakt zueinanderstehen. Werden die Leiterbahnen, die zur Widerstandsmessung herangezogen werden, durch eindringende Feuchtigkeit oder sich ausbreitende Feuchtigkeit miteinander elektrisch miteinander verbunden bzw. kurzgeschlossen, sinkt der elektrische Widerstand zwischen den beiden Leiterbahnen. Diese Veränderung des elektrischen Widerstands wird von der Messeinheit erfasst und zur Detektion von Feuchtigkeit genutzt.

In weiteren Ausführungsformen kann die Messeinheit auch derart gestaltet sein, dass sie, nachdem sie an mindestens eine der Leiterbahnen oder ein Teilstück einer der Leiterbahnen angeschlossen wurde, eine elektromagnetische Welle und/oder einen Spannungs- oder Strompuls in die mindestens eine der Leiterbahnen oder das mindestens eine Teilstück einer der Leiterbahnen einkoppeln und damit eine Messung einer elektrischen Eigenschaft mithilfe der mindestens einen der Leiterbahnen oder des mindestens einen Teilstücks einer der Leiterbahnen durchführen kann und/oder die Kapazität der mindestens einen der Leiterbahnen oder des mindestens einen Teilstücks einer der Leiterbahnen messen kann. Da derartige Messungen lediglich den Anschluss der Messeinheit an eine der Leiterbahnen erfordern, kann mit derartigen Messungen das Auflösungsvermögen der Vorrichtung erhöht bzw. voll ausgeschöpft werden.

Die mindestens eine Messeinheit kann derart gestaltet sein, dass sie, nachdem sie an mindestens eine der Leiterbahnen oder ein Teilstück einer der Leiterbahnen angeschlossen wurde, mindestens eine Messung mindestens einer elektrischen Eigenschaft im Niederspannungsbereich durchführen kann.

Der Niederspannungsbereich liegt für Messungen mithilfe von Wechselspannungen in einem Bereich von -25 V bis +25 V, wobei sich diese Werte auf den Nenn- bzw. Effektivwert der verwendeten Wechselspannung beziehen. Bevorzugterweise liegt die Nennspannung für derartige Messungen jedoch in einem kleineren Bereich von -20 V bis +20 V, -15 V bis +15 V oder von -12 V bis +12 V.

Für Messungen, bei der eine Gleichspannung eingesetzt wird, ist der Niederspannungsbereich durch einen Bereich von -60 V bis +60 V gegeben. Bevorzugterweise wird jedoch eine Gleichspannung im Bereich von -50 V bis +50 V, -35 V bis +35 V, -25 V bis +25 V, -20 V bis +20 V oder -12 V bis +12 V verwendet.

Durch die Einschränkung der Messungen auf den Niederspannungsbereich können Schutzmaßnahmen z.B. gegen Berühren der unter Spannung stehenden bzw. Strom tragenden Teile der Vorrichtung entfallen oder zumindest weniger aufwendig bzw. umfangreich gestaltet werden. Die Montage bzw. Installation der Vorrichtung erfordert zudem keine Elektrofachkraft, sondern kann z.B. durch einen Dachdecker, Installateur oder Maurer erfolgen.

Die Messeinheit kann als eine separate Vorrichtung mit einem eigenen Gehäuse ausgeführt sein. Sie kann dabei in ein Trennelement eingebaut oder integriert werden - mit oder ohne eigenem Gehäuse.

Eine in ein Trennelement integrierte Messeinheit kann mit Mitteln zur drahtlosen Kommunikation zur Übertragung von Daten und Messwerten und ggf. zum Empfangen von Steuersignalen ausgestattet sein. Sie kann aber auch an die Leiterbahnen und/oder Teilstücke der Leiterbahnen angeschlossen sein, um Daten, Messwerte oder Steuersignale z.B. an eine andere Messeinheit oder eine Einheit zum Auslesen und Auswerten von Daten und Messwerten zu übertragen oder Daten, Messwerte oder Steuersignale über die Leiterbahnen bzw. die Teilstücke der Leiterbahnen zu empfangen. Die andere Messeinheit oder die Einheit zum Auslesen und Auswerten ist dabei an dieselben Leiterbahnen oder Teilstücke der Leiterbahnen angeschlossen wie die Messeinheit bzw. das Trennelement mit der integrierten Messeinheit. Auf diese Weise können die Leiterbahnen bzw. die Teilstücke der Leiterbahnen sowohl zur Detektion und Lokalisation von Feuchtigkeit als auch zur Übertragung von Daten, Steuersignalen und Messwerten genutzt werden. Sie haben demnach eine Doppelfunktion und bilden nicht nur ein Feuchtigkeitserkennungs-, sondern auch ein Datenleitungssystem. Dabei können die Leiterbahnen nicht nur von Messeinheiten, die in ein Trennelement integriert sind, als Datenleitungen genutzt werden, sondern auch von anderen Messeinheiten, Sensoren oder Geräten.

Die Vorrichtung kann mindestens eine zusätzliche Datenleitung umfassen. Die mindestens eine zusätzliche Datenleitung ist dabei isoliert, an dem Trägerband fixiert und verläuft neben der Mehrzahl von nebeneinander angeordneten, nicht-isolierten bzw. isolierten elektrisch leitenden Leiterbahnen.

Die mindestens eine zusätzliche Datenleitung umfasst zwei oder mehr Adern. Sie kann für die Übertragung von Daten und Steuersignalen verwendet werden, z.B. zwischen einer Messeinheit und einer Datenverarbeitungs- bzw. Steuereinheit. Die mindestens eine zusätzliche Datenleitung kann auch zur Anbindung eines Teilstücks einer der Leiterbahnen von der Mehrzahl von Leiterbahnen an dem Trägerband an eine Mess-, Auswerte- oder Ausleseeinheit mit Messfunktionen genutzt werden. Damit können auch Teilstücke einer an einer ersten und an einer zweiten Position durchtrennten Leiterbahn zum Erkennen und Orten von Feuchtigkeit bzw. Wasser genutzt werden, auch wenn sich entlang des Teilstücks keine Messeinheit befindet. Zusätzliche Anschlüsse oder Leitungen, um elektrische Eigenschaften mithilfe eines solchen Teilstücks zu messen und zu überwachen, können damit entfallen.

Eine erfindungsgemäße Vorrichtung kann über mehr als eine zusätzliche Datenleitung verfügen. Die zusätzlichen Datenleitungen können dabei auch in mehradrigen Kabelbändern oder Flachbandkabeln zusammengefasst sein und in dieser Form an dem Trägerband fixiert sein.

Um weitere Daten über den zu überwachenden Gebäudeteil zu erfassen, kann die Vorrichtung einen Temperatursensor und/oder einen Drucksensor und/oder einen Luftfeuchtigkeits-sensor und/oder einen Lichtsensor und/oder einen Gassensor und/oder einen Regensensor und/oder ein Akustiksensor und/oder ein Mikrofon und/oder ein Ultraschallgerät und/oder ein Datenübertragungsmodul umfassen. Der Temperatursensor, der Drucksensor, der Luftfeuchtigkeitssensor, der Lichtsensor, der Gassensor, der Regensensor, der Akustiksensor, das Mikrofon, das Ultraschallgerät oder das Datenübertragungsmodul kann dabei derart gestaltet sein, dass der Temperatursensor, der Drucksensor, der Luftfeuchtigkeitssensor, der Lichtsensor, der Gassensor, der Regensensor, der Akustiksensor, das Mikrofon, das Ultraschallgerät oder das Datenübertragungsmodul mit der mindestens einen zusätzlichen Datenleitung oder den Leiterbahnen und/oder Teilstücken der Leiterbahnen verbunden werden kann.

Wird ein derartiger Temperatursensor und/oder Drucksensor und/oder Luftfeuchtigkeitssensor und/oder Lichtsensor und/oder Gassensor und/oder Regensensor und/oder Akustiksensor und/oder derartiges Mikrofon und/oder Ultraschallgerät und/oder Datenübertragungsmodul an einer erfindungsgemäßen Vorrichtung mit mindestens einer zusätzlichen Datenleitung montiert, kann der Temperatursensor und/oder der Drucksensor und/oder der Luftfeuchtigkeitssensor und/oder der Lichtsensor und/oder der Gassensor und/oder der Regensensor und/oder der Akustiksensor und/oder das Mikrofon und/oder das Ultraschallgerät und/oder das Datenübertragungsmodul auch wie folgt beschrieben werden:
Temperatursensor und/oder Drucksensor und/oder Luftfeuchtigkeitssensor und/oder Lichtsensor und/oder Gassensor und/oder Regensensor und/oder Akustiksensor und/oder Mikrofon und/oder Ultraschallgerät und/oder Datenübertragungsmodul,
- wobei der Temperatursensor, der Drucksensor, der Luftfeuchtigkeitssensor, der Lichtsensor, der Gassensor, der Regensensor, der Akustiksensor, das Mikrofon, das Ultraschallgerät oder Datenübertragungsmodul mit der mindestens zusätzlichen Datenleitung verbunden ist.

Wird ein derartiger Temperatursensor und/oder Drucksensor und/oder Luftfeuchtigkeitssensor und/oder Lichtsensor und/oder Gassensor und/oder Regensensor und/oder Akustiksensor und/oder derartiges Mikrofon und/oder Ultraschallgerät und/oder Datenübertragungsmodul an einer erfindungsgemäßen Vorrichtung montiert, kann der Temperatursensor und/oder der Drucksensor und/oder der Luftfeuchtigkeitssensor und/oder Lichtsensor und/oder Gassensor und/oder Regensensor und/oder Akustiksensor und/oder das Mikrofon und/oder das Ultraschallgerät und/oder Datenübertragungsmodul auch wie folgt beschrieben werden:
Temperatursensor und/oder Drucksensor und/oder Luftfeuchtigkeitssensor und/oder Lichtsensor und/oder Gassensor und/oder Regensensor und/oder Akustiksensor und/oder Mikrofon und/oder Ultraschallgerät und/oder Datenübertragungsmodul,
- wobei der Temperatursensor, der Drucksensor, der Luftfeuchtigkeitssensor, der Lichtsensor, der Gassensor, der Regensensor, der Akustiksensor, das Mikrofon, das Ultraschallgerät oder Datenübertragungsmodul mit den Leiterbahnen und/oder Teilstücken der Leiterbahnen verbunden ist.

Der Einsatz von Temperatursensoren ermöglicht es das Eindringen von Feuchtigkeit auf Wetterphänomene wie z.B. Blasschnee zurückzuführen. Die Druck- und Luftfeuchtigkeitssensoren erlauben es, Wetterereignisse wie z.B. Starkregenereignisse oder langanhaltende Regenfälle zu erkennen, die ebenfalls zu einem Eindringen von Feuchtigkeit in die Gebäudestruktur führen können, ohne dass ein Schaden oder eine Leckage an der Struktur vorliegt. Dazu kann auch ein Regensensor genutzt werden.

Akustiksensoren bzw. Mikrofone können dazu genutzt werden, um Geräusche von Nagetieren oder anderen Schädlingen mittels Audioanalyse zu erkennen und somit eine ernsthafte Beschädigung der Substanz des überwachten Gebäudeteils durch Nagetiere oder andere Schädlinge frühzeitig zu erkennen und zu verhindern. Letzteres kann z.B. mithilfe eines Ultraschallgeräts erreicht werden, das u.a. zur Vergrämung von Mardern eingesetzt werden kann.

Ein Lichtsensor kann zur Bestimmung der Lichtdurchlässigkeit bzw. UV-Beständigkeit von Dacheindeckungen und Unterspannbahnen verwendet werden.

Die verschiedenen Sensoren, wie z.B. die Temperatur und/oder Akustiksensoren bzw. Mikrofone, können ebenfalls genutzt werden, um z.B. den Brand eines Daches oder eines angrenzenden Daches frühzeitig zu erkennen. Dies kann z.B. anhand des entsprechenden Temperaturanstiegs und/oder charakteristischer Geräusche erfolgen, die von den Sensoren erfasst und aufgezeichnet werden. Zu diesem Zweck kann auch ein Gassensor eingesetzt werden, der z.B. Rauchgase detektiert.

Die zusätzliche Sensorik kann ebenso dazu verwendet werden, um die Feuchtesignale, die mithilfe der nicht-isolierten und/oder isolierten Leiterbahnen gewonnen werden, zu verifizieren und/oder ggf. besser interpretieren zu können. Dabei können die Sensoren über- und/oder unterhalb der Dacheindeckung angebracht werden, in die Dacheindeckung integriert werden oder in der Dacheindeckung integriert sein.

Über ein Datenübertragungsmodul wie z.B. Funk-, WLAN-, LAN-, WAN-, WPAN- oder SIM-Karten-Modul kann eine erfindungsgemäße Vorrichtung, die über eine Messeinheit und/oder Temperatursensor und/oder Drucksensor und/oder Luftfeuchtigkeitssensor und/oder Lichtsensor und/oder Gassensor und/oder Regensensor und/oder Akustiksensor und/oder Mikrofon und/oder Ultraschallgerät verfügt, Daten, Messwerte und Steuersignale mit einem zentralen Rechner oder (Cloud-)Server austauschen, z.B. über das Internet, ein Funk- oder Handynetz, ein Bluetooth-, BLE- oder WLAN-Netzwerk, ein LoRa-WAN (Low-Range-Wide-Area-Network) oder LPWAN (Low-Power-Wide-Area-Network) wie z.B. ein NB-loT (Narrow-Band-Internet-of-Things). Dies ermöglicht eine Steuerung bzw. Überwachung der Vorrichtung bzw. des mit der Vorrichtung ausgestatteten Gebäudeteils, die remote bzw. aus der Ferne erfolgt. Ein derartiger Anschluss ermöglicht es zudem, mehrere Vorrichtungen von einer zentralen Stelle aus zu verwalten, zu überwachen und zu steuern.

Ein Sensor kann ebenfalls mit einem Datenübertragungsmodul ausgestattet sein, insbesondere zur drahtlosen Datenübertragung. Ein derartiger Sensor, zu denen ein Temperatursensor, Drucksensor, Luftfeuchtigkeitssensor, Lichtsensor, Gassensor, Regensensor, Akustiksensor oder Mikrofon zählen, kann seine Messwerte bzw. Daten drahtlos an entsprechende Module oder Auswerteeinheiten der Vorrichtung oder Module oder Auswerteeinheiten, die an die Vorrichtung angeschlossen sind, senden und von dort Steuersignale empfangen. Ein derartiger Sensor kann Messwerte, Daten und Steuersignale auch mit einem zentralen Rechner oder (Cloud-)Server austauschen, z.B. über das Internet, ein Funk- oder Handynetz, ein Bluetooth-, BLE- oder WLAN-Netzwerk, ein LoRa-WAN (Low-Range-Wide-Area-Network) oder LPWAN (Low-Power-Wide-Area-Network) wie z.B. ein NB-loT (Narrow-Band-Internet-of-Things). Dies ermöglicht eine Steuerung bzw. Überwachung des Sensors, die remote bzw. aus der Ferne erfolgt. Der Sensor wird dabei softwareseitig einer Vorrichtung, einer zu überwachenden feuchteführenden Fläche und/oder Schicht zugeordnet.

Mindestens ein Trennelement einer erfindungsgemäßen Vorrichtung kann mindestens ein Kontaktmittel umfassen, wobei das mindestens eine Trennelement mit dem mindestens einen Kontaktmittel derart ausgebildet ist, dass es an einer vorgegebenen Position an dem Trägerband positionierbar ist. Das mindestens eine Trennelement mit dem mindestens einen Kontaktmittel ist in diesem Fall zudem derart gestaltet, dass es an der vorgegebenen Position an dem Trägerband mithilfe des Kontaktmittels einen elektrischen Kontakt zwischen der mindestens einen zusätzlichen Datenleitung und mindestens einer der Leiterbahnen oder einem Teilstück einer der Leiterbahnen herstellen kann.

Wird ein derartiges Trennelement an einer erfindungsgemäßen Vorrichtung mit mindestens einer zusätzlichen Datenleitung montiert, kann es auch wie folgt beschrieben werden:
Trennelement
- mit mindestens einem Kontaktmittel;
- wobei das Trennelement mit dem mindestens einen Kontaktmittel an einer vorgegebenen Position an dem Trägerband positioniert ist; und
- wobei das mindestens eine Kontaktmittel an der vorgegebenen Position an dem Trägerband einen elektrischen Kontakt zwischen der mindestens einen zusätzlichen Datenleitung und mindestens einer der Leiterbahnen oder einem Teilstück einer der Leiterbahnen herstellt.

Ein Kontaktmittel kann als eine Metallbrücke, insbesondere als eine Federkontaktbrücke ausgeführt sein. Es kann eine Gold-, Kupfer-, Wolfram-, Rhodium- oder Aluminiumbrücke sein, wobei das Material des Kontaktmittels auf das Material der Leiterbahnen bzw. der Datenleitung abgestimmt ist, um Korrosion durch die Ausbildung von galvanischen Zellen zu vermeiden. Ein Kontaktmittel oder eine Kontaktbrücke kann direkt auf eine der Leiterbahnen an dem Trägerband aufsetzen. Es kann auch über Spitzen oder Schneiden verfügen, um eine gegebenenfalls vorhandene Isolierung und/oder Schutzbeschichtung der Leiterbahnen oder das Trägerband oder die Isolierung der mindestens einen zusätzlichen Datenleitung zu durchstoßen bzw. zu durchtrennen und auf diese Weise den elektrischen Kontakt mit der Leiterbahn herzustellen.

Derartige Trennelemente können sowohl zum Durchtrennen mindestens einer der Leiterbahnen als auch zur Kontaktierung mindestens einer der Leiterbahnen oder eines Teilstücks einer der Leiterbahnen mithilfe der mindestens einen zusätzlichen Datenleitung genutzt werden.

Sie können auch zur Reparatur einer Leiterbahn eingesetzt werden. Wenn eine Leiterbahn an einer Stelle durchtrennt wurde, an der sie nicht durchtrennt werden sollte, können zwei Trennelemente mit Kontaktmitteln genutzt werden, um die durchtrennte Stelle mithilfe der zusätzlichen Leitung oder Datenleitung zu überbrücken. Nach einer derartigen Reparatur empfiehlt es sich in vielen Fällen, die Vorrichtung neu einzumessen.

Ein Trennelement mit mindestens einen Kontaktmittel kann ebenfalls so ausgeführt sein, dass es an der vorgegebenen Position an dem Trägerband mithilfe des Kontaktmittels einen elektrischen Kontakt zwischen der mindestens einen zusätzlichen Datenleitung oder den Leiterbahnen und/oder Teilstücken der Leiterbahnen und dem Temperatursensor, Drucksensor, Luftfeuchtigkeitssensor, Lichtsensor, Gassensor, Regensensor, Akustiksensor, Mikrofon, Ultraschallgerät oder der Messeinheit herstellen kann, so dass der Temperatursensor, Drucksensor, Luftfeuchtigkeitssensor, Lichtsensor, Gassensor, Regensensor, Akustiksensor, das Mikrofon, das Ultraschallgerät oder die Messeinheit Daten, Messwerte und/oder Steuersignale mithilfe des Kontaktmittels über die mindestens eine zusätzliche Datenleitung oder über die Leiterbahnen und/oder Teilstücke der Leiterbahnen versenden oder empfangen kann.

Wird ein derartiges Trennelement an einer erfindungsgemäßen Vorrichtung mit mindestens einer zusätzlichen Datenleitung und mit einem Temperatursensor, Drucksensor, Luftfeuchtigkeitssensor, Lichtsensor, Gassensor, Regensensor, Akustiksensor, Mikrofon, Ultraschallgerät oder einer Messeinheit montiert, kann es auch wie folgt beschrieben werden:
Trennelement
- mit mindestens einem Kontaktmittel;
- wobei das Trennelement mit dem mindestens einen Kontaktmittel an einer vorgegebenen Position an dem Trägerband positioniert ist; und
- wobei das mindestens eine Kontaktmittel an der vorgegebenen Position an dem Trägerband einen elektrischen Kontakt zwischen der mindestens einen zusätzlichen Datenleitung und dem Temperatursensor, Drucksensor, Luftfeuchtigkeitssensor, Lichtsensor, Gassensor, Regensensor, Akustiksensor, Mikrofon, Ultraschallgerät oder der Messeinheit herstellt,
- so dass der Temperatursensor, Drucksensor, Luftfeuchtigkeitssensor, Lichtsensor, Gassensor, Regensensor, Akustiksensor, das Mikrofon, das Ultraschallgerät oder die Messeinheit Daten, Messwerte und/oder Steuersignale mithilfe des Kontaktmittels über die mindestens eine zusätzliche Datenleitung versenden oder empfangen kann.

Wird ein derartiges Trennelement an einer erfindungsgemäßen Vorrichtung mit einem Temperatursensor, Drucksensor, Luftfeuchtigkeitssensor, Lichtsensor, Gassensor, Regensensor, Akustiksensor, Mikrofon, Ultraschallgerät oder einer Messeinheit montiert, kann es auch wie folgt beschrieben werden:
Trennelement
- mit mindestens einem Kontaktmittel;
- wobei das Trennelement mit dem mindestens einen Kontaktmittel an einer vorgegebenen Position an dem Trägerband positioniert ist; und
- wobei das mindestens eine Kontaktmittel an der vorgegebenen Position an dem Trägerband einen elektrischen Kontakt zwischen den Leiterbahnen und/oder Teilstücken der Leiterbahnen und dem Temperatursensor, Drucksensor, Luftfeuchtigkeitssensor, Lichtsensor, Gassensor, Regensensor, Akustiksensor, Mikrofon, Ultraschallgerät oder der Messeinheit herstellt,
- so dass der Temperatursensor, Drucksensor, Luftfeuchtigkeitssensor, Lichtsensor, Gassensor, Regensensor, Akustiksensor, das Mikrofon, das Ultraschallgerät oder die Messeinheit Daten, Messwerte und/oder Steuersignale mithilfe des Kontaktmittels über die Leiterbahnen und/oder Teilstücke der Leiterbahnen versenden oder empfangen kann.

Die Anbindung der genannten Sensoren und Geräte erfolgt somit mit denselben Elementen bzw. Mitteln, mit denen die Leiterbahnen durchtrennt werden. Dies erleichtert die Zuordnung der Sensoren und Geräte zu den Messfeldern und Segmenten. Außerdem kann die mindestens eine zusätzliche Datenleitung oder die Leiterbahnen und/oder Teilstücke einer der Leiterbahnen zum Steuern und Auslesen der Sensoren und Geräte genutzt werden.

Ein derartiges Kontaktmittel kann als Metallstift, insbesondere als Federkontaktstift oder PoGo-Pin ausgeführt sein. Es kann ein Gold-, Kupfer-, Wolfram-, Rhodium- oder Aluminiumstift sein, wobei das Material des Kontaktelements auf das Material der Leiterbahnen abgestimmt ist, um Korrosion durch die Ausbildung von galvanischen Zellen zu vermeiden. Ein Kontaktelement oder Kontaktstift kann Spitzen oder Schneiden aufweisen, um die Isolierung der mindestens einen zusätzlichen Datenleitung oder eine gegebenenfalls vorhandene Isolierung und/oder Schutzbeschichtung der Leiterbahnen und/oder Teilstücke der Leiterbahnen oder das Trägerband zu durchstoßen bzw. zu durchtrennen und auf diese Weise den elektrischen Kontakt mit der Leiterbahn herzustellen.

Demnach wird hierin unter einem Trennelement unter anderem ein Gegenstand verstanden, der in seinem Inneren eine Schneidevorrichtung sowie einen Hohlraum aufweist und dazu eingerichtet wird, den Stromfluss der elektronischen Leitungen hinter der Trennstelle zu unterbinden und die Anbringung weiterer technischer Bauteile, u.a. Messeinheiten und/oder Sensoren, in einer geschützten Umgebung zu ermöglichen. Das Gehäuse eines Trennelements kann so konzipiert sein, dass auf ihm problemlos ein Aufsatz einer Einrichtung mit weiteren technischen Bauteilen aufgebracht und verbunden werden kann. Ein in einem Trennelement eingebautes technisches Bauteil kann zumindest abschnittsweise dicht und kältegeschützt untergebracht sein (die z.B. mit Styrodur ausgekleidet werden können). Das Trennsystem kann eine oder mehrere Öffnungen zur Zu- und Abfuhr der in dem Element aufzunehmenden technischen Bauteile haben. Ein Trennelement kann nummeriert und/oder mit Symbolen versehen werden, so dass seine Anbringung an der Vorrichtung in der richtigen Ausrichtung und Reihenfolge gewährleistet werden kann.

Die zuvor beschriebenen Ausführungsformen eines Trennelements oder einer Messeinheit können auch als Sensorbox ausgeführt sein. Unter einer Sensorbox wird hierin ein Gegenstand verstanden, der in seinem Innern einen Hohlraum aufweist und dazu eingerichtet ist, die Unterbringung von technischen Bauteilen, u.a. von Datenverarbeitungs- bzw. Steuereinheiten, Messinstrumenten und/oder Sensoren, in einem zumindest abschnittsweise dichten und kältegeschützten Gehäuse zu ermöglichen (die z.B. mit Styrodur ausgekleidet werden können). Eine Sensorbox ist damit eine Einrichtung zur schützenden Unter- bzw. Anbringung von technischen Bauteilen z.B. zur Messung von elektrischen Eigenschaften mithilfe einer der Leiterbahnen und/oder eines Teilstücks einer der Leiterbahnen, Luftfeuchtigkeit, Temperatur, Lichtdurchlässigkeit, zur Detektion bestimmter Gase oder von Regen, zur Aufnahme von Audio- oder Akustiksignalen oder zur Erzeugung von Ultraschall. Einer Sensorbox kann eine Datenverarbeitungs- und /oder Speichereinrichtung zugeordnet sein, mit der zumindest ein Messwert ausgewertet werden kann. Die mit den technischen Bauteilen ermittelten Messwerte oder die ggf. mit einer Datenverarbeitungseinrichtung daraus gewonnen Ergebnisse bzw. Daten können über Datenleitungen der mit der Sensorbox verbundenen Vorrichtung und/oder einem direkt mit der Sensorbox verbundenen Netzwerkkabel oder einem anderen in der Sensorbox integrierten oder mit der Sensorbox verbundenen Mittel zur Datenübertragung weitergeleitet werden.

Eine Sensorbox kann darüber hinaus so ausgestaltet werden, dass sie auf einem Trennelement aufgesetzt werden kann. Dies erleichtert die Zuordnung der Sensorbox zu den durch die Trennelemente definierten Messbereichen, Beobachtungsbereichen bzw. Segmenten und spart Platz.

Messungen an den nicht-isolierten und/oder isolierten Leiterbahnen der Vorrichtung erfordern einen elektrischen Kontakt. Neben den bereits genannten Mitteln kann dieser Kontakt auch mithilfe eines Kontaktträger- oder Anschlusselements hergestellt werden. Ein derartiges Anschlusselement kann ähnlich wie ein Trennelement aufgebaut sein oder ein Trennelement sein, das über zusätzliche Kontaktelemente verfügt.

Ein Anschlusselement zeichnet sich durch mindestens ein Kontaktelement aus, wobei das mindestens eine Kontaktelement eine Kontaktstelle aufweist, an der ein elektrischer Leiter und/oder ein Kabel angebracht werden kann. Das Anschlusselement ist zudem derart gestaltet, dass es an einer vorgegebenen Position an dem Trägerband positionierbar ist, wobei das mindestens eine Kontaktelement des Anschlusselements derart gestaltet ist, dass es an der vorgegebenen Position an dem Trägerband mindestens eine vorgegebene Leiterbahn von der Mehrzahl der Leiterbahnen an dem Trägerband oder ein Teilstück einer der Leiterbahnen elektrisch kontaktieren kann und, nachdem es an der vorgegebenen Position an dem Trägerband mindestens eine vorgegebene Leiterbahn von der Mehrzahl der Leiterbahnen an dem Trägerband oder ein Teilstück einer der Leiterbahnen elektrisch kontaktiert hat und ein elektrischer Leiter oder ein Kabel an der Kontaktstelle des Kontaktelements angebracht wurde, die mindestens eine vorgegebene Leiterbahn von der Mehrzahl der Leiterbahnen an dem Trägerband oder ein Teilstück einer der Leiterbahnen mit dem elektrischen Leiter und/oder Kabel elektrisch miteinander verbinden kann.

Wird ein derartiges Anschlusselement an einer erfindungsgemäßen Vorrichtung montiert, kann es auch wie folgt beschrieben werden:
Anschlusselement
- mit mindestens einem Kontaktmittel;
- das mindestens eine Kontaktelement eine Kontaktstelle aufweist, an der ein elektrischer Leiter und/oder ein Kabel angebracht werden kann;
- wobei das Anschlusselement an einer vorgegebenen Position an dem Trägerband positioniert ist;
- wobei das mindestens eine Kontaktelement an der vorgegebenen Position an dem Trägerband mindestens eine vorgegebene Leiterbahn von der Mehrzahl der Leiterbahnen an dem Trägerband oder ein Teilstück einer der Leiterbahnen elektrisch kontaktiert; und
- wobei das mindestens eine Kontaktelement des Anschlusselements, nachdem es an der vorgegebenen Position an dem Trägerband mindestens eine vorgegebene Leiterbahn von der Mehrzahl der Leiterbahnen an dem Trägerband oder ein Teilstück einer der Leiterbahnen elektrisch kontaktiert hat und ein elektrischer Leiter oder ein Kabel an der Kontaktstelle des Kontaktelements angebracht wurde, die mindestens eine vorgegebene Leiterbahn von der Mehrzahl der Leiterbahnen an dem Trägerband oder ein Teilstück einer der Leiterbahnen mit dem elektrischen Leiter und/oder Kabel elektrisch miteinander verbindet.

Die Leiterbahnen einer erfindungsgemäßen Vorrichtung können mit derartigen Anschlusselementen an denselben Stellen kontaktiert werden, an denen Trennelemente montiert werden können. Die Anschlüsse können daher nach Bedarf gesetzt und an die Messfelder bzw. Segmente angepasst werden. Zudem kann eine Vorinstallation von Steckern oder Steckerleisten zur Kontaktierung der Leiterbahnen oder Teilstücken der Leiterbahnen entfallen.

Ein Kontaktelement kann als Metallstift, insbesondere als Federkontaktstift ausgeführt sein. Es kann ein Gold-, Kupfer-, Wolfram-, Rhodium- oder Aluminiumstift sein, wobei das Material des Kontaktelements auf das Material der Leiterbahnen abgestimmt ist, um Korrosion durch die Ausbildung von galvanischen Zellen zu vermeiden. Ein Kontaktelement oder Kontaktstift kann direkt auf eine der Leiterbahnen an dem Trägerband aufsetzen. Es kann auch über Spitzen oder Schneiden verfügen, um eine gegebenenfalls vorhandene Isolierung und/oder Schutzbeschichtung der Leiterbahnen oder das Trägerband zu durchstoßen bzw. zu durchtrennen und auf diese Weise den elektrischen Kontakt mit der Leiterbahn herzustellen.

Eine erfindungsgemäße Vorrichtung mit mindestens einer zusätzlichen Datenleitung, die isoliert und an dem Trägerband fixiert ist und neben der Mehrzahl von nebeneinander angeordneten, nicht-isolierten und/oder isolierten elektrisch leitenden Leiterbahnen verläuft, kann ebenso ein Anschlusselement mit mindestens einem Kontaktelement umfassen, das eine Kontaktstelle aufweist, an der ein elektrischer Leiter und/oder ein Kabel angebracht werden kann, wobei das Anschlusselement derart gestaltet ist, dass es an einer vorgegebenen Position an dem Trägerband positionierbar ist und wobei das mindestens eine Kontaktelement des Anschlusselements derart gestaltet ist, dass es an der vorgegebenen Position an dem Trägerband die mindestens eine zusätzliche Datenleitung elektrisch kontaktieren kann. Das mindestens eine Kontaktelement des Anschlusselements ist dabei derart gestaltet, dass es, nachdem es an der vorgegebenen Position an dem Trägerband die mindestens eine zusätzliche Datenleitung elektrisch kontaktiert hat und ein elektrischer Leiter oder ein Kabel an der Kontaktstelle des Kontaktelements angebracht wurde, die mindestens eine zusätzliche Datenleitung mit dem elektrischen Leiter und/oder Kabel elektrisch miteinander verbinden kann.

Wird ein derartiges Anschlusselement an einer erfindungsgemäßen Vorrichtung mit mindestens einer zusätzlichen Datenleitung montiert, kann es auch wie folgt beschrieben werden:
Anschlusselement
- mit mindestens einem Kontaktmittel;
- das mindestens eine Kontaktelement eine Kontaktstelle aufweist, an der ein elektrischer Leiter und/oder ein Kabel angebracht werden kann;
- wobei das Anschlusselement an einer vorgegebenen Position an dem Trägerband positioniert ist;
- wobei das mindestens eine Kontaktelement an der vorgegebenen Position an dem Trägerband die mindestens eine zusätzliche Datenleitung elektrisch kontaktiert; und
- wobei das mindestens eine Kontaktelement des Anschlusselements, nachdem es an der vorgegebenen Position an dem Trägerband die mindestens eine zusätzliche Datenleitung elektrisch kontaktiert hat und ein elektrischer Leiter oder ein Kabel an der Kontaktstelle des Kontaktelements angebracht wurde, die mindestens eine zusätzliche Datenleitung mit dem elektrischen Leiter und/oder Kabel elektrisch miteinander verbindet.

Derartige Anschlusselemente können ebenfalls wie ein Trennelement aufgebaut sein oder ein Trennelement darstellen, das zusätzlich über die soeben beschriebenen Kontaktelemente verfügt. Ein Anschlusselement kann auch Kontaktelemente zur Kontaktierung von nicht-isolierten und/oder isolierten Leiterbahnen sowie von isolierten zusätzlichen Leiterbahnen oder Datenleitungen aufweisen.

Die mindestens eine zusätzliche Datenleitung einer erfindungsgemäßen Vorrichtung kann mit derartigen Anschlusselementen an denselben Stellen kontaktiert werden, an denen Trennelemente montiert werden können. Die Anschlüsse können daher nach Bedarf gesetzt und an die Messfelder bzw. Segmente angepasst werden. Zudem kann eine Vorinstallation von Steckern oder Steckerleisten zur Kontaktierung der mindestens einen zusätzlichen Datenleitung entfallen.

In einer Ausführungsform können Anschlusselemente auch als Anschlussboxen ausgeführt sein. Unter einer Anschlussbox wird hierin ein Gegenstand verstanden, der z.B. einen von einer Messeinheit ausgehenden Niederstrom bzw. Niederspannung durch die elektrischen Leitungen bzw. Leiterbahnen des Trägerbandes leitet bzw. führt, um z.B. eine kapazitive Feuchtemessung und Prüfung des Isolationswiderstandes auszuführen. Eine Anschlussbox kann auch zum Austausch der von Trennsystemen und/oder Sensorboxen erfassten Messwerte und/oder von Steuersignalen einer Datenverarbeitungs- bzw. Zwischenspeichereinrichtung genutzt werden. Über einen kontinuierlichen Datenaustausch mit der verbundenen Datenverarbeitungs- und Zwischenspeichereinheit sowie den damit verbundenen externen Hauptspeicher lassen sich über die Anschlussbox zudem softwareseitige Ansteuerungen der technischen Bauteile wie z.B. der Messeinheiten und der verschiedenen Sensoren für Temperatur, Licht, Druck, Luftfeuchtigkeit, Regen, Gas etc. umsetzen. In weiteren Ausführungsformen kann eine Anschlussbox selbst über eine Messeinheit, einen Sensor, ein Datenübertragungsmodul, ein Mittel zur Datenverarbeitung bzw. Speichern von Daten, Messwerten und/oder Steuersignalen verfügen. Eine Anschlussbox kann somit ebenfalls als Datenverarbeitungs- und Zwischenspeichereinrichtung bzw. als Steuereinheit und/oder Relays für Steuersignale fungieren. Dasselbe gilt für ein Anschlusselement.

Das Trägerband einer Vorrichtung kann eine Klebeschicht umfassen, mit der das Trägerband auf einer Fläche der feuchteführenden Fläche oder auf einer Fläche in der feuchteführenden Schicht befestigt werden kann. Das Trägerband kann damit ohne zusätzliche Hilfsmittel montiert bzw. installiert werden.

Das Trägerband mit der Klebeschicht kann zum Schutz der Klebeschicht eine zusätzliche Schutzfolie umfassen, die vor der Montage des Trägerbandes entfernt wird. Ein derartiger Schutz kann auch dadurch gewährleistet werden, dass das Trägerband im Zuge der Herstellung aufgewickelt wird und in Form von Rollen ausgeführt bzw. ausgeliefert wird. Diese Ausführungsform ist für die Montage besonders vorteilhaft, da das Trägerband bei der Montage nach Bedarf von der Rolle abgezogen bzw. abgerollt werden kann.

Die Vorrichtung kann demnach z.B. an einem Schräg- oder Steildach mit einer Zusatzmaßnahme (z.B. Unterspannbahn, Unterdeckbahn) montiert werden, indem die Dachziegel oder Betondachsteine entlang bzw. in der Nähe der Traufe hochgeschoben werden und so der Blick auf die Zusatzmaßnahme frei wird. Das Trägerband mit der Mehrzahl von Leiterbahnen kann dann streckenweise vom Klebschutz befreit und auf die sichtbare Zusatzmaßnahme aufgeklebt werden. An den Sparren oder der Konterlattung kann das Trägerband seitlich hochgezogen werden und quer über die Sparren oder die Konterlattung zum nächsten Feld zwischen den Sparren oder der Konterlattung gelegt werden. Eine Montage des Trägerbandes ist auch auf einer innenseitigen Bahn (z.B. Luftdichtheitsschicht, Dampfbremse, Dampfsperre) möglich. Das Trägerband wird z.B. von außen auf die innere Bahn parallel oder nahezu parallel zur Traufe aufgeklebt und schlaufenförmig über die Dachsparren gezogen. So kann Feld für Feld mit der Vorrichtung ausgerüstet werden. Neben einem Sparren oder einer der Konterlatten kann man anschließend eine Trennstelle setzen, die mindestens eine der Leiterbahnen unterbricht. Die Trennung der Leiterbahn dient später der Lokalisierung der Signalursache. Dazu kann ein Unterteil eines Trennelements z.B. an einer Seitenfläche des Sparrens oder der Latte montiert werden. Das Trägerband kann im Anschluss über das Unterteil geführt und dabei auf das Unterteil geklebt werden, bevor das Oberteil in das Unterteil eingeführt wird. Das Trägerband wird in derartigen Ausführungsformen nicht nur durch das Trennelement geklemmt, sondern auch durch die Klebeschicht in seiner Position gehalten.

Die Klebeschicht stellt außerdem eine Barriere für Feuchtigkeit bzw. Wasser dar und somit sicher, dass die sich ausbreitende Feuchtigkeit bzw. das sich ausbreitende Wasser über die Seite des Trägerbandes mit den Leiterbahnen läuft und nicht unter dem Trägerband durchläuft ohne die Leiterbahnen zu benetzen.

Die Klebeschicht kann z.B. einen (Rein-)Acrylatklebstoff enthalten.

In weiteren Ausführungsformen kann die Vorrichtung über eine Energieversorgungseinheit wie z.B. eine Photovoltaikanlage, Solarzelle oder Batterie/ Akku verfügen. Die Energieversorgungseinheit kann derart gestaltet sein, dass sie einen Betrieb der Messeinheit und/oder der Sensoren und/oder Speicher und/oder der Mittel zur Datenverarbeitung und/oder Datenübertragung ermöglicht. Die Energieversorgungseinheit kann bei der Montage bzw. Installation der Vorrichtung demnach so aufgestellt werden und an die Vorrichtung angeschlossen werden, dass sie einen autarken Betrieb der Vorrichtung bzw. der daran angeschlossenen Geräte ermöglicht. Eine zusätzliche Energie- bzw. Stromversorgung muss nicht bereitgestellt werden. Auf diese Weise können Gebäude oder Gebäudestrukturen überwacht werden, die über keine oder eine nur schwer zugängliche Stromversorgung verfügen.

Zum Beispiel kann eine Batterie oder ein Akku mit einer Leistung von 10-20 Watt und einer Kapazität von 7,5 - 28 Ah eingesetzt werden. Ein Solarmodul kann entsprechende Befestigungseinrichtungen für das Modul oberhalb der Dacheindeckung umfassen und ähnliche Leistungsspezifikationen aufweisen. Bevorzugterweise wird ein möglichst kleines, unauffälliges Modul eingesetzt. Ein Solarmodul kann z.B. auch als Folie ausgeführt sein, die auf der Dachoberfläche angebracht bzw. aufgeklebt wird.

Ferner wird die Aufgabe gelöst durch eine Vorrichtung zum Detektieren und Lokalisieren von Feuchtigkeit auf einer feuchteführenden Fläche und/oder in einer feuchteführenden Schicht, die aus zwei oder mehr der soeben beschriebenen erfindungsgemäßen Vorrichtungen aufgebaut ist oder werden kann, z.B. aus einer ersten und einer zweiten Vorrichtung. Dazu kann ein Verbindungselement bereitgestellt werden, das z.B. als Steckverbindung mit einem männlichen und einem weiblichen Teil ausgeführt sein kann. Das Verbindungselement ist dabei derart ausgebildet, dass mit ihm die erste und die zweite Vorrichtung derart miteinander verbunden werden können, dass mindestens eine der Leiterbahnen oder ein Teilstück einer der Leiterbahnen und/oder mindestens eine zusätzliche Datenleitung der ersten Vorrichtung mit mindestens einer der Leiterbahnen oder ein Teilstück einer der Leiterbahnen und/oder der mindestens einen zusätzlichen Datenleitung der zweiten Vorrichtung elektrisch miteinander verbunden werden können.

Mithilfe derartiger Verbindungselemente oder Steckerleisten können nicht nur mehrere Systeme miteinander verkoppelt werden, sondern auch funktionsfähige Überbleibsel weiterverarbeitet werden. Verschnitt bzw. verschnittenes Material kann somit wiederverwendet werden.

Derartige Verbindungselemente können auch in Trennelemente mit einer integrierten Messeinheit und/oder einem integrierten Anschlusselement integriert sein. Zudem kann ein Anschlusselement oder eine Anschlussbox derart ausgeführt sein, dass sie z.B. bei längeren Dachflächen oder Gebäudestrukturen als Verbindungsstelle zwischen zwei der zuvor beschriebenen Vorrichtungen eingesetzt werden kann. Funktionsfähige Materialreste können damit nicht nur miteinander verbunden werden. Es ist ebenso möglich, dass eine Messeinheit oder ein Anschlusselement mit zwei Vorrichtungen oder funktionsfähigen Resten einer erfindungsgemäßen Vorrichtung verbunden und zur Feuchteüberwachung genutzt werden. Auf diese Weise kann die Anzahl der Messeinheiten reduziert bzw. die Reichweite einer Messeinheit erhöht werden.

Des Weiteren wird die Aufgabe gelöst durch ein Verfahren zum Detektieren und Lokalisieren von Feuchtigkeit auf einer feuchteführenden Fläche und/oder in einer feuchteführenden Schicht, bei dem zunächst eine erfindungsgemäße Vorrichtung bereitgestellt wird. Die Vorrichtung wird auf der feuchteführenden Fläche und/oder in der feuchteführenden Schicht angebracht und mindestens eine der Leiterbahnen der Vorrichtung wird mithilfe des mindestens einen Trennelements an einer vorgegebenen Position an dem Trägerband durchtrennt. Das Durchtrennen der mindestens einen Leiterbahn stellt dabei ein Unterbrechen des elektrischen Kontakts zwischen den Teilstücken der mindestens einen Leiterbahn dar, die sich auf gegenüberliegenden Seiten der vorgegebenen Position befinden. Darüber hinaus wird ein Schwellwert vorgegeben. Mithilfe mindestens einer der Leiterbahnen oder eines Teilstücks einer der Leiterbahnen der Vorrichtung wird eine Messung einer elektrischen Eigenschaft durchgeführt, wobei der gemessene Wert der elektrischen Eigenschaft oder ein aus dem gemessenen Wert abgeleiteter Wert mit dem vorgegebenen Schwellwert verglichen wird. Über- oder unterschreitet der gemessene Wert oder der aus dem gemessenen Wert abgeleitete Wert den vorgegebenen Schwellwert, wird Feuchtigkeit detektiert und mithilfe der vorgegebenen Position des mindestens einen Trennelements, der Information, welche der Leiterbahnen an der vorgegebenen Position durchtrennt wurden, und der zur Messung verwendeten mindestens einen der Leiterbahnen oder des zur Messung verwendeten mindestens einen Teilstücks einer der Leiterbahnen wird die detektierte Feuchtigkeit auf der feuchteführenden Fläche und/oder in der feuchteführenden Schicht lokalisiert.

Die elektrische bzw. elektrophysikalische Eigenschaft einer der Leiterbahnen oder eines Teilstücks der Leiterbahnen kann sich dabei auf eine Eigenschaft einer einzelnen Leiterbahn oder eines Teilstücks einer Leiterbahn beziehen. Sie kann jedoch auch eine Eigenschaft zweier oder mehrerer Leiterbahnen und/oder Teilstücke von Leiterbahnen betreffen bzw. die entsprechenden Zwischenräume. Sie kann unter anderem
- einen elektrischen (ohmschen) Widerstand oder den Leitwert bzw. die Leitfähigkeit einer Leiterbahn oder eines Teilstücks einer der Leiterbahnen, und/oder
- einen elektrischen (ohmschen) Widerstand oder den Leitwert zwischen zwei Leiterbahnen oder Teilstücken von Leiterbahnen, und/oder
- eine Kapazität einer oder mehrerer Leiterbahnen bzw. Teilstücke von Leiterbahnen, und/oder

- eine Anzahl von Ladezyklen, die mit einer oder mehrerer Leiterbahnen bzw. Teilstücken von Leiterbahnen in einer vorgegebenen Zeitspanne durchgeführt werden können, und /oder
- eine Induktivität einer oder mehrerer Leiterbahnen bzw. Teilstücke von Leiterbahnen, und/oder
- eine Resonanzfrequenz, und/oder
- eine Tief- oder Hochpass-Abschneide-Frequenz, und/oder
- eine Phasenverschiebung, und/oder
- eine Phasenverschiebungs-Abschneidefrequenz und/oder
- eine Zeitspanne, die ein elektrisches Signal zur Propagation durch mindestens eine der Leiterbahnen oder ein Teilstück einer der Leiterbahnen benötigt,
darstellen.

Durch die Vorgabe eines Schwellwerts ist es möglich, mit der Auswertung einer Messung bzw. eines Messwerts eine Leckage zu erkennen und zu orten. Es können ebenso mehrere Messwerte ausgewertet werden, bevor ein Alarm ausgelöst wird oder Notfall- bzw. Reparaturmaßnahmen eingeleitet werden.

Je nachdem ob der Einfluss von Feuchtigkeit den Wert einer Messung erhöht oder erniedrigt, kann ein Unter- oder Überschreiten des Schwellwerts den Kontakt mindestens einer der Leiterbahnen oder mindestens eines Teilstücks einer der Leiterbahnen mit Feuchtigkeit bzw. Wasser anzeigen. Der Widerstand zwischen zwei nicht-isolierten Leiterbahnen bzw. zwei nicht-isolierten Teilstücken wird in der Regel durch den Kontakt erniedrigt, wenn die beiden Leiterbahnen oder Teilstücke durch die Feuchtigkeit miteinander in elektrischen Kontakt gebracht bzw. kurzgeschlossen werden. Ein Unterschreiten eines gewissen Widerstandswerts zeigt in diesem Fall das Kurzschließen der Leiterbahnen bzw. der Teilstücke an. Anders verhält es sich mit der Kapazität. Werden zwei Leiterbahnen oder Teilstücke von Leiterbahnen durch Feuchtigkeit kurzgeschlossen, wird durch eine Messung der Kapazität einer der Leiterbahnen oder eines Teilstücks einer der Leiterbahnen in der Regel eine erhöhte Kapazität gemessen. Hier zeigt das Überschreiten eines Schwellwerts das Kurzschließen der Leiterbahnen oder Teilstücke an.

Das Verfahren basiert darauf, dass Feuchtigkeit den Wert einer Messung einer elektrischen Eigenschaft beeinflusst. Das Verfahren kann demnach nicht nur zum Erkennen und Orten von Feuchtigkeit bzw. Wasser angewandt werden, sondern auch zum Erkennen und Orten dielektrischer und/oder elektrisch leitender bzw. leitfähiger Fluide oder Medien.

Bei der Montage der Vorrichtung wird mithilfe mindestens eines Trennelements mindestens eine der Leiterbahnen von der Mehrzahl von Leiterbahnen an dem Trägerband durchtrennt. Dadurch wird die zu überwachende feuchteführende Fläche (z.B. eine Dachfläche bzw. die Unterspannbahn eines Daches) und/oder Schicht in mindestens zwei unterschiedliche Messfelder, Beobachtungsbereiche bzw. Segmente unterteilt. Im Falle einer Leckage, bei der mindestens ein Messwert oder eine Änderung eines Messwerts das Eindringen von Feuchtigkeit anzeigt, kann anhand dieser Unterteilung der Fläche und/oder Schicht in Messfelder, Beobachtungsbereiche bzw. Segmente auf eine Leckage sowie eine Wassereintrittsstelle in dem Messfeld, Beobachtungsbereich bzw. Segment logisch bzw. von einer Auswerteeinheit oder einer Einheit mit Datenverarbeitung geschlossen werden, in dem der Messwert bzw. die Änderung des Messwerts erfasst wurde. Die Leckage muss dabei nicht in dem Messfeld, Beobachtungsbereich bzw. Segment liegen, sondern kann auch in einem benachbarten Messfeld, Beobachtungsbereich bzw. Segment liegen. Wird hingegen in zwei benachbarten Messbereichen Feuchtigkeit detektiert, ist zu vermuten, dass sich das Leck in dem Bereich oder in der Nähe des Bereichs befindet, in dem sich die Messfelder berühren oder überlappen.

Die Messung der elektrischen Eigenschaft kann in regelmäßigen Abständen wiederholt werden. Je nach Anwendungsfall kann das Zeitintervall nur wenige Millisekunden, Sekunden, Minuten, Stunden, Tage oder Wochen betragen. Die Messungen können auch in unregelmäßigen Abständen erfolgen. Wenn z.B. aufgrund der Messwerte eines Temperatursensors, Drucksensor und/oder Luftfeuchtigkeitssensors und/oder Lichtsensors und/oder Regensensors geschlossen werden kann, dass keine Regenfälle zu erwarten sind, kann die Feuchteüberwachung mithilfe der Vorrichtung in einen Ruhemodus geschaltet werden, in dem entweder keine Messungen durchgeführt werden oder die Messungen zumindest mit einem größeren zeitlichen Abstand zueinander wiederholt werden.

In einer Ausführungsform des Verfahrens kann die Messung auch permanent bzw. kontinuierlich erfolgen. Dazu können die elektrischen Leiter oder Leiterbahnen des Trägerbandes permanent bzw. kontinuierlich mit Niederspannung oder Niederspannungsimpulsen versorgt werden. Gelangt bspw. im Falle einer Leckage Feuchtigkeit bzw. ein elektrisch leitendendes Fluid, wie z.B. Wasser, auf nicht-isolierte elektrische Leiter oder Leiterbahnen des Trägerbandes, was dort z.B. zu einem Kurzschluss der elektrischen Leiter bzw. Leiterbahnen führen kann, kann mindestens ein Messwert erfasst werden, der es ermöglicht, die eindringende Feuchtigkeit zu erkennen und anhand dessen auf eine Leckage zu schließen. Die Leckage oder Wassereintrittsstelle kann mithilfe der Segmente, Messfelder bzw. Messbereiche, die mit dem mindestens einem Trennelement bzw. dem durch das mindestens eine Trennelement zur Verfügung gestellte Trennsystem bei der Montage der Vorrichtung definiert werden, geortet bzw. lokalisiert werden. Die Ortung bzw. Lokalisierung besteht dabei in einer Information, dass sich die Leckage bzw. Wassereintrittsstelle in dem entsprechenden Segment, Messfeld bzw. Messbereich oder zumindest in der Nähe dieses Bereichs befinden muss. Durch eine permanente Feuchtigkeitsermittlung zwischen Dacheindeckung und Unterspannbahn, die mit einer Temperaturermittlung kombiniert werden kann, kann auch eine substanz- und gesundheitsgefährdende Schimmelbildung und/oder ein erhöhter Wärmedurchgang unterhalb der Dacheindeckung frühzeitig festgestellt werden. Dadurch können u.a. erhöhte Energiekosten erkannt und vermieden werden.

Die eingehenden Messdaten können von einer Zwischenspeichereinheit an einen externen Hauptspeicher weitergeleitet werden, welcher eine durchgängige Datenspeicherung durchführt. Wird die Datenübertragung im Störfall unterbrochen, kann die Datenspeicherung auf der Zwischenspeichereinheit weitergeführt werden. Die Zwischenspeichereinheit kann über eine oder mehrere Schnittstellen verfügen, um über ein Netz (wie z.B. das Internet, ein Funk- oder Handynetz, ein Bluetooth-Netzwerk, ein WLAN-Netzwerk, LoRa-WAN oder LPWAN wie z.B. ein NB-loT) zu kommunizieren und Daten austauschen zu können. Die Datenverarbeitungseinrichtung und/oder Zwischenspeichereinheit kann mit einer Photovoltaikzelle und einer Batterie / einem Akku verbunden werden und dadurch autark betrieben werden. Überdies kann die Datenverarbeitungsreinrichtung und/oder Zwischenspeichereinheit auch über ein Netzteil mit Stecker an einen 220 Volt Stromanschluss oder einen Energiespeicher für regenerative Quellen angeschlossen werden.

Mithilfe des mindestens einen Trennelements kann z.B. ein Leiterbahnenpaar der Vorrichtung durchtrennt werden. Das von Feuchte berührte Leiterpaar kann besonders präzise z.B. mithilfe einer Widerstands- oder resistiven Messung ausgewertet und damit ein Feuchtesignal erkannt werden.

Um ein Schräg- oder Steildach mit dem vorgeschlagenen Verfahren zu überwachen, kann zunächst damit begonnen werden, den Verlauf des Trägerbandes und der Trennelemente zu planen. Zur Montage kann dann die Dachaußenhülle geöffnet und die Dachunterspannebene zugänglich gemacht werden. Das Trägerband kann abschnittsweise fortschreitend auf die Unterspannebene bzw. Unterspannbahn aufgebracht werden. Die Trennelemente können dabei an den geplanten bzw. vorgegebenen Positionen geeignet eingesetzt werden, um die Leiter- bzw. Leitungsbahnen gezielt zu durchtrennen. Die Trennstellen werden im Anschluss dokumentiert. Das Trägerband wird elektrisch kontaktiert bzw. mit einer Mess- oder Auswerteeinheit verbunden. Der von der Mess- oder Auswerteeinheit erfasste Signalverlauf an allen auswertbaren Leiterbahnen oder Teilstücken von Leiterbahnen bzw. Leitungen wird beobachtet bzw. überwacht. Auftretende Signale durch Kontakt mit Wasser oder Feuchtigkeit werden analysiert. Anhand des Musters der Bahnen und der Trennelemente kann logisch auf die Lokalisierung der Feuchtedurchdringung und des Feuchteablaufs geschlossen werden.

Die Beobachtung(en) können über ein User-Interface, eine App, via E-Mail oder SMS kommuniziert werden. Über diese Interfaces kann ggf. auch eine Warnung, ein Alarm oder eine Schadensmeldung ausgegeben werden. Derartige Mitteilungen können dabei mit Bezug auf die entsprechenden Segmente, Messfelder oder Messbereiche ausgegeben werden. Eine begleitende bzw. simultane Interpretation der Messergebnisse anhand der Uhrzeit und anderer Informationen ist ebenfalls möglich. Die Feuchtigkeitsüberwachung stellt somit einen Monitoring-Service bzw. einen Digital-Maintenance-Service dar, der detaillierte Schadensmeldungen für z.B. Hausbesitzer, Verwalter, Dachdecker, Installateure, Maurer oder andere Handwerker ermöglicht. Eine Schadensmeldung enthält z.B. Informationen über die Adresse des beschädigten Daches, den betroffenen Abschnitt des Daches, die Art der Ziegel, die verbaut wurden, das Baujahr, die Art der Lattung, den Allgemeinzustand des Daches etc. Ein Handwerker muss den Schaden deshalb nicht vor dem Beheben des Schadens begutachten, um zu entscheiden, welches Werkzeug er dafür braucht, sondern kann gleich zur Reparatur übergehen.

Zur Durchführung einer weiteren Ausführungsform des vorgeschlagenen Verfahrens können z.B. auf der Oberseite eines reißfesten PE-Verbundmateriales mit selbstklebender Unterseite, nachfolgend "Klebeband", zwischen 6 bis 46 nicht-isolierte und/oder isolierte elektrische Leitungen bzw. Leiterbahnen angebracht werden. Die Ausgestaltung der Anzahl der Leitungen kann je nach Breite der Klebebänder variieren. Bereits mit zwei Leitungen bzw. Leiterbahnen kann ein Leckageortungsbereich festgelegt werden. Daher können die anderen elektrischen Leitungen bzw. Leiterbahnen u.a. als Datenleiter für die Übermittlung weiterer Messdaten z.B. an eine Zwischenspeicher- oder eine externe Hauptspeichereinheit dienen.

Das beschriebene Sensorprinzip arbeitet in der Regel im Bereich der Klein- bzw. Niederspannung. Die Anbringung bzw. Montage kann deshalb im Plug-And-Play-Verfahren erfolgen. Die Vorrichtung kann zu diesem Zweck so ausgelegt werden, dass ihre Bestandteile ohne weitere Einstellungen von einer Fachkraft für Dach-, Wand- und Abdichtungstechnik oder Solartechnik im Plug-And-Play-Verfahren an die Datenverarbeitungs- und Zwischenspeichereinheit angeschlossen und mithilfe einer Kontrolloberfläche direkt in Betrieb genommen werden können. Dadurch besteht sowohl bei Neuinstallationen als auch bei allen Umbau- und Instandsetzungsarbeiten kein Bedarf der Hinzuziehung einer Elektrofachkraft. Die Durchführung des vorgeschlagenen Verfahrens erfordert deshalb einen geringen Montage-, Installations- und Instandhaltungsaufwand.

Die Möglichkeit, Zugänge zu einer Kontrolloberfläche zu definieren, kann einem Administrator zugeordnet werden. Ein Zugang kann für eine Person autorisiert werden, aber bspw. auch für eine Gruppe von Angestellten. Innerhalb einer bestimmten Gruppe können darüber hinaus unterschiedliche Berechtigungsstufen vergeben werden. Über die Kontrolloberfläche ist der Zugang zur Datenstruktur einer einzigen oder gleich mehrerer Dachoberflächen realisierbar.

Zudem können die verwendeten Klebebänder und elektrischen Leitungen bzw. Leiterbahnen korrosions- und witterungsbeständig ausgeführt werden, wodurch die Witterungs- und Altersbeständigkeit im Vergleich zu alternativen Verfahren positiv beeinflusst wird. Die Haltbarkeit der Materialien kann dabei auf eine Temperaturbeständigkeit zwischen -40 und +80 Grad Celsius und einer Luftfeuchtigkeit von bis zu 100 Prozent ausgelegt werden. Die verwendeten schutzisolierten Kabelverbindungen und Gehäuse können zu diesem Zweck wasserdicht und für den Außenbereich geeignet ausgelegt werden.

Das vorgestellte Verfahren ist grundsätzlich bei allen Dachtypen im Steildachbereich einsetzbar, sofern eine Zusatzmaßnahme (bspw. Unterspannbahn oder Unterdeckbahn) vorhanden ist. Eine Anwendung bei geneigten belüfteten Flachdachflächen, welche über eine zweite wasserführende Schicht an der Belüftungsebene verfügen, ist ebenfalls möglich. Des Weiteren ist eine Anbringung unterhalb von Fassadenbekleidungen im unteren Anschlussbereich der Außenfassade realisierbar. Weitere Ausführungs- bzw. Anwendungsbeispiele umfassen Balkonanschlüsse, Dachübergänge und Wandanschlüsse an Kaminen.

Das Verfahren kann ferner zur Früherkennung von Materialermüdung und/oder Verschleiß eines Daches und/oder einer Gebäudestruktur, wobei die Vorrichtung auf einer feuchteführenden Fläche und/oder in einer feuchteführenden Schicht des Daches und/oder der Gebäudestruktur angebracht wird. Das Erreichen des kapillaren Sättigungspunkts des Daches oder der Gebäudestruktur wird erkannt, falls entlang der gesamten Vorrichtung Feuchtigkeit detektiert wird.

Eine erfindungsgemäße Vorrichtung kann demnach nicht nur zum Erkennen und Orten von Leckagen verwendet werden. Es kann auch zur Überprüfung des Allgemeinzustands eines Daches oder einer Gebäudestruktur genutzt werden. Wird das Erreichen des kapillaren Sättigungspunkts erkannt, kann diese Information zusammen mit Datum, Temperatur- und Umgebungsverhältnissen und ggf. anderer Sensordaten der Vorrichtung abgespeichert werden. Dies ermöglicht eine Auswertung der abgespeicherten Daten, die in Echtzeit und/oder zu einem späteren Zeitpunkt erfolgen kann.

Wird der Sättigungspunkt eines Daches oder einer Gebäudestruktur nur bei extremen Wetterereignissen, wie z.B. einer langanhaltenden Land- oder Starkregen erreicht, besteht in der Regel kein Handlungsbedarf. Geschieht dies jedoch bei Regenfällen, bei denen das Erreichen des Sättigungspunkts eines Daches oder einer Gebäudestruktur nicht zu erwarten ist, kann dies als Hinweis auf Materialermüdung und/oder Verschleiß verstanden werden. Ebenso kann die Häufigkeit des Erreichens des Sättigungspunkts auf Materialermüdung und/oder Verschleiß hindeuten. Werden in einer Region mehrere Dächer und/oder Gebäudestrukturen überwacht, die im Hinblick auf ihren Sättigungspunkt vergleichbar sind, kann ein Vergleich der erreichten Sättigungspunkte Aufschluss darüber geben, ob das Erreichen eines kapillaren Sättigungspunktes auf ein langanhaltendes Wetterphänomen in der Region zurückzuführen ist oder auf Materialermüdung und/oder Verschleiß eines Daches und/oder Gebäudeteils. Letzteres kann z.B. der Fall sein, wenn alle anderen oder zumindest viele andere Dächer ihren kapillaren Sättigungspunkt nicht erreicht haben.

Das Verfahren nutzt eine erfindungsgemäße Vorrichtung, um Informationen darüber zu gewinnen, ob ein Dach oder eine Gebäudestruktur gegebenenfalls saniert oder neu aufgebaut werden muss, auch wenn keine Beschädigung oder Leckage des Daches und/oder des Gebäudeteils vorliegt. Neben Dächern können so auch Gebäudestrukturen wie z.B. Betonwannen, Sauna- oder andere Feuchträume überwacht werden. Ähnliches gilt - *mutatis mutandis -* für die zuvor beschriebenen Verfahren. Eine erfindungsgemäße Vorrichtung kann auch als Monitoring-Band bezeichnet werden, wobei sich die Überwachung bzw. das Monitoring, das mit dem Band durchgeführt werden kann, sowohl auf den Allgemeinzustand eines Daches bzw. einer Gebäudestruktur als auch auf die oben beschriebene Feuchteüberwachung und Leckageortung bezieht.

Das Verfahren kann einen vorgegebenen Schwellwert nutzen. Der vorgegebene Schwellwert kann aber auch mithilfe einer Messung einer elektrischen Eigenschaft einer Leiterbahn oder eines Teilstücks einer der Leiterbahnen abgeleitet werden. Die Vorrichtung kann somit im Rahmen des Verfahrens eingerichtet bzw. kalibriert werden und an örtliche Gegebenheiten, die zu überwachende Gebäudestruktur und die Eigenschaften der Vorrichtung, die durch die Montage der Vorrichtung stark beeinflusst werden können, angepasst werden.

Eine Leckage oder Feuchteüberwachung kann erfindungsgemäß auch anhand einer Reihe von in zeitlicher Abfolge aufgenommener Ereignisse oder zeitlich aufeinanderfolgender Messwerte erkannt werden. Dabei stellt ein Ereignis das Erkennen von Feuchtigkeit mithilfe der Vorrichtung dar. Die Dauer und Anzahl der Ereignisse sowie deren zeitliche Abfolge kann dazu genutzt werden, um zu erkennen, ob die Beschädigung der Dachhaut bzw. der Dacheindeckung größer oder kleiner ist und ermöglicht damit eine Einschätzung der Notwendigkeit der Durchführung von Notfallmaßnahmen.

Diese Daten können u.a. an eine Zwischenspeichereinrichtung und/oder eine externe Hauptspeichereinheit übermittelt und umgehend softwareseitig in Echtzeit analysiert werden. Damit kann mit dem Verfahren direkt auf die Schwere der Undichtigkeit geschlossen werden und eine automatisierte Alarmmeldung, mit einer zeitlichen Einschätzung der Notwendigkeit zur Durchführung von Notfallmaßnahmen ausgeführt werden. Nachdem die Alarmmeldung versandt worden ist, kann ein automatischer Reset bzw. Neustart erfolgen, d.h. die Alarmierung erfolgt erneut, sobald die elektrischen Leiterbahnen bzw. Leitungen getrocknet sind und erneut Feuchtigkeit auf die Vorrichtung gerät.

Umfasst die Vorrichtung entsprechende Sensoren, kann zudem durch eine permanente Messung der Luftfeuchtigkeit, des Niederschlags, des Luftdrucks und der Temperatur eine Fehlermeldung, die durch ein Durchtropfen aufgrund des Erreichens des kapillaren Sättigungspunkts der Dacheindeckung, was z.B. aufgrund einer langanhaltenden hohen Luftfeuchtigkeit oder eines langanhaltenden Regengusses verursacht wird, ausgeschlossen werden. Des Weiteren kann durch die permanente Messung eine mögliche Fehlermeldung, z.B. aufgrund von Flugschnee unterhalb der Dacheindeckung (auch Blasschnee genannt), durch eine softwareseitige Korrektur des damit einhergehenden Temperaturabfalls ebenfalls ausgeschlossen werden.

In weiteren Ausführungsformen ist es möglich, dass eine Position am Trägerband vorgegeben wird, wobei mindestens eine der Leiterbahnen an der vorgegebenen Position durch Stanzen eines Loches oder Langloches durchtrennt wird. Das Durchtrennen der mindestens einen Leiterbahn stellt dabei ein Unterbrechen des elektrischen Kontakts zwischen den Teilstücken der mindestens einen Leiterbahn dar, die sich auf gegenüberliegenden Seiten der vorgegebenen Position befinden.

Leiterbahnen können demnach auch ohne den Einsatz eines Trennelements durchtrennt werden. Die Montage der Vorrichtung kann dadurch vereinfacht werden.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: ein Monitoring-Band mit einem Trägerband, an dem 10 nebeneinander angeordnete Leiterbahnen, 3 Trennelemente sowie ein Anschlusselement angebracht sind;
- Fig. 2: verschiedene Ansichten und Montagezustände eines Abschnitts des in Fig. 1 gezeigten Monitoring-Bandes;
- Fig. 3: verschiedene Ansichten eines Abschnitts eines weiteren Monitoring-Bandes mit einem Trennelement, das an einem Trägerband mit 8 nebeneinander angeordneten Leiterbahnen und einer 4-adrigen Datenleitung angebracht ist;
- Fig. 4: verschiedene Ansichten eines Abschnitts eines weiteren Monitoring-Bandes mit einem Anschlusselement, das an einem Trägerband mit 10 nebeneinander angeordneten Leiterbahnen angebracht ist;
- Fig. 5: verschiedene Querschnitte von Abschnitten eines weiteren Monitoring-Bandes mit 8 nebeneinander angeordneten Leiterbahnen und verschiedenen Trenn- elementen;
- Fig. 6: einen Abschnitt eines Monitoring-Bandes, das auf einer Unterspannbahn eines geneigten Daches mit Dachsparren nachgerüstet wurde;
- Fig. 7: eine Draufsicht auf einen Abschnitt eines Monitoring-Bandes mit gestanzten Trennstellen;
- Fig. 8: einen Abschnitt einer weiteren Ausführungsform eines Monitoring-Bandes, der zwischen zwei Anschlusseinheiten liegt;
- Fig. 9: einen Abschnitt einer weiteren Ausführungsform eines Monitoring-Bandes mit mehrfach durchtrennten Leiterbahnen; und
- Fig. 10: ein System 1000 mit drei parallelen Monitoring-Bändern.

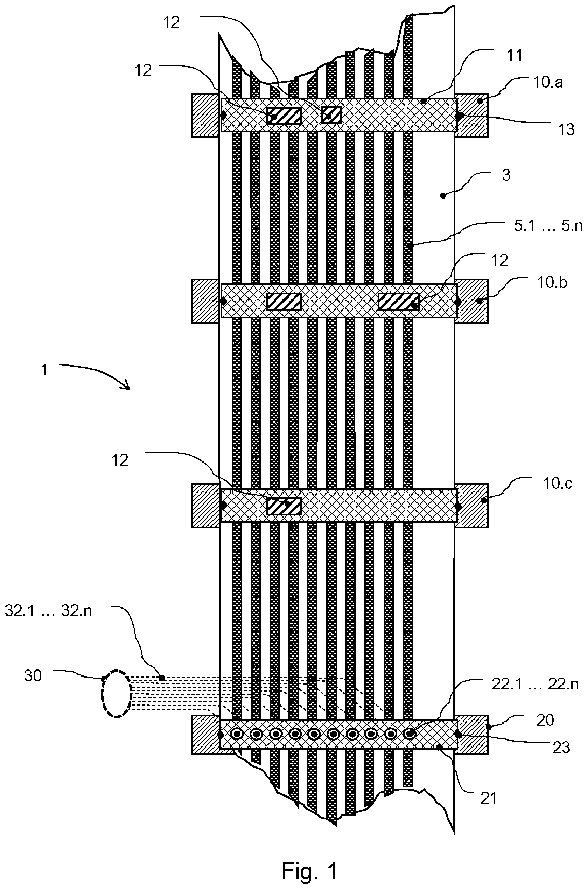

Fig. 1 zeigt ein Monitoring-Band 1, d.h. eine Ausführungsform einer erfindungsgemäßen Vorrichtung zum Erkennen und Orten von Feuchtigkeit auf einer feuchteführenden Fläche und/oder in einer feuchteführenden Schicht. Das Monitoring-Band 1 umfasst dabei einen Teil eines Trägerbandes 3 mit einer Mehrzahl von nebeneinander angeordneten bzw. parallelen Leiterbahnen 5. Die Leiterbahnen 5 stellen elektrische Leiter dar, die nicht isoliert sind. Sie sind von 1 bis n durchnummeriert, d.h. mit den indizierten Bezugszeichen 5.1 bis 5.n versehen, wobei in diesem Ausführungsbeispiel n=10 ist. In anderen Ausführungsformen (nicht dargestellt) können die Leiterbahnen 5 isoliert oder teilweise isoliert sein. Weitere Ausführungsformen (nicht dargestellt) können sowohl nicht-isolierte als auch isolierte Leiterbahnen 5 aufweisen.

An dem Trägerband 3 sind drei Trennelemente 10 montiert. Die Trennelemente 10 werden mit den Indizes a, b und c voneinander unterschieden und sind dementsprechend mit indizierten Bezugszeichen 10.a, 10.b und 10.c versehen. Die Trennelemente 10 sind zweiteilig aufgebaut, an die Breite des Trägerbandes 3 angepasst und umfassen Klemmelemente 11 sowie Verriegelungselemente 13. Die Klemmelemente 11 werden mithilfe von je zwei Verriegelungselementen 13 form- und kraftschlüssig in den Trennelementen 10 gehalten, wobei sie das Trägerband 3 mit der Mehrzahl von Leiterbahnen 5 einklemmen. Das Trägerband ist somit gegen Verrutschen gesichert.

Zusätzlich umfassen die Trennelemente 10a, 10.b und 10.c Schneiden 12, mit denen - je nach Breite der Scheiden 12, eine oder zwei der Leiterbahnen 5 durchtrennt werden können. Die Schneiden 12 und die Klemmelemente 11 sind einstückig ausgeführt, so dass beim Einrasten der Klemmelemente 11 in die Trennelemente 10 die Leiterbahnen, die unter den Schneiden 12 liegen, durchtrennt werden. Dadurch entstehen Teilstücke von Leiterbahnen 5 mit einem Abstand von ca. 1 mm. Die Teilstücke einer Leiterbahn 5 werden dabei derart getrennt, dass der elektrische Kontakt zwischen den Teilstücken der Leiterbahn 5 unterbrochen wird bzw. kein elektrischer Kontakt zwischen den Teilstücken besteht, die sich auf gegenüberliegenden Seiten der Schneide 12 bzw. des Trennelements 10 bzw. der Position des Trennelements 10 befinden. Dementsprechend besteht die Schneide 12 aus einem nichtleitfähigen Kunststoff, und zwar aus einem glasfaserverstärkten Epoxy-Material.

In anderen Ausführungsbeispielen können die Schneiden 12 auch nach der Montage der Trennelemente 10 und der Klemmelemente 11 in entsprechende Aussparungen der Klemmelemente 11 eingeführt und darin eingerastet werden.

Das Monitoring-Band 1 umfasst zudem ein Anschlusselement 20 mit einer Mehrzahl von Kontaktstiften 22 mit Kontaktstellen für elektrische Leiter 32. Über die Kontaktstifte 22 und Kontaktstellen kann jeder der Leiter 32 an eine der Leiterbahnen 5 angeschlossen werden. Dementsprechend sind die Kontaktstifte 22 sowie die Leiter 32 von 1 bis n durchnummeriert und mit den indizierten Bezugszeichen 22.1 ... 22.n sowie 32.1 ... 32.n versehen. Die Kontaktstellen stellen dabei den oberen Teil der Kontaktstifte 22 dar, die den elektrischen Kontakt zwischen den an den Kontaktstellen angeschlossenen Leitern 32 und den Leiterbahnen 5 herstellen.

Die elektrischen Leiter 32 sind Bestandteil einer mehradrigen Anschlussleitung 30. Die Anschlussleitung 30 führt zu einer Sensorbox (nicht gezeigt) mit einer Steuer- bzw. Messeinheit. Die Sensorbox kann über die Anschlussleitung 30 bzw. die elektrischen Leiter 32 eine Niederspannung an die Leiterbahnen 5 anlegen, um mithilfe der Leiterbahnen 5 bzw. eines Teilstücks der Leiterbahnen 5 eine elektrische Eigenschaft zu messen.

Die Trennelemente 10 können an beliebigen Positionen am Trägerband 3 montiert werden. Aufgrund der Länge und Breite der Trennelemente 10 können zwei Trennelemente 10 jedoch nicht an derselben Position oder an nahe beieinanderliegenden Positionen montiert werden.

Die Position und Anzahl der Trennelemente 10 definieren die Messbereiche bzw. Messfelder, die mit der Vorrichtung überwacht werden können. Durch die drei Trennelemente 10.a, 10.b bzw. 10.c können vier Messbereiche definiert bzw. unterschieden werden. Zwei Messbereiche sind durch die Leiterbahnen 5 bzw. Teilstücke von Leiterbahnen 5 bestimmt, die sich zwischen den Trennelementen 10 befinden, d.h. zwischen der Position des Trennelements 10.a und 10.b sowie zwischen der Position des Trennelements 10.b und 10.c. Zwei weitere Messbereiche sind durch die Leiterbahnen 5 bzw. Teilstücke von Leiterbahnen 5 bestimmt, die sich auf der Seite der Trennelemente 10.a und 10.c befinden, die gegenüber der Seite liegt, auf der das Trennelement 10.b zu finden ist.

Das Monitoring-Band 1 kann z.B. horizontal in der Nähe der Traufe auf der Unterspannbahn eines Schräg- oder Steildaches installiert bzw. montiert werden. Bildet die Unterspannbahn im Bereich des Monitoring-Bandes 1 dabei eine plane Fläche, die sich bis zum First erstreckt, kann die Fläche der Unterspannbahn, die zwischen dem Monitoring-Band 1 und dem First liegt, in die zuvor beschriebenen Messbereiche durch vertikale Linien von der Position der Trennelemente 10 am Trägerband 3 zum First unterteilt werden. Dieser Einteilung liegt die Annahme zugrunde, dass sich Feuchtigkeit entlang der Unterspannbahn der Schwerkraft folgend mehr oder weniger vertikal bzw. in mehr oder weniger geraden Rinnsalen entlang der Unterspannbahn ausbreiten kann. Kann sie das nicht, kann die Form und Ausdehnung der Messbereiche an die zu erwartenden Ausbreitungseigenschaften von Feuchtigkeit bzw. Wasser auf der Unterspannbahn entsprechend angepasst werden. Dies gilt nicht nur für Unterspannbahnen und Dächer, sondern für alle in dieser Anmeldung beschriebenen Anwendungsfälle.

Breitet sich Feuchtigkeit bzw. Wasser von einer Stelle auf der Unterspannbahn aus, die auf oder in der Nähe der vertikalen Linien liegen, die zwei Messbereiche voneinander trennen, kann sich die Feuchtigkeit bzw. das Wasser in dem einen oder anderen oder beiden Messbereichen ausbreiten. Wird demnach Feuchtigkeit in zwei benachbarten Messbereichen detektiert, kann die Leckage auf einen Bereich in der Nähe der den Messbereichen gemeinsamen vertikalen Linie eingegrenzt werden. Dabei kann die Feuchtigkeit in den beiden Bereichen gleichzeitig erkannt bzw. detektiert werden. Sie kann aber auch in zwei aufeinander folgenden Messungen einmal in dem einen und einmal in dem anderen Bereich detektiert werden. Wird dies in die Leckageortung einbezogen, kann die Leckageortung verbessert werden. Dies gilt nicht nur für das Monitoring-Band 1, sondern allgemein für alle erfindungsgemäßen Vorrichtungen bzw. Verfahren.

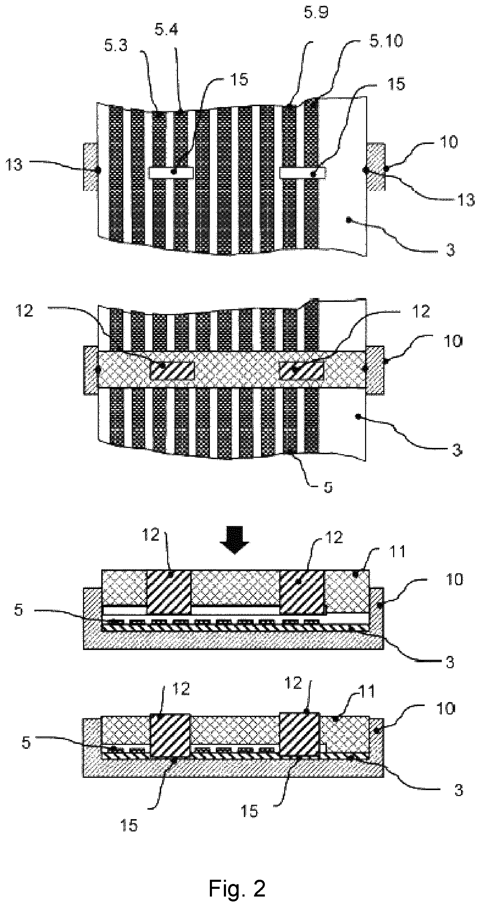

Fig. 2 zeigt einen Abschnitt des Monitoring-Bandes 1, der das Trennelement 10.b umfasst. Dabei stellt die erste Ansicht von oben das Trennelement 10.b in einer Draufsicht ohne das Klemmelement 11 und die Schneiden 12 dar. In der Draufsicht ohne Klemmelement 11 und Schneiden 12 sind die Trennstellen 15 sichtbar, die durch das Einsetzen der Schneiden 12 in das Klemmelement 11 entstanden sind. In diesem Beispiel wurden die Leiterbahnen 5.3 und 5.4 durch eine Schneide 12 und die Leiterbahnen 5.9 und 5.10 durch eine weitere Schneide 12 des Klemmelements 11 durchtrennt. Zum Vergleich zeigt die zweite Ansicht von oben das Trennelement 10.b mit dem Klemmelement 11 und den Schneiden 12 in derselben Draufsicht, d.h. aus derselben Perspektive.

Die dritte und die vierte Ansicht von oben zeigen einen Querschnitt des Trennelements 10.b, wobei die dritte Ansicht den Zustand des Trennelements 10.b kurz vor dem Einrasten des Klemmelements 11 in das Trennelement 10.b zeigt. Die vierte Ansicht stellt den Zustand des Trennelements 10.b dar, nachdem das Klemmelement 11 in das Trennelement 10.b eingerastet wurde.

In diesem Ausführungsbeispiel werden die Leiterbahnen 5 durchtrennt, indem die Schneiden 12 beim Einrasten des Klemmelements 11 in das Trennelement 10.b die Leiterbahnen 5 durchschneiden und weiter in das Trägerband 3 einschneiden. Dadurch entsteht eine Trennstelle 15. Das Trägerband 3 wird dabei jedoch nicht vollständig durchtrennt.

Zusätzlich weist das Klemmelement 11 an einer Seite eine rechteckige Auskragung auf, die das Trägerband 3 in das Trennelement 10.b klemmt. Die Auskragung befindet sich in der dritten und der vierten Ansicht von oben jeweils auf der rechten Seite des Klemmelements 11.

Die Trennelemente 10 haben in dieser Ausführungsform eine Abmessung von 35 x 85 x 35 mm. Sie sind zudem mithilfe eines Spritzgussverfahrens gefertigt. Damit kann eine ausreichende Wandstärke bzw. Stabilität der Trennelemente 10 gewährleistet werden.

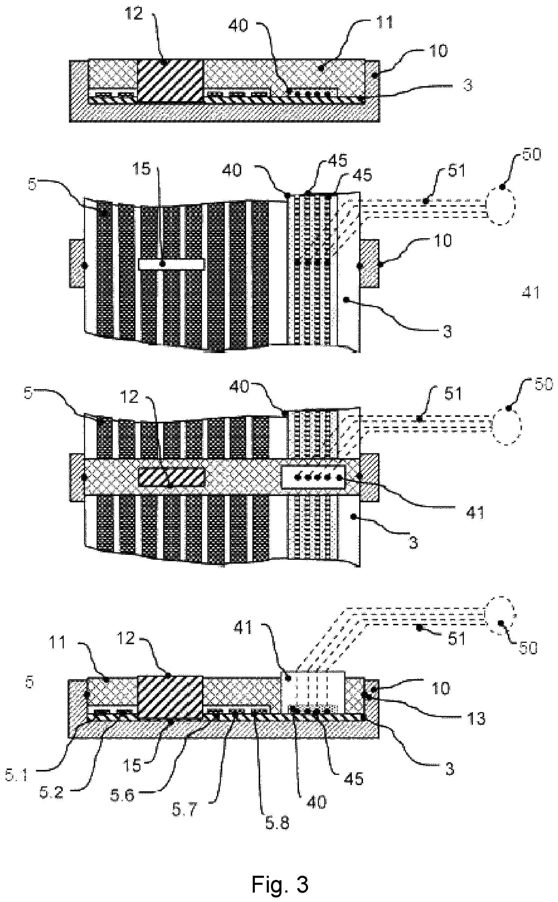

Fig. 3 zeigt einen Abschnitt einer weiteren Ausführungsform eines Monitoring-Bandes 1 in verschiedenen Ansichten. Die Ausführungsform umfasst dabei ein Trägerband 3 mit 8 nebeneinander angeordneten nicht-isolierten elektrischen Leiterbahnen 5 und einem 4-adrigen Informationskabel 40. Die 4 Adern des Informationskabels 40 sind dabei in eine Kunststoffmatrix eingebettet, die die Adern 45 isoliert.

Die erste Ansicht von oben zeigt einen Querschnitt eines Trennelements 10, in das das Trägerband 3 und das Informationskabel 40 mithilfe eines Klemmelements 11 eingeklemmt sind. Zu diesem Zweck weist das Klemmelement 11 eine Auskragung auf, die sich in dieser Ansicht auf der rechten Seite des Klemmelements 11 befindet und das Trägerband klemmt. Zusätzlich weist die Auskragung eine Aussparung für das Informationskabel 40 auf, so dass das Informationskabel 40 zwar vom Klemmelement 11 in das Trennelement 10 eingeklemmt, jedoch aber nicht zerquetscht wird.

Das Trennelement 10 umfasst ferner eine Schneide 12. Die Schneide 12 durchtrennt in diesem Beispiel die Leiterbahnen 5.3, 5.4 und 5.5.

Die zweite Ansicht von oben zeigt eine Draufsicht auf das Trägerband 3 mit dem Trennelement 10, allerdings ohne das Klemmelement 11. Dadurch ist die Trennstelle 15 sichtbar, die durch das Durchtrennen der Leiterbahnen 5.3, 5.4 und 5.5 mithilfe des Klemmelements 11 und der Schneide 12 entstanden ist.

In der zweiten Ansicht ist zudem ersichtlich, dass die 4 Adern 45 des Informationskabels 40 an Informationsleiter 51 einer Informationsleitung 50 angeschlossen sind. Der Anschluss der Informationsleiter 51 der Informationsleitung 50 erfolgt über einen Stecker 41, der in eine entsprechende Aussparung des Klemmelements 11 eingeführt ist. Dies ist in der dritten Ansicht von oben zu erkennen, die das Trägerband 3 in einer Draufsicht mit dem in das Trennelement 10 eingerasteten Klemmelement 11 darstellt.

Der Stecker 41 ist im Querschnitt des Trennelements 10, der in der ersten Ansicht von oben dargestellt ist, nicht zu erkennen. Er ist jedoch im Querschnitt des Trennelements 10 enthalten, der in der untersten Ansicht dargestellt ist. Der Stecker 41 weist zur Kontaktierung der Adern 45 mit den Informationsleitern 51 Schneidkontakte auf, die sich beim Einführen des Steckers 41 in die Aussparung des Klemmelements 11 in die Isolierung des Informationskabels 40 einschneiden und somit den elektrischen Kontakt zwischen den Adern 45 und den Informationsleitern 51 herstellen.

Die Informationsleitung 50 führt in diesem Beispiel zu einem Temperatur- und einem Luftfeuchtigkeitssensor. Die Sensoren werden über das Informationskabel 40 und die Informationsleitung 50 von einer Sensorbox mit einer Steuereinheit angesteuert. Die Antwort der Sensoren, v.a. die Messwerte und Daten, die von den Sensoren erhoben und erfasst werden, werden ebenfalls über die Informationsleitung 50 und das Informationskabel 40 übertragen. Das Informationskabel wird demnach zur Ansteuerung der Sensoren genutzt.

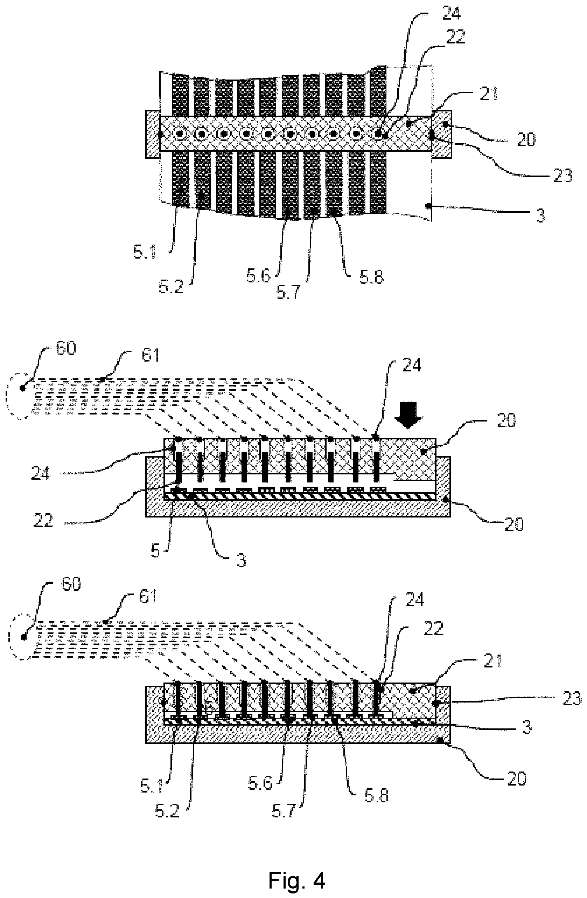

Fig. 4 zeigt einen Abschnitt eines Monitoring-Bandes 1, in dem ein Anschlusselement 20 an einer Position eines Trägerbandes 3 mit zehn Leiterbahnen 5 angebracht wurde. Die oberste Ansicht stellt dabei eine Draufsicht auf das montierte Anschlusselement 20 und das Trägerband 3 mit den Leiterbahnen 5 dar. Die Leiterbahnen sind wie in Fig. 1 mit Indizes von 1 bis 10 bzw. indizierten Bezugszeichen 5.1 bis 5.10 versehen.

Das Anschlusselement 20 weist ein Klemmelement 21 mit Kontaktstiften 22 auf. Die oberen Enden der Kontaktstifte 22 bilden Kontaktstellen 24. Wie der untersten Ansicht entnommen werden kann, die einen Querschnitt des an dem Trägerband 3 montierten Anschlusselements 20 zeigt, sind an den Kontaktstellen 24 Anschlussleiter 61 einer Anschlussleitung 60 angeschlossen. Die Anschlussleiter 61 bzw. die Anschlussleitung 60 führen zu einer Messeinheit (nicht dargestellt), die mithilfe der elektrischen Kontakte zwischen den Anschlussleitern 61 und den Leiterbahnen 5, die durch die Kontaktstifte 22 mit den Kontaktstellen 24 hergestellt sind, die Kapazität der Leiterbahnen 5.1 bis 5.10 misst.

Das Klemmelement 21 mit den Kontaktstiften 22 wird von Verriegelungselementen 23 im Anschlusselement 20 gehalten. Dabei wird das Trägerband 3 in das Anschlusselement 20 geklemmt. Dies kann ebenfalls der unteren Ansicht entnommen werden, in der eine Auskragung des Klemmelements 21 auf der rechten Seite zu sehen ist. Die Auskragung klemmt das Trägerband 3 im Anschlusselement 20, wenn das Klemmelement 21 in das Anschlusselement 20 eingeführt und in die Verriegelungselemente 23 eingerastet wird.

Die mittlere Ansicht zeigt einen Querschnitt des Anschlusselements 20 in einem Zustand, in dem das Klemmelement 21 bereits in das Anschlusselement 20 eingeführt, aber noch nicht in die Verriegelungselemente 23 eingerastet wurde. Ein Vergleich der mittleren und der unteren Ansicht zeigt, dass die Stifte vor dem Einrasten von Federn (nicht gezeigt) in einer Position gehalten werden, in der die Kontaktstifte 22 aus dem Klemmelement 21 hervorstehen. Beim Einrasten des Klemmelements 21 in die Verriegelungselemente 23 des Anschlusselements 20 werden die Stifte 22 nach oben gedrückt. Im Gegenzug pressen die Federn die Kontaktstifte 22 auf die Leiterbahnen 5. Auf diese Weise können die Leiterbahnen zuverlässig kontaktiert werden bzw. ein elektrischer Kontakt zwischen den Leiterbahnen und den Kontakt-stiften hergestellt werden.

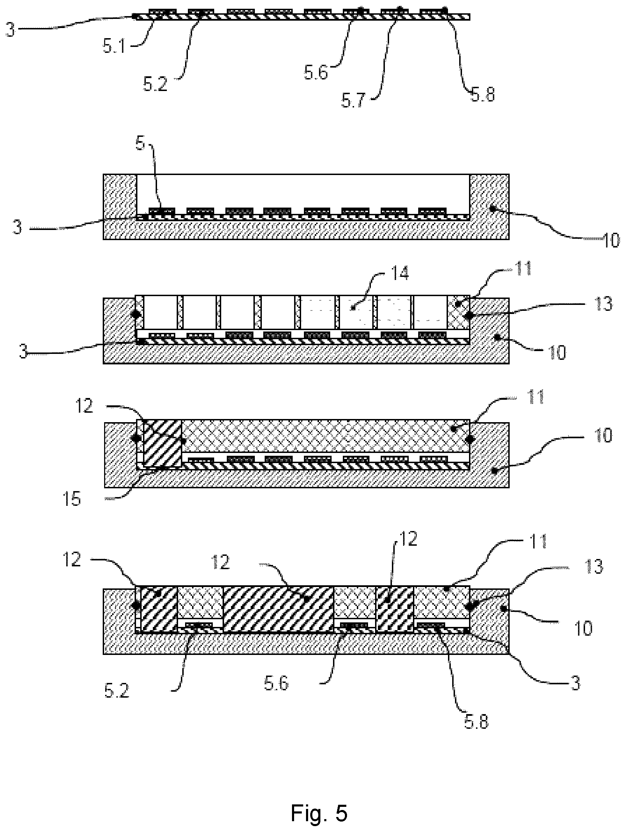

Fig. 5 zeigt verschiedene Querschnitte eines Monitoring-Bandes 1 sowie eines Trennelements 10. Der erste Querschnitt zeigt ein Trägerband 3 mit 8 neben einander angeordneten nicht-isolierten elektrischen Leiterbahnen 5, die mit indizierten Bezugszeichen 5.1 bis 5.8 versehen sind. Das Trägerband besteht in diesem Ausführungsbeispiel aus einer gitterverstärkten PE-Folie.

Der zweite Querschnitt zeigt das Trägerband 3 mit den 8 Leiterbahnen 5 in einem Zustand, in dem es in den unteren Teil eines Trennelements 10 eingelegt wurde. Das Trennelement 10 umfasst zudem ein Klemmelement 10. Vor dem Einlegen des Trägerbandes 3 wurde das Klemmelement 11 aus dem Trennelement 10 entnommen. Es ist deshalb in dieser Querschnittsansicht nicht dargestellt.

Der dritte Querschnitt zeigt das Trennelement 10 mit dem darin eingelegten Trägerband 3 und dem Klemmelement 11, das nun ebenfalls in den unteren Teil des Trennelements 10 eingeführt wurde und mithilfe der Verriegelungselemente 13 darin eingerastet wurde. Das Klemmelement 11 weist 8 Aussparungen 14 auf. Die Aussparungen 14 liegen jeweils über einer der Leiterbahnen 5. In die Aussparungen 14 können Schneiden 12 zum Durchtrennen der Leiterbahnen 5 eingeführt und darin verrastet werden. Die Montage der Schneiden 12 kann dabei nach der Montage des Trennelements 10 mit dem Klemmelement 11 erfolgen. Dabei kann keine, eine oder mehrere der Leiterbahnen durchtrennt werden, je nach Bedarf. Neben Schneiden 12 können auch Elemente mit Kontaktstiften 22 in dieser Weise in das Klemmelement 11 eingefügt werden. Derartige Trennelement 10 können demnach sowohl zum Durchtrennen als auch zur Kontaktierung der Leiterbahnen 5 verwendet werden.

Der vierte Querschnitt stellt eine weitere Ausführungsform eines Trennelements 10 dar, das ein Klemmelement 11 mit lediglich einer Schneide 12 umfasst. In diesem Beispiel kann damit die Leiterbahn 5.1 durchtrennt werden.

Der fünfte Querschnitt zeigt eine Ausführungsform mit drei Schneiden 12, die unterschiedlich lang sind. Die erste Schneide 12 durchtrennt die Leiterbahn 5.1. Die zweite Schneide 12 ist breiter und durchtrennt die Leiterbahnen 5.3 bis 5.5. Die dritte Schneide 12 durchtrennt die Leiterbahn 5.7.

Die Trennelemente 10 bzw. Klemmelemente 11 können demnach unterschiedlich gestaltet sein. Sie können so ausgeführt werden, dass das Durchtrennen der Leiterbahnen nach der Montage der Trennelemente 10 und Klemmelemente 11 durch Einsetzen von Schneiden 12 in Aussparungen 14 erfolgen kann. Sie können auch so ausgeführt sein, dass ein Klemmelement 11 Leiterbahnen lediglich an genau definierten Positionen durchtrennt. Diese Klemmelemente können z.B. mit unterschiedlichen Farben gestaltet werden. Derartige Markierungen sind in der Regel leicht zu erkennen und erleichtern die Dokumentation bzw. ein Nachvollziehen, welche und wie viele Leiterbahnen an welchen Positionen am Trägerband durchtrennt wurden.

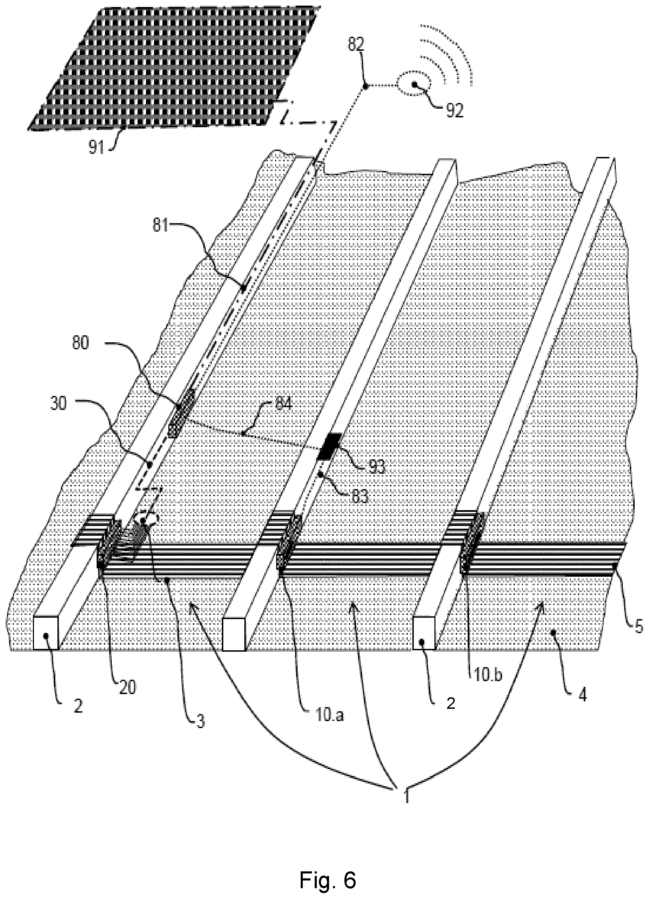

Fig. 6 zeigt ein Monitoring-Band 1 mit einem Trägerband 3, das auf einer Unterspannbahn 4 eines geneigten Daches mit Dachsparren 2 nachgerüstet wurde. An dem Trägerband 3 sind auf einer Seite 7 Leiterbahnen 5 angebracht, die nebeneinander angeordnet und nichtisoliert sind. Auf der anderen Seite des Trägerbandes 3 befindet sich eine Klebeschicht, mit der das Trägerband 3 auf der Unterspannbahn 4 aufgeklebt bzw. montiert wurde. Die Figur zeigt einen Abschnitt, in dem eine Anschlusseinheit 20 und zwei Trennelemente 10 an dem Monitoring-Band 1 angebracht wurden, die mit den Bezugszeichen 10.a und 10.b versehen sind. Das Trennelement 10.a weist Kontaktmittel auf, das den elektrischen Kontakt zwischen den Leiterbahnen 5 an dem Trägerband 3 und einer Messleitung 83 zu einer Sensorbox 93 herstellt. Darüber hinaus verfügt das Monitoring-Band 1 über eine Steuereinheit 80, die über eine Energie- und Datenleitung 84 mit der Sensorbox 93 verbunden ist. Die Steuereinheit 80 ist zudem über eine Anschlussleitung 30 an das Anschlusselement 20 an dem Monitoring-Band 1 angeschlossen. Die Energieversorgung der Steuereinheit 80 und der Sensorbox 93 wird über eine Solarzelle 91 sichergestellt. Die Energieversorgung durch die Solarzelle 91 erfolgt dabei über eine Energieleitung 81. Die Energieleitung 81 verbindet die Solarzelle 91 mit der Steuereinheit 80, die wiederum die Sensorbox 93 über die Energie- und Datenleitung 84 u.a. mit Strom versorgt. Des Weiteren ist die Steuereinheit 80 über eine Informationsleitung 82 mit einem Datenübertragungsmodul 92 verbunden, das die Steuereinheit 80 mit dem Internet verbindet.

Die Unterspannbahn 4 ist an Dachsparren 2 befestigt. Die Dachsparren 2 und die Unterspannbahn 4 bilden durch ihre Oberflächen eine feuchteführende Fläche, die mithilfe des Monitoring-Bandes 1 überwacht werden kann. Die Fläche ist dabei nicht nur plan bzw. eben, sondern weist auch Schrägen und vertikale Erhebungen, insbesondere an den Dachsparren 2 auf. Dementsprechend wurde das Monitoring-Band 1 nicht zwischen der Unterspannbahn 4 und den Dachsparren 2, sondern über die Dachsparren 2 geführt, um die gesamte feuchteführende Fläche überwachen zu können.

Die vertikalen Flächen der Dachsparren 2 geben eine natürliche Segmentierung der durch die Sparren 2 und der Unterspannbahn 4 gebildeten Fläche in Messbereiche vor, insbesondere da diese Flächen senkrecht zur Dacheindeckung liegen. Dadurch werden diese Flächen bei einer Leckage in der Dacheindeckung mit einer nur geringen Wahrscheinlichkeit mit Feuchtigkeit bzw. Wasser benetzt. Zudem läuft Feuchtigkeit bzw. Wasser von diesen Flächen zur Unterspannbahn 4 hin ab. Es ist deshalb sehr unwahrscheinlich, dass das Monitoring-Band 1 an den Seitenflächen der Dachsparren 2 mit Feuchtigkeit benetzt wird.

Dementsprechend wurden die Anschlusseinheit 20 und die Trennelemente 10.a und 10.b an den Seitenflächen der Dachsparren 2 platziert. Die feuchteführende Fläche ist demnach in Messfelder unterteilt, die sich zwischen den Seitenflächen der Dachsparren 2 erstrecken, d.h. von dem Anschlusselement 20 zum Trennelement 10.a, dem Trennelement 10.a bis zum Trennelement 10.b und so weiter. Die Messfelder erstrecken sich in vertikaler Richtung zudem entgegen der Ausbreitungsrichtung der abfließenden Feuchtigkeit bzw. Wassers, d.h. vom Monitoring-Band 1 zum First des Daches (nicht gezeigt).

Die Steuereinheit 80 umfasst eine Messeinheit, die über die Anschlussleitung 30 mit allen 7 Leiterbahnen 5 oder Teilstücken der Leiterbahnen 5 an dem Trägerband 3 verbunden ist. Die Steuereinheit 80 kann über ihre Messeinheit die elektrischen Eigenschaften der Leiterbahnen 5 oder Teilstücke der Leiterbahnen 5 messen. In diesem Ausführungsbeispiel bestimmt die Messeinheit den elektrischen Widerstand zwischen zwei Leiterbahnen 5 bzw. Teilstücken von Leiterbahnen 5.

Die Sensorbox 93 umfasst ebenfalls eine Messeinheit, die über die Messleitung 83 und die Kontaktmittel des Trennelements 10.a an die Teilstücke der Leiterbahnen 5 angeschlossen ist, die in der gezeigten Ansicht rechts von dem Trennelement 10.a liegen. Auf diese Weise kann die Messeinheit der Sensorbox 93 diese Teilstücke für Messungen elektrischer Eigenschaften nutzen, wobei wiederum der elektrische Widerstand zwischen zwei Teilstücken bestimmt wird. In anderen Ausführungsformen (nicht dargestellt) kann die Messeinheit einer Sensorbox 93 auch so ausgeführt sein, dass die Kapazität einer oder mehrerer Leiterbahnen oder eines oder mehrerer Teilstücke von Leiterbahnen bestimmt, eine TDR- und/oder FDR-Analyse ausgeführt wird. Des Weiteren umfasst die Sensorbox 93 einen Temperatur- und Luftfeuchtigkeitssensor. Der Temperatur- und Luftfeuchtigkeitssensor sowie die Messeinheit übertragen ihre Messwerte bzw. Daten an die Steuereinheit 80 über die Energie- und Datenleitung 84. Sie erhalten über diese Leitung ebenfalls Steuersignale von der Steuereinheit 80.

Mithilfe der Solarzelle 91 lässt sich die Feuchteüberwachung autark durchführen. Die Steuereinheit 80 verfügt dazu über einen Energiespeicher bzw. Akku (nicht gezeigt), der mithilfe der Solarzelle 91 aufgeladen werden kann. Eine Anbindung der Steuereinheit 80 oder der Sensorbox 93 an einen externen Stromanschluss kann damit entfallen.

Die von den Messeinheiten der Steuereinheit 80 und der Sensorbox 93 erhobenen Messwerte werden über die Datenleitung 82 an das Datenübertragungsmodul 92 geleitet. Das Datenübertragungsmodul 92 verfügt über eine Verbindung zum Internet. Es überträgt die empfangenen Messwerte über das Internet an eine Hauptspeichereinheit (nicht gezeigt). Dieser Übertragungsweg wird ebenfalls dazu genutzt, um die Anlage zu überwachen und Steuersignale an die Steuereinheit 80 bzw. die Sensorbox 93 zu versenden. Die Feuchteüberwachung bzw. Steuerung der Feuchteüberwachung können demnach von remote bzw. aus der Ferne durchgeführt werden. Die Hauptspeichereinheit speichert die Daten, die sie von der Steuereinheit 80 über das Datenübertragungsmodul 92 empfängt, und hält sie zur Auswertung bzw. Datenanalyse vor. Die Hauptspeichereinheit kann dabei nicht nur mit der soeben beschriebenen Anlage, sondern auch mit mehreren Feuchteüberwachungssystemen verbunden werden.

Die in der Fig. 6 gezeigte Ausführungsform kann weiter fortgesetzt und ausgebaut werden. Sie kann z.B. mit weiteren Sensoren bzw. Sensorboxen 93, Anschlusselementen 20 bzw. Trennelementen 10 bestückt werden, wobei die Trennelemente 10 auch über eigene Messeinheiten verfügen können. Ebenfalls ist denkbar weitere Monitoring-Bänder 1 an das bereits montierte Band 1 anzuschließen. Des Weiteren kann ein zweites oder weitere Monitoring-Bänder 1 an die Steuereinheit 80 angeschlossen werden, das oder die parallel zum dem bereits montierten Monitoring-Band 1 geführt werden können. Auf diese Weise kann die Überwachung des Daches je nach Bedarf sukzessive ausgebaut bzw. engmaschiger gestaltet werden. Ähnliches gilt für andere Gebäudestrukturen.

Fig. 6 zeigt eine Ausführungsform, bei der die Unterspannbahn 4 unterhalb der Sparren 2 verlegt wurde. Ausführungsformen, bei denen die Unterspannbahn 4 auf den Sparren 2 verlegt wurde und eine entsprechende Konterlattung aufweisen, können in ähnlicher Weise mit einer Monitoring-Band ausgestattet werden. In diesem Fall nehmen die Latten der Konterlattung die Rolle der Sparren ein.

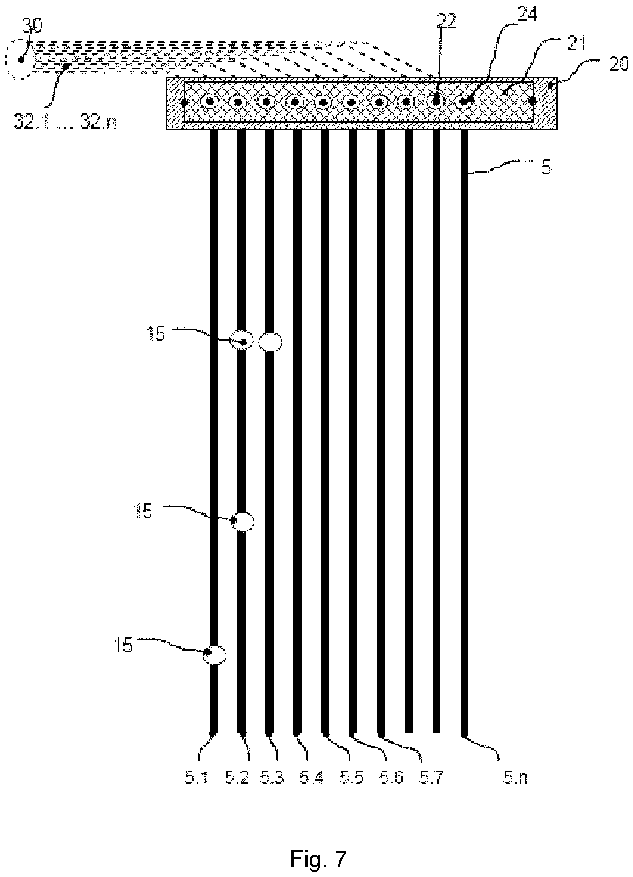

Fig. 7 zeigt eine Draufsicht auf einen Abschnitt eines Monitoring-Bandes 1 mit einem Anschlusselement 20. Der Abschnitt weist Trennstellen 15 auf, die in die Leiterbahnen 5.1, 5.2 und 5.3 eingestanzt wurden. Die beiden oberen und die untere Trennstelle 15 wurden dabei mithilfe von Trennelementen 10 erzeugt, in die entsprechende Stanzwerkzeuge ähnlich zu den zuvor beschriebenen Schneiden 12 eingesetzt wurden. Die mittlere Trennstelle 15 wurde mit einem Stanzwerkzeug erzeugt, das nicht in ein Trennelement 10 eingesetzt wurde. Eine Trennstelle 15 kann demnach mit oder ohne die Montage eines Trennelements erzeugt werden. Dies gilt nicht nur für diese Ausführungsform, sondern für alle erfindungsgemäßen Ausführungsformen.

Neben einem Stanzwerkzeug, das einen Abschnitt einer Leiterbahn 5 ausstanzt, kann auch mit einem Messer eine Leiterbahn 5 durchtrennt bzw. durchschnitten und an den entstehenden Enden auseinandergebogen werden. Auf diese Weise kann ebenfalls eine Trennstelle 15 erzeugt werden.

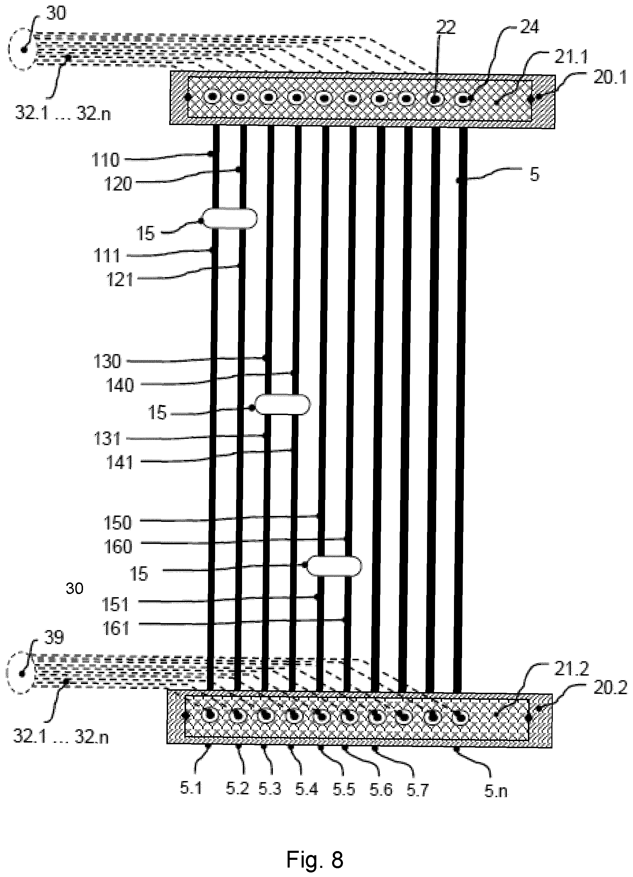

Fig. 8 zeigt einen Abschnitt einer weiteren Ausführungsform eines Monitoring-Bandes 1, der zwischen zwei Anschlusseinheiten 20 liegt. In diesem Ausführungsbeispiel sind die Leiterbahnen 5 jeweils paarweise durchtrennt. Die Leiterbahn 5.1 ist dabei in zwei Teilstücke 110 und 111 geteilt worden. An derselben Stelle wurde die Leiterbahn 5.2 durchtrennt und in die Teilstücke 120 und 121 geteilt. Ähnlich verhält es sich mit den Leiterbahnen 5.3 bis 5.6, die in die Teilstücke 130, 131, 140, 141, 150, 151, 160 und 161 geteilt wurden. Dabei können die Teilstücke 110, 120, 130, 140, 150 und 160 über die obere Anschlusseinheit 20 kontaktiert werden. Mithilfe der unteren Anschlusseinheit 20 können die Teilstücke 111, 121, 131, 141, 151 und 161 ausgelesen bzw. kontaktiert werden, um mit diesen Teilstücken Messungen elektrischer Eigenschaften durchzuführen.

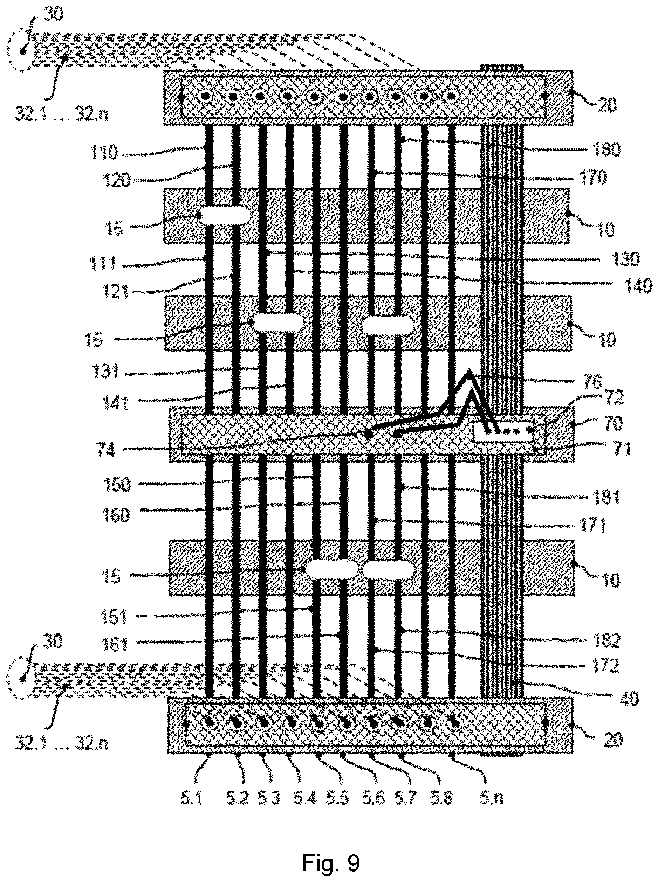

Fig. 9 zeigt einen Abschnitt einer weiteren Ausführungsform eines Monitoring-Bandes 1, der zwischen zwei Anschlusseinheiten 20 liegt. Die Ausführungsform unterscheidet sich von der in Fig. 8 gezeigten Ausführungsform durch ein Informationskabel 40. Das Monitoring-Band 1 wurde in dem gezeigten Abschnitt in derselben Art und Weise mit Trennstellen 15 versehen wie das Monitoring-Band 1 in dem in Fig. 8 gezeigten Abschnitt. Darüber hinaus wurden jedoch noch zwei weitere Trennstellen 15 in die Leiterbahnen 5.7 und 5.8 eingefügt. Dabei wurden die Leiterbahnen 5.7 und 5.8 in je drei Teilstücke geteilt, nämlich in die Teilstücke 170, 171, 172, 180, 181 und 182. Neben den Trennelementen 10 wurde an dem Monitoring-Band 1 ein Anschlusselement 70 angebracht. Das Anschlusselement 70 verfügt über zwei Kontaktstellen 74 mit Kontaktstiften, die in elektrischem Kontakt mit den Leiterbahnen 5.7 und 5.8 stehen. An jede Kontaktstelle 74 ist ein elektrischer Leiter 76 angebracht, der die Kontaktstelle 74 mit einer entsprechenden Kontaktstelle an einem Stecker 72 verbindet. Der Stecker 72 befindet sich in einem Klemmelement 71 und stellt über diese Kontaktstellen den elektrischen Kontakt zwischen den elektrischen Leitern 76 und den Adern des Informationskabels 40 her. Das Klemmelement 71 fixiert den Stecker 72 in dem Anschlusselement 70.

Während die Teilstücke 170 und 180 mit der oberen Anschlusseinheit 20 und die Teilstücke 172 und 182 mit der unteren Anschlusseinheit 20 kontaktiert werden können, können die Teilstücke 171 und 181 nicht mit einer der Anschlusseinheiten 20 kontaktiert werden. Um diese Teilstücke zu kontaktieren wurde das Anschlusselement 70 an einer Position an dem Trägerband 3 angebracht, die zwischen den beiden Trennstellen 15 der Leiterbahnen 5.7 und 5.8 liegt. Der Kontakt wird dabei mithilfe der Kontaktstellen 74 des Anschlusselements 70, den Leitern 76 und den Adern des Informationskabels 40 hergestellt. Auf diese Weise können die Zwischenstücke 171 und 181 mit einer Messeinheit oder Sensorbox (nicht gezeigt) verbunden werden, die ebenfalls an das Informationskabel 40 angeschlossen ist.

Das Monitoring-Band 1 umfasst nicht-isolierte Leiterbahnen 5. Zur Detektion von Feuchtigkeit bzw. Wasser wird der elektrische Widerstand zwischen zwei Leiterbahnen 5 bzw. Teilstücken von Leiterbahnen 5 bestimmt. Der Widerstand kann sich dabei durch den Kontakt mit Feuchtigkeit bzw. Wasser um mehrere Größenordnungen ändern. Bei einer Ausführungsform mit ca. 20 m langen Leiterbahnen 5 aus Aluminium mit einer Breite von ca. 1 cm und einem Abstand von ca. 1 mm ändert sich der Widerstand zwischen zwei benachbarten Leiterbahnen 5 um mehrere Mega- oder Kilo-Ohm, wenn die Leiterbahnen 5 auf einer Strecke von ca. 1 bis 5 cm mit Wasser benetzt und auf diese Weise elektrisch miteinander verbunden werden.

In alternativen Ausführungsformen der Vorrichtung (nicht gezeigt) umfasst das Monitoring-Band 1 isolierte Leiterbahnen 5. Zur Detektion von Feuchtigkeit bzw. Wasser wird dementsprechend nicht der elektrische Widerstand zwischen den Leiterbahnen 5 oder Teilstücken der Leiterbahnen 5 bestimmt, sondern mithilfe der Kapazität einer oder zweier Leiterbahnen 5. In einer Ausführungsform weisen zwei isolierte Leiterbahnen 5, die ca. 20 m lang, 1cm breit sind und einen Abstand von ca. 1 mm voneinander haben, eine Kapazität von ca. 1 nF auf. Werden die Leiterbahnen auf einer Strecke von ca. 5 cm mit Wasser benetzt, ändert sich dieser Wert auf ca. 1,2 nF. Diese Änderung ist signifikant und kann zur Detektion von Feuchtigkeit bzw. Wasser genutzt werden.

Die Kapazitätsänderung muss dabei nicht direkt gemessen werden. Sie kann bspw. über die Anzahl von Ladezyklen, die innerhalb einer 1s mithilfe der Leiterbahnen gefahren werden können, bestimmt werden. In diesem Fall führt die Erhöhung der Kapazität zu einer Erniedrigung der Anzahl der gefahrenen Ladezyklen um 2000 Zyklen.

Eine weitere Möglichkeit, mithilfe von isolierten Leiterbahnen Feuchtigkeit bzw. Wasser zu detektieren, bietet eine TDR-Analyse. Für die oben beschriebenen Leiterbahnen 5 ergibt sich dabei eine Signalgeschwindigkeit von ca. 0,2 m/ns. Die Signallaufzeit eines Spannungspulses liegt damit im Bereich von wenigen ns bis hin zu mehreren hundert ns. Eine Wasseransammlung, die in einem Bereich, der bspw. 4 m von der zugehörigen Messeinheit entfernt ist, die Leiterbahnen 5 benetzt, führt damit zu einer Rückstreuung eines Spannungspulses, die nach ca. 40 ns von der Messeinheit detektiert werden kann.

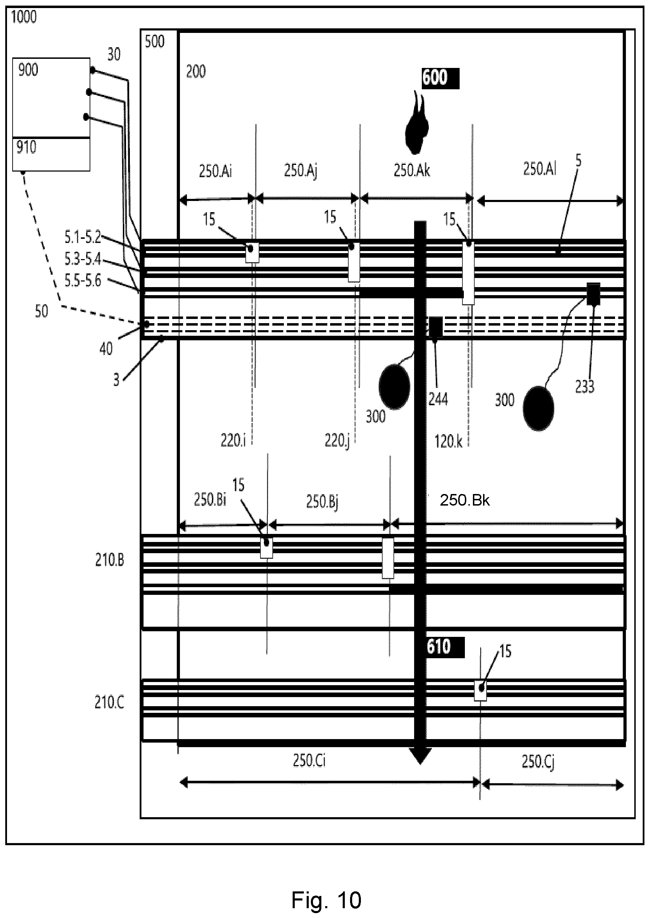

Fig. 10 zeigt ein System 1000 mit drei parallelen Monitoring-Bändern 1. Das System 1000 umfasst eine Auswerteeinheit 900 und eine Sensorzentrale 910. Die Sensorzentrale 910 ist über eine Informationsleitung 50 an ein Informationskabel 40 eines ersten Monitoring-Bandes 1 (in der Figur an das oberste Band) angeschlossen. Neben dem Informationskabel 40, an das die Informationsleitung 50 angeschlossen ist, verfügt das erste Monitoring-Band 1 über sechs nebeneinander angeordnete, nahezu parallele Leiterbahnen 5, die mit den Bezugszeichen 5.1 bis 5.6 versehen sind. Die Leiterbahnen 5.1 bis 5.6 sind auf einem Trägerband 3 aufgeklebt. Das Trägerband 3 ist auf einer feuchteführenden Fläche 500 angebracht.

Parallel oder nahezu parallel zu dem ersten Monitoring-Band 1 verläuft ein zweites (in der Figur das mittlere Band) und ein drittes Monitoring-Band 1 (in der Figur das unterste Band), wobei das zweite Monitoring-Band 1 ebenfalls über sechs nebeneinander angeordnete Leiterbahnen 5 und das dritte Monitoring-Band 1 über vier nebeneinander angeordnete Leiterbahnen 5 verfügt.

An den Positionen 220, die mit den Indizes i, j und k bzw. den indizierten Bezugszeichen 220.i, 220.j und 220.k versehen sind, wurden Trennelemente 10 (nicht dargestellt) montiert. An der Position 220.i wurden so die Leiterbahnen 5.1 und 5.2 durchtrennt und eine Trennstelle 15 gebildet. Weitere Trennstellen 15 finden sich an den Positionen 220.j und 220.k, wobei dort jeweils die Leiterbahnen 5.1 bis 5.4 und 5.1 bis 5.6 durchtrennt wurden.

Die Teilstücke der Leiterbahnen 5.1 bis 5.6, die in dieser Darstellung links von den Trennstellen 15 liegen, sind über Anschlussleiter einer Anschlussleitung 30 an die Auswerteeinheit 900 angeschlossen. Die Auswerteeinheit 900 verfügt über eine Messeinheit, die mithilfe der Teilstücke den Widerstand zwischen den Teilstücken der Leiterbahnen 5.1 und 5.2, 5.3 und 5.4 sowie 5.5 und 5.6 misst.

Die Teilstücke der Leiterbahnen 5.1 bis 5.6, die in dieser Darstellung rechts von den Trennstellen 15 liegen, sind ebenfalls an Messeinheiten bzw. Sensorboxen 233 angeschlossen. Eine dieser Messeinheiten bzw. Sensorboxen ist im gezeigten Abschnitt enthalten und stellt eine Sensorbox 233 dar. Die anderen liegen außerhalb des gezeigten Abschnitts. Die Sensorbox 233 verfügt über eine Messeinheit, die den Widerstand zwischen den Teilstücken der Leiterbahnen 5.5 und 5.6 misst, die in dieser Darstellung rechts von der Position 120.k liegen. Die entsprechenden Messwerte überträgt die Sensorbox 233 mithilfe drahtloser Kommunikation zur Auswerteeinheit 900.

Die Sensorbox 233 ist ebenfalls an einen Temperatur- und Luftfeuchtigkeitssensors 300 angeschlossen. Die Messwerte des Temperatur- und Luftfeuchtigkeitssensors 300 werden ebenfalls von der Sensorbox 233 mithilfe drahtloser Kommunikation übertragen, allerdings an die Sensorzentrale 910. Die Sensorzentrale 910 wertet die Daten zunächst aus und bereitet sie auf. Die aufbereiteten Daten werden im Anschluss mithilfe einer Informationsleitung (nicht gezeigt) an die Auswerteeinheit 900 übertragen.

Ein zweiter Temperatur- und Luftfeuchtigkeitssensor 300 ist zwischen der Position 220.j und 220.k auf der feuchteführenden Fläche 500 angebracht. Der zweite Temperatur- und Luftfeuchtigkeitssensor 300 ist mit dem Informationskabel 40 über einen Stecker 244 verbunden. Über den Stecker 244 speist der Temperatur- und Luftfeuchtigkeitssensor 300 seine Messwerte bzw. Daten direkt in das Informationskabel 40 ein und überträgt sie mithilfe der Informationsleitung 50 an die Sensorzentrale 910. Über dieselben Leitungen erhält der Temperatur- und Luftfeuchtigkeitssensor 300 Steuersignale von der Sensorzentrale 910. Ähnliches gilt für den Temperatur- und Luftfeuchtigkeitssensor 300, der mit der Sensorbox 233 verbunden ist.

Die Leiterbahnen des zweiten und des dritten Monitoring-Bandes sind in ähnlicher Weise mit Trennstellen 15 versehen und an Sensorboxen bzw. Messeinheiten angeschlossen (nicht gezeigt). Die Trennstellen 15 definieren Messfelder 250. Die Messfelder 250 sind dabei den Monitoring-Bändern 1 zugeordnet. Die Messfelder 250 des ersten Bandes sind mit den Bezugszeichen 250.Ai, 250.Aj und 250.Ak markiert. Die Messfelder der anderen Bänder mit den Bezugszeichen 250.Bi, 250.Bj, 250.Bk, 250.Ci und 250.Cj. Die Messfelder 250 bilden einen Beobachtungsbereich 200. Der Beobachtungsbereich 200 ist durch bauliche Gegebenheiten sowie die Lage der Monitoring-Bänder 1 etwas kleiner als die feuchteführende Fläche 500. Der Beobachtungsbereich erstreckt sich insbesondere oberhalb der Monitoring-Bänder 1, d.h. entgegen der Richtung, in die sich Feuchtigkeit bzw. Wasser auf der feuchteführenden Fläche 500 ausbreitet.

In Fig. 10 ist ebenfalls eine Leckage 600 eingezeichnet. Von der Leckage 600 breitet sich Wasser in vertikaler Richtung 610 (vgl. den schwarzen Pfeil) zu den Monitoring-Bändern 1 aus und benetzt die Leiterbahnen 5 der Monitoring-Bänder 1. Der Kontakt mit der Feuchtigkeit bzw. dem Wasser, das aus der Leckage 600 austritt, führt im Messfeld 250.Ak zu einem Kurzschluss zwischen den Leiterbahnen 5.5 und 5.6 bzw. den entsprechenden Teilstücken dieser Leiterbahnen 5.5 und 5.6, was durch den schwarz markierten Bereich angedeutet werden soll. Dieser Kurzschluss wird von der Auswerteeinheit 900 erkannt. Des Weiteren werden die untersten Leiterbahnen 5 des zweiten Monitoring-Bandes 1 im Messfeld 250.Bk kurzgeschlossen. Dieser Kurzschluss wird ebenfalls von der Auswerteeinheit 900 erkannt (und ist deshalb schwarz markiert). Es werden zwar weitere Teilstücke kurzgeschlossen. Diese Kurzschlüsse werden jedoch aufgrund der Verschaltung der Leiterbahnen 5 bzw. der Teilstücke der Leiterbahnen 5 mit den Messeinheiten von der Auswerteeinheit 900 nicht als zu dem entsprechenden Messbereich zugehörig erkannt, da die kurzgeschlossenen Leiterbahnen 5 bzw. Teilstücke von Leiterbahnen 5 anderen Messbereichen zugeordnet sind.

Durch die Kombination der verschiedenen Monitoring-Bänder 1 kann die Leckage 600 genauer verortet werden als es mit nur einem der Bänder 1 möglich wäre. Dies betrifft sowohl die horizontale als auch die vertikale Lage des Lecks 600. Im gezeigten Fall kann die Lage des Lecks 600 durch den detektierten Kurzschluss im ersten Band im Messfeld 250.Aj verortet werden. Durch die Detektion eines Kurzschlusses im Messfeld 250.Bk kann die Position des Lecks 600 in einem Bereich lokalisiert werden, der von beiden Messfelder, d.h. den Messfeldern 250.Aj und 250.Bk, abgedeckt wird.

Die erkannten Kurzschlüsse können mit den Messwerten der Sensoren 300 abgeglichen werden. Auf diese Weise können Fehlalarme aufgrund des Eindringens von Feuchtigkeit aufgrund von Blasschnee oder des Erreichens des kapillaren Sättigungspunkts der Dacheindeckung vermieden werden.

### Glossar

### Echtzeit

Der Betrieb eines (informationstechnischen) Systems, einer Vorrichtung oder Einheit erfolgt in Echtzeit (englisch real-time), wenn Programme zur Verarbeitung gemessener oder anfallender Daten ständig betriebsbereit sind und die Verarbeitungsergebnisse dieser Programme (nahezu) simultan verfügbar sind, d.h. innerhalb einer vorgegebenen Zeitspanne und ohne Verzögerungen, die über system-, vorrichtungs- oder einheitenbedingte Bearbeitungszeiten hinausgehen. Die Daten können dabei je nach Anwendungsfall nach einer zeitlich zufälligen Verteilung oder zu vorherbestimmten Zeitpunkten gemessen werden bzw. anfallen. Je nach Anwendung und System, Vorrichtung oder Einheit kann die vorgegebene Zeitspanne z.B. wenige Mikro- oder Millisekunden, Minuten oder Stunden betragen.

### elektrischer Kontakt

Ein elektrischer Kontakt stellt einen Kontakt zwischen zwei elektrischen Leitern bzw. elektrisch leitfähigen Gegenständen dar. Zwei elektrische Leiter bzw. elektrisch leitfähige Gegenstände stehen in elektrischem Kontakt zueinander, wenn Strom nahezu ungehindert durch den Kontaktbereich fließen kann, d.h. der Kontaktbereich einen vernachlässigbaren Widerstand darstellt. Elektrische Kontakte können lösbar sein, wie z.B. ein Schalt- oder Schleifkontakt. Sie können auch unlösbar sein, wie z.B. bei einer Löt-, Schweiß-, Press, Crimp-, Niet-, Wickel- oder Klebeverbindung von elektrischen Leitern bzw. elektrisch leitfähigen Gegenständen.

### feuchteführende Fläche oder Schicht

Eine feuchteführende Fläche oder Schicht ist eine Fläche oder Schicht, auf der oder in der sich Feuchtigkeit, Feuchte bzw. Wasser ausbreiten kann.

### Feuchtigkeit

Feuchtigkeit oder Feuchte bezeichnet die Anwesenheit von Wasser in oder an einem Material (z. B. Textilien) oder einer Substanz oder in einem Gas bzw. Luft (Luftfeuchtigkeit) oder in einem Raum (z. B. im Keller eines Gebäudes). Starke Feuchtigkeit wird auch als Nässe bezeichnet. Feuchtigkeit kann in Gebäuden z.B. durch Kondensation oder Leckagen entstehen. Unter Feuchtigkeit oder Feuchte kann auch der Gehalt an anderen Flüssigkeiten verstanden werden, zum Beispiel Benzol oder elektrisch leitende Fluide.

### Flachbandkabel

Ein Flachbandkabel ist ein mehradriges Kabel, in dem die Adern nicht kreisförmig gebündelt in einem runden Isolierschlauch angeordnet, sondern parallel nebeneinander geführt sind. Flachbandkabel werden vorrangig zum Verbinden von elektronischen Baugruppen z.B. in Computern verwendet. Sie stellen damit in der Regel zwei- oder mehrpolige Signal- bzw. Datenleitungen dar.

### Frequenzbereichsreflektometrie (FDR, Frequency-Domain-Reflectometry)

Die Frequenzbereichsreflektometrie ist ein Verfahren zur Ermittlung und Analyse von Lauflängen und Reflexionscharakteristika sinusförmiger Anregungen elektrischer Leiter bzw. Leiterbahnen. Dabei wird der Leiter bzw. die Leiterbahn mit sinusförmigen Signalen unterschiedlicher Frequenz angeregt und sowohl Phasen, als auch Amplitudeninformationen der reflektierten Signale gesammelt. Die Frequenzbereichsreflektometrie arbeitet somit nicht wie die Zeitbereichsreflektometrie (TDR) mit zeitlich aufgelösten, sondern frequenzaufgelösten Daten. Somit lässt sich bspw. präzise bestimmen wie viel Wasser sich auf dem Leiter bzw. der Leiterbahn befindet bzw. an wie vielen Stellen. Aufgrund der unterschiedlichen Art der Anregung (sinusförmige Anregung anstatt Puls) bietet die Frequenzbereichsreflektometrie jedoch nicht das gleiche Ortsauflösungsvermögen wie die Zeitbereichsreflektometrie (TDR).

### Kapazität (elektrische Kapazität)

Die Kapazität oder elektrische Kapazität ist eine physikalische Größe aus dem Bereich der Elektrostatik, Elektronik und Elektrotechnik. Die elektrische Kapazität zwischen zwei voneinander isolierten elektrisch leitenden Körpern ist gleich dem Verhältnis der Ladungsmenge, die auf diesen Leitern gespeichert ist und der zwischen ihnen herrschenden elektrischen Spannung. Die Kapazität wird dabei u.a. festgelegt durch die Dielektrizitätskonstante des isolierenden Mediums sowie der Umgebung der leitenden Körper und die Geometrie der Körper (insbesondere der Abstand der Körper).

Unter der elektrischen Kapazität eines Leiters oder einer Leiterbahn wird die Kapazität des Leiters bzw. der Leiterbahn bezogen auf eine Referenz oder einen Referenzleiter verstanden. Diese Referenz oder dieser Referenzleiter kann die Masse sein, oder ein anderer Leiter oder eine andere Leiterbahn.

In vielen praktischen Anwendungen wird die elektrische Kapazität mithilfe von Auf- und Entladezeiten bzw. -zyklen bestimmt. Dazu kann bspw. eine Spannung an den Leiter bzw. die leitenden Körper angelegt und der resultierende Strom als Funktion der Zeit gemessen werden, der in den Leiter bzw. zwischen den leitenden Körpern fließt. Die elektrische Kapazität wird dabei in Einheiten des elektrischen Widerstands gemessen, den der gemessene Strom dabei zu überwinden hat. Es kann auch eine Messchaltung verwendet werden, die u.a. als "Ladungszähler" bekannt ist. Die Messschaltung besteht aus einer Spannungsquelle, welche eine Sprungfunktion generiert, sowie einer Auswertungsschaltung, die z.B. einen Integrator umfasst, welcher die zur Ladung des Leiters bzw. der leitenden Körper benötigte Ladung misst.

### kapillarer Sättigungspunkt

Ein kapillarer Sättigungspunkt ist ein Sättigungspunkt, der den Punkt der Sättigung von Porositäten bzw. Kapillaren eines Gegenstands wie z.B. eines Dachziegels mit Feuchtigkeit bezeichnet. Der Gegenstand zeichnet sich dabei durch Porositäten bzw. Kapillare aus, die sich mit Feuchtigkeit vollsaugen, die an der Oberfläche des Gegenstands anliegt oder die Oberfläche benetzt oder an dieser Oberfläche auftrifft oder daran abläuft. Der Punkt der Sättigung ist erreicht, wenn die Porositäten bzw. Kapillare des Gegenstands keine Feuchtigkeit mehr aufnehmen können bzw. die Porositäten bzw. Kapillare die Feuchtigkeit auf einer Seite des Gegenstands aufnehmen und auf einer anderen Seite wieder abgeben. Erreichen z.B. Dachziegel ihren kapillaren Sättigungspunkt aufgrund eines lang anhaltenden Regenfalls führt dies zu einem Durchtropfen der Feuchtigkeit, die durch die Porositäten bzw. Kapillare des Dachziegels dringt.

### Leiterbahn

Eine Leiterbahn ist ein elektrischer Leiter bzw. eine elektrisch leitende Verbindung mit im Wesentlichen zweidimensionalem Verlauf. Eine Leiterbahn ist in der Regel wesentlich länger als sie breit ist. Zudem ist sie wesentlich breiter als sie hoch ist. Leiterbahnen stellen demnach in vielen Fällen dünne Schichten oder Folien dar, die im Wesentlichen geradlinig sind. Leiterbahnen dienen zur Strom- bzw. Spannungsversorgung, Signalübertragung und auch zur Temperaturableitung und werden u.a. zur Verbindung von elektronischen Bauelementen auf Leiterplatten und integrierten Schaltkreisen eingesetzt. Sie können aber auch zur Detektion von Feuchtigkeit bzw. Wasser bzw. elektrisch leitender Fluide verwendet werden.

### nebeneinander angeordnete Leiterbahnen

Nebeneinander angeordnete Leiterbahnen sind Leiterbahnen, die in einen Abstand zueinander angeordnet sind, der im Wesentlichen gleichbleibend ist (in gewissen Grenzen jedoch variieren kann). Nebeneinander angeordnete Leiterbahnen weisen damit in der Regel Verläufe auf, die versetzt zueinander sind, sonst aber sehr ähnlich zueinander sind. Dies umfasst eine parallele Anordnung der Leiterbahnen, bei der die Leiterbahnen geradlinig bzw. linear verlaufen. Der Verlauf der Leiterbahnen kann jedoch auch Krümmungen, Biegungen oder Knicke aufweisen. Dabei sind die Krümmungen, Biegungen oder Knicke der einzelnen Leiterbahnen derart zueinander versetzt, dass der Abstand zwischen den Leiterbahnen im Wesentlichen gleichbleiben ist (in gewissen Grenzen jedoch variieren kann).

### Schwellwert

Ein Schwellwert oder Schwellenwert ist ein Wert, dessen Über- oder Unterschreiten dazu genutzt wird, um festzulegen bzw. zu erkennen, ob ein Ereignis eingetreten ist bzw. eine vorgegebene Aktion ausgeführt werden soll. Schwellwerte können z.B. Grenzwerte für Strahlenbelastungen darstellen, die nicht überschritten werden dürfen. Schwellwerte können auch zur Definition eines Kurzschlusses genutzt werden, d.h. z.B. einen Widerstandswert zwischen zwei Leitern darstellen. Wird dieser Wert unterschritten, gelten die Leiter als kurzgeschlossen. Wird ein größerer Widerstand zwischen den Leitern gemessen, gelten die Leiter als nicht kurzgeschlossen.

### Zeitbereichsreflektometrie (TDR, Time-Domain-Reflectometry)f

Die Zeitbereichsreflektometrie ist ein Verfahren zur Ermittlung und Analyse von Lauflängen und Reflexionscharakteristika von Strom- oder Spannungspulsen in elektrischen Leitern bzw. Leiterbahnen. Das Verfahren ist im deutschen Sprachraum auch unter dem Begriff Kabelradar bekannt. Es wird in der Industrie und Wissenschaft u.a. dazu eingesetzt, um Leitungslängen oder Leitungsunterbrechungen zu bestimmen oder zu identifizieren. Dabei wird ein Strom- oder Spannungspuls mit hoher Flankensteilheit an einem Ende der Leitung bzw. Leiterbahn eingespeist. Jede Änderung in der Charakteristik des Wellenwiderstandes der Leitung bzw. der Leiterbahn führt zu Verzerrungen, Reflektionen und Aufspaltungen des Pulses. Die reflektierten Anteile des Pulses können an der gleichen Stelle, an der der Strom- oder Spannungspuls angelegt wurde, ausgewertet werden.

### Bezugszeichen

- 1: Monitoring-Band
- 3: Trägerband mit einer Mehrzahl von Leiterbahnen
- 5: Leiterbahn
- 10: Trennelement
- 11: Klemmelement
- 12: Schneide
- 13: Verriegelungselement
- 20: Anschlusselement
- 21: Klemmelement
- 22: Kontaktstifte
- 23: Verriegelungselement
- 30: Anschlussleitung
- 32: Anschlussleiter

- 15: Trennstelle

- 40: Informationskabel
- 41: Stecker
- 45: Ader
- 50: Informationsleitung
- 51: Informationsleiter

- 24: Kontaktstelle
- 60: Anschlussleitung
- 61: Anschlussleiter

- 14: Aussparung

- 2: Dachsparren
- 4: Unterspannbahn
- 80: Steuereinheit
- 81: Energieleitung
- 82: Datenleitung
- 83: Messleitung
- 84: Energie- und Datenleitung
- 91: Solarzelle
- 92: Datenübertragungsmodul
- 93: Sensorbox

- 110: Teilstück
- 111: Teilstück
- 120: Teilstück
- 121: Teilstück
- 130: Teilstück
- 131: Teilstück
- 140: Teilstück
- 141: Teilstück
- 150: Teilstück
- 151: Teilstück
- 160: Teilstück
- 161: Teilstück

- 70: Anschlusselement
- 71: Klemmelement
- 72: Stecker
- 74: Kontaktstelle
- 76: elektrischer Leiter
- 170: Teilstück
- 171: Teilstück
- 180: Teilstück
- 181: Teilstück

- 200: Beobachtungsbereich
- 220: Position
- 233: Sensorbox
- 244: Stecker
- 250: Messfeld
- 300: Temperatur- und Luftfeuchtigkeitssensor
- 500: feuchteführende Fläche
- 600: Leckage
- 610: Ausbreitungsrichtung
- 900: Auswerteeinheit
- 910: Sensorzentrale
- 1000: System

### zitierte Literatur

### zitierte Patentliteratur

US 10,078,030 B2
US 7,652,481 B2
EP 3 168 589 B1
US 5,081,422 A
EP 2 339 314 A1
US 2012/0313652 A1
DE 42 39 495 A1
US 2015/0259923 A1
DE 20 2018 005 538 U1
US 5,159,276 A
US 2007/0046481 A1
EP 2 458 106 B1
WO 2019/046961 A1
US 2009/0173143 A1

## Patentansprüche

1. Vorrichtung (1) zum Detektieren und Lokalisieren von Feuchtigkeit auf einer feuchteführenden Fläche und/oder in einer feuchteführenden Schicht mit:
einer Mehrzahl von nebeneinander angeordneten, elektrisch leitenden Leiterbahnen (5);
einem Trägerband (3);
wobei die Leiterbahnen (5) an dem Trägerband (3) fixiert sind;
wobei das Trägerband (3) derart gestaltet ist, dass es auf der feuchteführenden Fläche und/oder in der feuchteführenden Schicht angebracht werden kann;
**wobei die Vorrichtung umfasst:**
mindestens ein Trennelement (10),
wobei das mindestens eine Trennelement (10) derart gestaltet ist, dass das mindestens eine Trennelement (10) an einer vorgegebenen Position (220) an dem Trägerband (3) positionierbar ist;
wobei das mindestens eine Trennelement (10) derart gestaltet ist, dass es an der vorgegebenen Position (220) an dem Trägerband (3) mindestens eine vorgegebene Leiterbahn (5) von der Mehrzahl der Leiterbahnen (5) an dem Trägerband (3) durchtrennen kann; und
wobei das Durchtrennen der mindestens einen vorgegebenen Leiterbahn (5) ein Unterbrechen des elektrischen Kontakts zwischen den Teilstücken (110, 111, 120, 121, 130, 131, 140, 141, 150, 151, 160, 161; 170, 171, 172, 180, 181, 182) der mindestens einen vorgegebenen Leiterbahn (5) darstellt, die sich auf gegenüberliegenden Seiten der vorgegebenen Position (220) befinden,
**dadurch gekennzeichnet,**
**dass** das mindestens eine Trennelement (10) eine Klinge oder Schneide (12) aufweist;
wobei die Klinge oder Schneide (12) derart gestaltet ist, dass sie an der vorgegebenen Position (220) an dem Trägerband (3) mindestens eine vorgegebene Leiterbahn (5) von der Mehrzahl der Leiterbahnen (5) an dem Trägerband (3) durchtrennen kann.

2. Vorrichtung (1) nach einem der vorhergehenden Ansprüche,
**dadurch gekennzeichnet,**
**dass** die Leiterbahnen (5) durch das Trägerband (3) und eine feuchtigkeits- und/oder wasserdurchlässige Schicht geschützt sind;
wobei jede der Leiterbahnen (5) auf mindestens zwei gegenüberliegenden Seiten von dem Trägerband (3) und/oder der feuchtigkeits- und/oder wasserdurchlässigen Schicht umschlossen werden.

3. Vorrichtung (1) nach einem der vorhergehenden Ansprüche,
**dadurch gekennzeichnet,**
**dass** das mindestens eine Trennelement (10) ein erstes und ein zweites Teil umfasst,
wobei das erste Teil derart gestaltet ist, dass es an der vorgegebenen Position (220) an einer ersten Seite des Trägerbandes (3) positionierbar ist;
wobei das zweite Teil derart gestaltet ist, dass es an der vorgegebenen Position (220) an einer zweiten Seite des Trägerbandes (3) positionierbar ist; und
wobei das erste und das zweite Teil derart gestaltet sind, dass sie form- und/oder kraftschlüssig miteinander verbunden werden und
somit das Trägerband (3) mit der Mehrzahl von Leiterbahnen (5) umfassen und einklemmen können.

4. Vorrichtung (1) nach einem der vorhergehenden Ansprüche,
**gekennzeichnet durch**
mindestens eine Messeinheit;
wobei die mindestens eine Messeinheit derart gestaltet ist, dass sie an einer vorgegebenen Position (220) an dem Trägerband (3) an mindestens eine der Leiterbahnen (5) oder ein Teilstück (110, 111, 120, 121, 130, 131, 140, 141, 150, 151, 160, 161; 170, 171, 172, 180, 181, 182) mindestens einer der Leiterbahnen (5) angeschlossen werden kann; und
wobei die mindestens eine Messeinheit derart gestaltet ist, dass sie, nachdem sie an der vorgegebenen Position (220) an dem Trägerband (3) an die mindestens eine der Leiterbahnen (5) oder ein Teilstück (110, 111, 120, 121, 130, 131, 140, 141, 150, 151, 160, 161; 170, 171, 172, 180, 181, 182) mindestens einer der Leiterbahnen (5) angeschlossen wurde, mithilfe der mindestens einen der Leiterbahnen (5) oder des Teilstücks (110, 111, 120, 121, 130, 131, 140, 141, 150, 151, 160, 161; 170, 171, 172, 180, 181, 182) der mindestens einen der Leiterbahnen (5) eine Messung einer elektrischen Eigenschaft durchführen kann.

5. Vorrichtung (1) nach Anspruch 4,
**dadurch gekennzeichnet,**
**dass** die mindestens eine Messeinheit über einen Speicher und Mittel zur Datenverarbeitung verfügt,
mit der die mindestens eine Messeinheit die Werte einer Messung speichern und auswerten kann.

6. Vorrichtung (1) nach Anspruch einem der vorhergehenden Ansprüche 4 bis 5,
**dadurch gekennzeichnet,**
**dass** die mindestens eine Messeinheit derart gestaltet ist, dass sie, nachdem sie an mindestens eine der Leiterbahnen (5) oder ein Teilstück (110, 111, 120, 121, 130, 131, 140, 141, 150, 151, 160, 161; 170, 171, 172, 180, 181, 182) einer der Leiterbahnen (5) angeschlossen wurde, eine elektromagnetische Welle und/oder
einen Spannungs- oder Strompuls in die mindestens eine der Leiterbahnen (5) oder das mindestens eine Teilstück (110, 111, 120, 121, 130, 131, 140, 141, 150, 151, 160, 161; 170, 171, 172, 180, 181, 182) einer der Leiterbahnen (5) einkoppeln und damit eine Messung einer elektrischen Eigenschaft mithilfe der mindestens einen der Leiterbahnen (5) oder des mindestens einen Teilstücks (110, 111, 120, 121, 130, 131, 140, 141, 150, 151, 160, 161; 170, 171, 172, 180, 181, 182) einer der Leiterbahnen (5) durchführen kann; und/oder
**dass** die mindestens eine Messeinheit derart gestaltet ist, dass sie, nachdem sie an mindestens eine der Leiterbahnen (5) oder ein Teilstück (110, 111, 120, 121, 130, 131, 140, 141, 150, 151, 160, 161; 170, 171, 172, 180, 181, 182) einer der Leiterbahnen (5) angeschlossen wurde, die Kapazität der mindestens einen der Leiterbahnen (5) oder des mindestens einen Teilstücks (110, 111, 120, 121, 130, 131, 140, 141, 150, 151, 160, 161; 170, 171, 172, 180, 181, 182) einer der Leiterbahnen (5) messen kann.

7. Vorrichtung (1) nach einem der vorhergehenden Ansprüche 4 bis 6,
**dadurch gekennzeichnet,**
**dass** die mindestens eine Messeinheit in ein Trennelement (10) integriert ist.

8. Vorrichtung (1) nach Anspruch 7,
**dadurch gekennzeichnet,**
**dass** mindestens ein Trennelement (10) mindestens ein Kontaktmittel umfasst; wobei das mindestens eine Trennelement (10) mit dem mindestens einen Kontaktmittel derart ausgebildet ist, dass es an einer vorgegebenen Position (220) an dem Trägerband (3) positionierbar ist; und
wobei das mindestens eine Trennelement (10) mit dem mindestens einen Kontaktmittel derart gestaltet ist, dass es an der vorgegebenen Position (220) an dem Trägerband (3) mithilfe des Kontaktmittels einen elektrischen Kontakt zwischen der mindestens einen zusätzlichen Datenleitung (40) oder den Leiterbahnen (5) und/oder Teilstücken (110, 111, 120, 121, 130, 131, 140, 141, 150, 151, 160, 161; 170, 171, 172, 180, 181, 182) der Leiterbahnen (5) und dem Temperatursensor (300), Drucksensor, Luftfeuchtigkeitssensor (300), Lichtsensor, Gassensor, Regensensor, Akustiksensor, Mikrofon, Ultraschallgerät oder der Messeinheit herstellen kann,
so dass der Temperatursensor (300), Drucksensor, Luftfeuchtigkeitssensor (300), Lichtsensor, Gassensor, Regensensor, Akustiksensor, das Mikrofon, das Ultraschallgerät oder die Messeinheit Daten, Messwerte und/oder Steuersignale mithilfe des Kontaktmittels über die mindestens eine zusätzliche Datenleitung (40) oder der Leiterbahnen (5) und/oder Teilstücken (110, 111, 120, 121, 130, 131, 140, 141, 150, 151, 160, 161; 170, 171, 172, 180, 181, 182) der Leiterbahnen (5) versenden oder empfangen kann.

9. Vorrichtung (1) nach einem der vorhergehenden Ansprüche,
**gekennzeichnet durch**
ein Anschlusselement (20; 70)
mit mindestens einem Kontaktelement (22),
wobei das mindestens eine Kontaktelement (22) eine Kontaktstelle (24; 74) aufweist, an der ein elektrischer Leiter (76) und/oder ein Kabel angebracht werden kann,
wobei das Anschlusselement (20; 70) derart gestaltet ist, dass es an einer vorgegebenen Position (220) an dem Trägerband (3) positionierbar ist;
wobei das mindestens eine Kontaktelement (22) des Anschlusselements (20; 70) derart gestaltet ist, dass es an der vorgegebenen Position (220) an dem Trägerband (3) mindestens eine vorgegebene Leiterbahn (5) von der Mehrzahl der Leiterbahnen (5) an dem Trägerband (3) oder ein Teilstück (110, 111, 120, 121, 130,131, 140, 141, 150, 151, 160, 161; 170, 171, 172, 180, 181, 182) einer der Leiterbahnen (5) elektrisch kontaktieren kann; und
wobei das mindestens eine Kontaktelement (22) des Anschlusselements (20; 70) derart gestaltet ist, dass es, nachdem es an der vorgegebenen Position (220) an dem Trägerband (3) mindestens eine vorgegebene Leiterbahn (5) von der Mehrzahl der Leiterbahnen (5) an dem Trägerband (3) oder ein Teilstück (110, 111, 120, 121, 130, 131, 140, 141, 150, 151, 160, 161; 170, 171, 172, 180, 181, 182) einer der Leiterbahnen (5) elektrisch kontaktiert hat und ein elektrischer Leiter (76) oder ein Kabel an der Kontaktstelle (24; 74) des Kontaktelements (22) angebracht wurde, die mindestens eine vorgegebene Leiterbahn (5) von der Mehrzahl der Leiterbahnen (5) an dem Trägerband (3) oder ein Teilstück (110, 111, 120, 121, 130, 131, 140, 141, 150, 151, 160, 161; 170, 171, 172, 180, 181, 182) einer der Leiterbahnen (5) mit dem elektrischen Leiter (76) und/oder Kabel elektrisch miteinander verbinden kann.

10. Vorrichtung (1) zum Detektieren und Lokalisieren von Feuchtigkeit auf einer feuchteführenden Fläche und/oder in einer feuchteführenden Schicht,
**gekennzeichnet durch**
eine erste Vorrichtung (1) nach einem der vorhergehenden Ansprüche;
eine zweite Vorrichtung (1) nach einem der vorhergehenden Ansprüche; und ein Verbindungselement;
wobei das Verbindungselement derart ausgebildet ist, dass mit ihm die erste und die zweite Vorrichtung (1) derart miteinander verbunden werden können, dass mindestens eine der Leiterbahnen (5) oder ein Teilstück (110, 111, 120, 121, 130, 131, 140, 141, 150, 151, 160, 161; 170, 171, 172, 180, 181, 182) einer der Leiterbahnen (5) und/oder mindestens eine zusätzliche Datenleitung (40) der ersten Vorrichtung (1) mit mindestens einer der Leiterbahnen (5) oder ein Teilstück (110, 111, 120, 121, 130, 131, 140, 141, 150, 151, 160, 161; 170, 171, 172, 180, 181, 182) einer der Leiterbahnen (5) und/oder der mindestens einen zusätzlichen Datenleitung (40) der zweiten Vorrichtung (1) elektrisch miteinander verbunden werden können.

11. Verfahren zum Detektieren und Lokalisieren von Feuchtigkeit auf einer feuchteführenden Fläche und/oder in einer feuchteführenden Schicht, wobei das Verfahren folgende Schritte umfasst:
eine Vorrichtung (1) nach einem der vorhergehenden Ansprüche wird bereitgestellt;
die Vorrichtung (1) wird auf der feuchteführenden Fläche und/oder in der feuchteführenden Schicht angebracht;
mindestens eine der Leiterbahnen (5) der Vorrichtung (1) wird mithilfe des mindestens einen Trennelements (10) an einer vorgegebenen Position (220) an dem Trägerband (3) durchtrennt;
wobei das Durchtrennen der mindestens einen Leiterbahn (5) ein Unterbrechen des elektrischen Kontakts zwischen den Teilstücken (110, 111, 120, 121, 130, 131, 140, 141, 150, 151, 160, 161; 170, 171, 172, 180, 181, 182) der mindestens einen Leiterbahn (5) darstellt, die sich auf gegenüberliegenden Seiten der vorgegebenen Position (220) befinden;
ein Schwellwert wird vorgegeben;
mithilfe mindestens einer der Leiterbahnen (5) oder eines Teilstücks (110, 111, 120, 121, 130, 131, 140, 141, 150, 151, 160, 161; 170, 171, 172, 180, 181, 182) einer der Leiterbahnen (5) der Vorrichtung (1) wird eine Messung einer elektrischen Eigenschaft durchgeführt;
der gemessene Wert der elektrischen Eigenschaft oder ein aus dem gemessenen Wert abgeleiteter Wert wird mit dem vorgegebenen Schwellwert verglichen;
über- oder unterschreitet der gemessene Wert oder der aus dem gemessenen Wert abgeleitete Wert den vorgegebenen Schwellwert, wird Feuchtigkeit detektiert; und
mithilfe der vorgegebenen Position (220) des mindestens einen Trennelements (10), der Information, welche der Leiterbahnen (5) an der vorgegebenen Position (220) durchtrennt wurden, und der zur Messung verwendeten mindestens einen der Leiterbahnen (5) oder des zur Messung verwendeten mindestens einen Teilstücks (110, 111, 120, 121, 130, 131, 140, 141, 150, 151, 160, 161; 170, 171, 172, 180, 181, 182) einer der Leiterbahnen (5) wird die detektierte Feuchtigkeit auf der feuchteführenden Fläche und/oder in der feuchteführenden Schicht lokalisiert
**dadurch gekennzeichnet,**
**dass** eine Position (220) am Trägerband (3) vorgegeben wird;
wobei mindestens eine der Leiterbahnen (5) an der vorgegebenen Position (220) durch Stanzen eines Loches oder Langloches durchtrennt wird.

12. Verfahren nach dem vorhergehenden Anspruch 11,
**dadurch gekennzeichnet,**
**dass** der vorgegebene Schwellwert mithilfe einer Messung einer elektrischen Eigenschaft einer Leiterbahn (5) oder eines Teilstücks (110, 111, 120, 121, 130, 131, 140, 141, 150, 151, 160, 161; 170, 171, 172, 180, 181, 182) einer der Leiterbahnen (5) abgeleitet wurde.

13. Verfahren nach einem der vorhergehenden Ansprüche 11 bis 12,
**dadurch gekennzeichnet,**
**dass** eine Reihe von zeitlich aufeinanderfolgenden Messwerten ausgewertet wird, um eine Leckage zu erkennen und zu orten.

## Claims

1. Device (1) for detecting and localising moisture on a moisture-bearing surface and/or in a moisture-bearing layer, comprising:
a plurality of electrically conductive conductor paths (5) arranged next to each other;
a carrier tape (3);
wherein the conductor paths (5) are fixed to the carrier tape (3);
wherein the carrier tape (3) is configured in such a way that it can be applied to the moisture-conducting surface and/or in the moisture-conducting layer;
**wherein the device comprises:**
at least one separating element (10),
wherein the at least one separating element (10) is configured in such a way that the at least one separating element (10) is positionable at a predetermined position (220) on the carrier tape (3);
wherein the at least one separating element (10) is configured such that it can sever at least one predetermined conductor path (5) from the plurality of conductor paths (5) on the carrier tape (3) at the predetermined position (220) on the carrier tape (3); and
wherein the severing of the at least one predetermined conductor path (5) represents an interruption of the electrical contact between the segments (110, 111, 120, 121, 130, 131, 140, 141, 150, 151, 160, 161; 170, 171, 172, 180, 181, 182) of the at least one predetermined conductive path (5) which are located on opposite sides of the predetermined position (220),
**characterised in that** the at least one separating element (10) comprises a blade or cutting edge (12);
wherein the blade or cutting edge (12) is configured such that it can sever at least one predetermined conductor path (5) from the plurality of conductor paths (5) on the carrier tape (3) at the predetermined position (220) on the carrier tape (3).

2. Device (1) according to one of the preceding claims,
**characterised in**
**that** the conductor paths (5) are protected by the carrier tape (3) and a moisture-permeable and/or water-permeable layer;
wherein each of the conductor paths (5) is enclosed on at least two opposite sides by the carrier tape (3) and/or the moisture-permeable and/or water-permeable layer.

3. Device (1) according to one of the preceding claims,
**characterised in**
**that** the at least one separating element (10) comprises a first and a second part, wherein the first part is configured such that it is positionable at the predetermined position (220) on a first side of the carrier tape (3);
wherein the second part is configured such that it is positionable at the predetermined position (220) on a second side of the carrier tape (3); and
wherein the first and second parts are configured in such a way that they are connected to one another in a form-fitting and/or force-fitting manner, and thus comprises and clamp the carrier tape (3) with the plurality of conductor paths (5).

4. Device (1) according to one of the preceding claims,
**characterised by**
at least one measuring unit;
wherein the at least one measuring unit is configured such that it can be connected at a predetermined position (220) on the carrier tape (3) to at least one of the conductor paths (5) or a part (110, 111, 120, 121, 130, 131, 140, 141, 150, 151, 160, 161; 170, 171, 172, 180, 181, 182) of at least one of the conductor paths (5); and
wherein the at least one measuring unit is configured such that, after it has been connected at the predetermined position (220) on the carrier tape (3) to the at least one of the conductor paths (5) or a part (110, 111, 120, 121, 130, 131, 140, 141, 150, 151, 160, 161; 170, 171, 172, 180, 181, 182) of at least one of the conductor paths (5), an electrical property can be measured with the aid of the at least one of the conductor paths (5) or the part (110, 111, 120, 121, 130, 131, 140, 141, 150, 151, 160, 161; 170, 171, 172, 180, 181, 182) of the at least one of the conductor paths (5).

5. Device (1) according to claim 4,
**characterised in that**
that the at least one measuring unit comprises a memory and means for data processing,
with which the at least one measuring unit can store and analyse the values of a measurement.

6. Device (1) according to claim one of the preceding claims 4 to 5,
**characterised in**
**that** the at least one measuring unit is configured in such a way that, after it has been connected to at least one of the conductor paths (5) or a part (110, 111, 120, 121, 130, 131, 140, 141, 150, 151, 160, 161; 170, 171, 172, 180, 181, 182) of one of the conductor paths (5), it couples an electromagnetic wave and/or a voltage or current pulse into the at least one of the conductor paths (5) or the at least one part (110, 111, 120, 121, 130, 131, 140, 141, 150, 151, 160, 161; 170, 171, 172, 180, 181, 182) of one of the conductor paths (5) and can thus perform a measurement of an electrical property using the at least one of the conductor paths (5) or the at least one part (110, 111, 120, 121, 130, 131, 140, 141, 150, 151, 160, 161; 170, 171, 172, 180, 181, 182) of one of the conductor paths (5);
and/or
**that** the at least one measuring unit is configured such that, after it has been connected to at least one of the conductor paths (5) or a part (110, 111, 120, 121, 130, 131, 140, 141, 150, 151, 160, 161; 170, 171, 172, 180, 181, 182) of one of the conductor paths (5), it can measure the capacitance of the at least one of the conductor paths (5) or of the at least one part (110, 111, 120, 121, 130, 131, 140, 141, 150, 151, 160, 161; 170, 171, 172, 180, 181, 182) of one of the conductor paths (5).

7. Device (1) according to any one of the preceding claims 4 to 6,
**characterised in**
**that** the at least one measuring unit is integrated into a separating element (10).

8. Device (1) according to claim 7,
**characterised in**
**that** at least one separating element (10) comprises at least one contact means;
wherein the at least one separating element (10) with the at least one contact means is configured such that it is positionable at a predetermined position (220) on the carrier tape (3); and
wherein the at least one separating element (10) with the at least one contact means is configured such that at the predetermined position (220) on the carrier tape (3) it establishes an electrical contact between the at least one additional data line (40) or the conductor paths (5) and/or parts (110, 111, 120, 121, 130, 131, 140, 141, 150, 151, 160, 161; 170, 171, 172, 180, 181, 182) of the conductor paths (5) and the temperature sensor (300), pressure sensor, humidity sensor (300), light sensor, gas sensor, rain sensor, acoustic sensor, microphone, ultrasonic device or the measuring unit,
so that the temperature sensor (300), pressure sensor, humidity sensor (300), light sensor, gas sensor, rain sensor, acoustic sensor, microphone, ultrasonic device or measuring unit can send or receive data, measured values and/or
control signals with the aid of the contact means via the at least one additional data line (40) or the conductor paths (5) and/or parts (110, 111, 120, 121, 130, 131, 140, 141, 150, 151, 160, 161; 170, 171, 172, 180, 181, 182) of the conductor paths (5).

9. Device (1) according to one of the preceding claims,
**characterised by**
a connecting element (20; 70)
with at least one contact element (22),
wherein the at least one contact element (22) has a contact point (24; 74) to which an electrical conductor (76) and/or a cable can be attached,
wherein the connecting element (20; 70) is configured in such a way that it can is positionable at a predetermined position (220) on the carrier tape (3); wherein the at least one contact element (22) of the connection element (20; 70) is configured such that it can electrically contact at least one predetermined conductor path (5) of the plurality of conductor paths (5) on the carrier tape (3) or a part (110, 111, 120, 121, 130, 131, 140, 141, 150, 151, 160, 161; 170, 171, 172, 180, 181, 182) of one of the conductor paths (5) at the predetermined position (220) on the carrier tape (3); and
wherein the at least one contact element (22) of the connection element (20; 70) is configured in such a way that, after it has made contact at the predetermined position (220) on the carrier tape (3) with at least one predetermined conductor path (5) of the plurality of conductor paths (5) on the carrier tape (3) or a part (110, 111, 120, 121, 130, 131, 140, 141, 150, 151, 160, 161; 170, 171, 172, 180, 181, 182) of one of the conductor paths (5) and an electrical conductor (76) or a cable has made electrical contact at the contact point (24; 74) of the contact element (22), which can electrically connect at least one predetermined conductor path (5) of the plurality of conductor paths (5) to the carrier tape (3) or a part (110, 111, 120, 121, 130, 131, 140, 141, 150, 151, 160, 161; 170, 171, 172, 180, 181, 182) of one of the conductor paths (5) to the electrical conductor (76) and/or cable.

10. Device (1) for detecting and localising moisture on a moisture-bearing surface and/or in a moisture-bearing layer,
**characterised by**
a first device (1) according to one of the preceding claims;
a second device (1) according to one of the preceding claims; and
a connecting element;
wherein the connecting element is configured such that the first and second devices (1) can be connected to one another in such a way that at least one of the conductor paths (5) or a part (110, 111, 120, 121, 130, 131, 140, 141, 150, 151, 160, 161; 170, 171, 172, 180, 181, 182) of one of the conductor paths (5) and/or at least one additional data line (40) of the first device (1) can be electrically connected to at least one of the conductor paths (5) or a part (110, 111, 120, 121, 130, 131, 140, 141, 150, 151, 160, 161; 170, 171, 172, 180, 181, 182) of one of the conductor paths (5) and/or the at least one additional data line (40) of the second device (1).

11. Method of detecting and localising moisture on a moisture-bearing surface and/or in a moisture-bearing layer, the method comprising the following steps:
a device (1) according to one of the preceding claims is provided;
the device (1) is attached to the moisture-carrying surface and/or in the moisture-carrying layer;
at least one of the conductor paths (5) of the device (1) is severed at a predetermined position (220) on the carrier tape (3) with the aid of the at least one separating element (10);
wherein the severing of the at least one conductor path (5) represents an interruption of the electrical contact between the parts (110, 111, 120, 121, 130, 131, 140, 141, 150, 151, 160, 161; 170, 171, 172, 180, 181, 182) of the at least one conductor path (5) which are located on opposite sides of the predetermined position (220);
a threshold value is predefined;
an electrical property is measured using at least one of the conductor paths (5) or a part (110, 111, 120, 121, 130, 131, 140, 141, 150, 151, 160, 161; 170, 171, 172, 180, 181, 182) of one of the conductor paths (5) of the device (1);
the measured value of the electrical property or a value derived from the measured value is compared with the predefined threshold value;
fi the measured value or the value derived from the measured value exceeds or falls below the predefined threshold value, moisture is detected; and
using the predetermined position (220) of the at least one separating element (10), the information as to which of the conductor paths (5) were severed at the predetermined position (220), and the at least one of the conductor paths (5) or the at least one part (110, 111, 120, 121, 130, 131, 140, 141, 150, 151, 160, 161) of one of the conductor paths (5) used for the measurement; 170, 171, 172, 180, 181, 182) of one of the conductor paths (5) used for the measurement, the detected moisture is localised on the moisture-carrying surface and/or in the moisture-carrying layer
**characterised in**
**that** a position (220) on the carrier tape (3) is predefined;
wherein at least one of the conductor paths (5) is severed at the predetermined position (220) by punching a hole or a slotted hole.

12. Method according to the preceding claim 11,
**characterised in**
**that** the predefined threshold value was derived with the aid of a measurement of an electrical property of a conductor path (5) or of a part (110, 111, 120, 121, 130, 131, 140, 141, 150, 151, 160, 161; 170, 171, 172, 180, 181, 182) of one of the conductor paths (5).

13. Method according to any one of the preceding claims 11 to 12,
**characterised in**
**that** a series of successive measured values is analysed in order to detect and locate a leakage.

## Revendications

1. Dispositif (1) pour détecter et localiser de l'humidité sur une surface conduisant de l'humidité et/ou dans une couche conduisant de l'humidité avec:
une pluralité de pistes conductrices d'électricité (5) disposées les unes à côté des autres ;
une bande de support (3);
où les pistes conductrices (5) sont fixées à la bande de support (3) ;
où la bande de support (3) est configurée de telle sorte qu'elle peut être appliquée sur la surface conduisant de l'humidité et/ou dans la couche conduisant de l'humidité;
**où le dispositif comprend**
au moins un élément de séparation (10),
où le au moins un élément de séparation (10) est configuré de telle sorte que le au moins un élément de séparation (10) est positionnable à une position prédéterminée (220) sur la bande de support (3);
où le au moins un élément de séparation (10) est configuré de telle sorte qu'il peut couper au moins une piste conductrice (5) prédéterminée de la pluralité de pistes conductrices (5) sur la bande de support (3) au niveau de la position prédéterminée (220) sur la bande de support (3); et
où la coupure de la au moins une piste conductrice prédéterminée (5) représente une interruption du contact électrique entre les parties (110, 111, 120, 121, 130, 131, 140, 141, 150, 151, 160, 161; 170, 171, 172, 180, 181, 182) de la au moins une piste conductrice prédéterminée (5) qui sont situées sur des côtés opposés de la position prédéterminée (220),
**caractérisé en ce**
**que** le au moins un élément de séparation (10) a une lame ou un tranchant (12); où la lame ou le tranchant (12) est configuré(e) de telle sorte qu'il/elle peut couper au moins une piste conductrice (5) prédéterminée parmi la pluralité de pistes conductrices (5) sur la bande de support (3) à la position prédéterminée (220) sur la bande de support (3).

2. Dispositif (1) selon l'une des revendications précédentes,
**caractérisé en ce**
**que** les pistes conductrices (5) sont protégées par la bande de support (3) et une couche perméable à l'humidité et/ou à l'eau ;
où chacune des pistes conductrices (5) est entourée sur au moins deux côtés opposés par la bande de support (3) et/ou la couche perméable à l'humidité et/ou à l'eau.

3. Dispositif (1) selon l'une des revendications précédentes,
**caractérisé en ce**
**que** le au moins un élément de séparation (10) comprend une première et une deuxième partie,
où la première partie est configurée de manière positionnable à la position prédéterminée (220) sur un premier côté de la bande de support (3);
où la deuxième partie est configurée de manière positionnable à la position prédéterminée (220) sur un deuxième côté de la bande de support (3); et où la première et la deuxième pièce sont conçues de telle sorte qu'elles sont reliées l'une à l'autre par complémentarité de forme et/ou de force, et ainsi peuvent entourer et serrer la bande de support (3) avec la pluralité de pistes conductrices (5).

4. Dispositif (1) selon l'une des revendications précédentes,
**caractérisé par**
au moins une unité de mesure ;
où l'au moins une unité de mesure est conçue de telle sorte qu'elle peut être raccordée, à une position prédéterminée (220) sur la bande de support (3), à au moins l'une des pistes conductrices (5) ou à un tronçon partiel (110, 111, 120, 121, 130, 131, 140, 141, 150, 151, 160, 161; 170, 171, 172, 180, 181, 182) d'au moins l'une des pistes conductrices (5) ; et
où l'au moins une unité de mesure est conçue de telle sorte qu'après avoir été reliée à l'au moins une des pistes conductrices (5) ou à un tronçon partiel (110, 111, 120, 121, 130, 131, 140, 141, 150, 151, 160, 161; 170, 171, 172, 180, 181, 182) d'au moins une des pistes conductrices (5), peut effectuer une mesure d'une propriété électrique à l'aide d'au moins une des pistes conductrices (5) ou du tronçon partiel (110, 111, 120, 121, 130, 131, 140, 141, 150, 151, 160, 161 ; 170, 171, 172, 180, 181, 182) d'au moins une des pistes conductrices (5).

5. Dispositif (1) selon la revendication 4,
**caractérisé en ce**
**que** la au moins une unité de mesure dispose d'une mémoire et de moyens de traitement des données,
avec laquelle la au moins une unité de mesure peut mémoriser et évaluer les valeurs d'une mesure.

6. Dispositif (1) selon l'une des revendications 4 à 5 précédentes,
**caractérisé en ce**
**que** la au moins une unité de mesure est configuré de telle sorte qu'après avoir été connectée à au moins une des pistes conductrices (5) ou à un tronçon partiel (110, 111, 120, 121, 130, 131, 140, 141, 150, 151, 160, 161; 170, 171, 172, 180, 181, 182) d'une des pistes conductrices (5), peut injecter une onde électromagnétique et/ou une impulsion de tension ou de courant dans la au moins une des pistes conductrices (5) ou le au moins un tronçon partiel (110, 111, 120, 121, 130, 131, 140, 141, 150, 151, 160, 161; 170, 171, 172, 180, 181, 182) de l'une des pistes conductrices (5) et peut ainsi effectuer une mesure d'une propriété électrique à l'aide de l'au moins une des pistes conductrices (5) ou de l'au moins un tronçon partiel (110, 111, 120, 121, 130, 131, 140, 141, 150, 151, 160, 161 ; 170, 171, 172, 180, 181, 182) de l'une des pistes conductrices (5) ; et/ou
**que** la au moins une unité de mesure est configuré de telle sorte qu'après avoir été connectée à au moins une des pistes conductrices (5) ou à un tronçon partiel (110, 111, 120, 121, 130, 131, 140, 141, 150, 151, 160, 161; 170, 171, 172, 180, 181, 182) d'une des pistes conductrices (5), peut mesurer la capacité d'au moins une des pistes conductrices (5) ou d'au moins un tronçon partiel (110, 111, 120, 121, 130, 131, 140, 141, 150, 151, 160, 161 ; 170, 171, 172, 180, 181, 182) d'une des pistes conductrices (5).

7. Dispositif (1) selon l'une des revendications 4 à 6 précédentes,
**caractérisé en ce**
**que** la au moins une unité de mesure est intégrée dans un élément de séparation (10).

8. Dispositif (1) selon la revendication 7,
**caractérisé en ce que**
**en ce qu'**au moins un élément de séparation (10) comprend au moins un moyen de contact;
où le au moins un élément de séparation (10) est formé avec ledit au moins un moyen de contact de telle sorte qu'il est positionnable à une position prédéterminée (220) sur la bande de support (3); et
où le au moins un élément de séparation (10) avec le au moins un moyen de contact est configuré de telle sorte qu'il établit un contact électrique entre la au moins une ligne de données supplémentaire (40) ou les pistes conductrices (5) et/ou des tronçons partiels (110, 111, 120, 121, 130, 131, 140, 141, 150, 151, 160, 161; 170, 171, 172, 180, 181, 182) des pistes conductrices (5) et le capteur de température (300), le capteur de pression, le capteur d'humidité (300), le capteur de lumière, le capteur de gaz, le capteur de pluie, le capteur acoustique, le microphone, l'appareil à ultrasons ou l'unité de mesure,
de sorte que le capteur de température (300), le capteur de pression, le capteur d'humidité (300), le capteur de lumière, le capteur de gaz, le capteur de pluie, le capteur acoustique, le microphone, l'appareil à ultrasons ou l'unité de mesure peuvent envoyer ou recevoir des données, des valeurs de mesure et/ou des signaux de commande à l'aide du moyen de contact par intermédiaire de l'au moins une ligne de données supplémentaire (40) ou des pistes conductrices (5) et/ou tronçons partiels (110, 111, 120, 121, 130, 131, 140, 141, 150, 151, 160, 161 ; 170, 171, 172, 180, 181, 182) des pistes conductrices (5).

9. Dispositif (1) selon l'une des revendications précédentes,
**caractérisé par**
un élément de connexion (20 ; 70)
avec au moins un élément de contact (22),
où le au moins un élément de contact (22) a une partie de contact (24 ; 74) sur lequel un conducteur électrique (76) et/ou un câble peut être monté,
où l'élément de connexion (20 ; 70) est configuré de telle sorte qu'il est positionnable dans une position prédéfinie (220) sur la bande de support (3) ;
où le au moins un élément de contact (22) de l'élément de connexion (20 ; 70) est configuré de telle sorte qu'il peut contacter électriquement, à la position prédéfinie (220) sur la bande de support (3), au moins une piste conductrice prédéfinie (5) de la pluralité de pistes conductrices (5) sur la bande de support (3) ou un tronçon partiel(110, 111, 120, 121, 130, 131, 140, 141, 150, 151, 160, 161; 170, 171, 172, 180, 181, 182) d'une des pistes conductrices (5) ; et
où l'au moins un élément de contact (22) de l'élément de connexion (20 ; 70) est configuré de telle sorte qu'il peut, après avoir été placé dans la position prédéfinie (220) sur la bande de support (3), il peut connecter au moins une piste conductrice prédéfinie (5) de la pluralité de pistes conductrices (5) sur la bande de support (3) ou un tronçon partiel (110, 111, 120, 121, 130, 131, 140, 141, 150, 151, 160, 161 ; 170, 171, 172, 180, 181, 182) de l'une des pistes conductrices (5) et un conducteur électrique (76) ou un câble a été mis en contact avec 1 partie de contact (24 ; 74) de l'élément de contact (22), relier électriquement au moins une piste conductrice (5) prédéterminée parmi la pluralité de pistes conductrices (5) sur la bande de support (3) ou un tronçon partiel (110, 111, 120, 121, 130, 131, 140, 141, 150, 151, 160, 161 ; 170, 171, 172, 180, 181, 182) de l'une des pistes conductrices (5) au conducteur électrique (76) et/ou au câble.

10. Dispositif (1) pour détecter et localiser de l'humidité sur une surface et/ou dans une couche conduisant de l'humidité,
**caractérisé par**
un premier dispositif (1) selon l'une des revendications précédentes ;
un deuxième dispositif (1) selon l'une des revendications précédentes ; et
un élément de connexion;
où l'élément de connexion est conçu de telle sorte qu'il permette de relier entre eux le premier et le deuxième dispositif (1) de telle sorte qu'au moins l'une des pistes conductrices (5) ou une partie (110, 111, 120, 121, 130, 131, 140, 141, 150, 151, 160, 161 ; 170, 171, 172, 180, 181, 182) de l'une des pistes conductrices (5) et/ou au moins une ligne de données supplémentaire (40) du premier dispositif (1) peuvent être reliées électriquement entre elles à au moins l'une des pistes conductrices (5) ou à un tronçon partiel (110, 111, 120, 121, 130, 131, 140, 141, 150, 151, 160, 161; 170, 171, 172, 180, 181, 182) de l'une des pistes conductrices (5) et/ou à la au moins une ligne de données supplémentaire (40) du deuxième dispositif (1).

11. Méthode de détection et de localisation de l'humidité sur une surface et/ou dans une couche conduisant de l'humidité, la méthode comprenant les étapes suivantes :
un dispositif (1) selon l'une des revendications précédentes est fourni ;
le dispositif (1) est placé sur la surface conduisant l'humidité et/ou dans la couche conduisant de l'humidité;
au moins une des pistes conductrices (5) du dispositif (1) est coupée à l'aide du au moins un élément de séparation (10) à une position prédéterminée (220) sur la bande de support (3);
où la coupure de la au moins une piste conductrice (5) représente une interruption du contact électrique entre les tronçons partiels (110, 111, 120, 121, 130, 131, 140, 141, 150, 151, 160, 161; 170, 171, 172, 180,181,182) de la au moins une piste conductrice (5) qui sont situées sur des côtés opposés de la position prédéterminée (220);
une valeur seuil est prédéfinie;
à l'aide d'au moins une des pistes conductrices (5) ou d'un tronçon partiel (110, 111, 120, 121, 130, 131, 140, 141, 150, 151, 160, 161; 170, 171, 172, 180, 181, 182) d'une des pistes conductrices (5) du dispositif (1), on effectue une mesure d'une propriété électrique ;
la valeur mesurée de la propriété électrique ou une valeur dérivée de la valeur mesurée est comparée à la valeur seuil prédéfinie;
si la valeur mesurée ou la valeur dérivée de la valeur mesurée est supérieure ou
inférieure à la valeur seuil prédéfinie, de l'humidité est détectée; et
à l'aide de la position prédéfinie (220) de l'au moins un élément de séparation (10), de l'information indiquant lesquelles des pistes conductrices (5) ont été coupées à la position prédéfinie (220) et de l'au moins une des pistes conductrices (5) utilisée pour la mesure ou de l'au moins un tronçon partiel (110, 111, 120, 121, 130, 131, 140, 141, 150, 151, 160, 161; 170, 171, 172, 180, 181, 182) d'une des pistes conductrices (5), l'humidité détectée est localisée sur la surface conduisant de l'humidité et/ou dans la couche conduisant de l'humidité.
**caractérisé en ce**
**qu'**une position (220) sur la bande de support (3) est prédéfinie ;
où au moins l'une des pistes conductrices (5) est coupée à la position prédéterminée (220) par poinçonnage d'un trou ou d'un trou oblong.

12. Procédé selon la revendication 11 précédente,
**caractérisé en ce**
**que** la valeur de seuil prédéfinie a été dérivée à l'aide d'une mesure d'une propriété électrique d'une piste conductrice (5) ou d'un tronçon partiel (110, 111, 120, 121, 130, 131, 140, 141, 150, 151, 160, 161; 170, 171, 172, 180, 181, 182) d'une des pistes conductrices (5).

13. Procédé selon l'une des revendications 11 à 12 précédentes,
**caractérisé en ce**
**qu'**une série de valeurs de mesure se succédant dans le temps est évaluée afin de détecter et de localiser une fuite.
